# EUROPEAN PATENT APPLICATION

(11) **EP 4 734 607 A1**
(43) Date of publication of application: **29.04.2026**
(21) Application number: 23948132.8
(22) Date of filing: 10.08.2023
(51) Int. Cl.: H04W 36/00

(54) **METHOD FOR WIRELESS COMMUNICATION, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN); SHI, Cong, Dongguan, Guangdong 523860 (CN)
(74) Representative: Mewburn Ellis LLP
(86) International application number: PCT/CN2023/112403
(87) International publication number: WO 2025/030562

(57) **Abstract**

A wireless communication method, a terminal device, and a network device are provided. The wireless communication method includes a terminal device acquires first information of a first cell. The first information is associated with system information (SI) and/or a synchronization signal block (SSB) of the first cell. The first information is acquired based on a first request message from the terminal device. Or, the first information is broadcasted/indicated by a second cell.

## Description

### TECHNICAL FIELD

This disclosure relates to the field of a communication technology, and more specifically, to a wireless communication method, a terminal device, and a network device.

### BACKGROUND

With the development of communication technologies, wireless communication systems (for example, new radio (NR) systems) have achieved significant improvements in key indicators such as a transmission rate, a transmission latency, and a connection scale, which can support more diverse business scenarios and applications. However, the continuous development of wireless communication systems has also brought new issues to operators, such as energy consumption.

Regarding energy consumption, related arts have proposed network energy saving (NES) projects. However, under an NES condition, how terminal devices operate in energy-saving cells is a problem to be solved.

### SUMMARY

A wireless communication method, a terminal device, and a network device are provided in the disclosure. The various aspects involved in the disclosure will be introduced below.

In a first aspect, a wireless communication method is provided. The method includes the following. A terminal device acquires first information of a first cell. The first information is associated with system information (SI) and/or a synchronization signal block (SSB) of the first cell. The first information is acquired based on a first request message from the terminal device. Or, the first information is broadcasted/indicated by a second cell.

In a second aspect, a wireless communication method is provided. The method includes the following. A terminal device sends a first message to a first cell. The first message is used to indicate one or more of: requesting the first cell to perform state transition, requesting the first cell to send at least one of an SSB, a master information block (MIB), a system information block (SIB), and a paging message, requesting the first cell to send part or all common signals, the terminal device has a requirement for data transmission, the terminal device has a requirement for network access, requesting the first cell to activate cell discontinuous transmission (DTX)/discontinuous reception (DRX), requesting the first cell to deactivate the cell DTX/DRX, requesting the first cell to modify the cell DTX/DRX, requesting the first cell to use a recommended cell DTX/DRX parameter, and recommending a cell DTX/DRX parameter to the first cell.

In a third aspect, a wireless communication method is provided. The method includes the following. A terminal device does not receive a positioning reference signal (PRS) of a first cell or receives the PRS of the first cell according to first configuration information when the first cell is in a first state. The first configuration information is used to indicate PRS configuration of one or more cells. The first state includes one or more of: an energy-saving state, an off state, a state of being in a cell DTX/DRX non-active time period, and a state of being in a time period of using an energy-saving technology.

In a fourth aspect, a wireless communication method is provided. The method includes the following. A terminal device receives first handover (HO) configuration sent by a first cell. The first handover configuration includes one or more handover conditions. The terminal device executes cell handover according to the first handover configuration.

In a fifth aspect, a wireless communication method is provided. The method includes the following. A first terminal device acquires third information of a first cell. The third information is used to determine one or more of: whether the first terminal device can access/select/reselect the first cell, whether a second terminal device can access/select/reselect the first cell, whether the first cell is barred, whether the first cell is a candidate cell, and whether the first cell is a reserved cell.

In a sixth aspect, a wireless communication method is provided. The method includes the following. A second terminal device acquires fourth information of a first cell. And/or, the second terminal device performs one or more of: acquiring third information of the first cell, determining that the third information indicates reservation or barring, and ignoring the third information. The fourth information is used to determine one or more of: whether the second terminal device can access/select/reselect the first cell, whether the first cell is barred, whether the first cell is a candidate cell, whether the first cell is a suitable cell or an acceptable cell, and whether the first cell is a reserved cell.

In a seventh aspect, a wireless communication method is provided. The method includes the following. A network device to which a first cell belongs receives a first request message sent by a terminal device. The first request message is used to acquire first information of the first cell. The first information is associated with SI and/or an SSB of the first cell. The first cell sends the first information to the terminal device.

In an eighth aspect, a wireless communication method is provided. The method includes the following. A network device to which a first cell belongs receives a first message sent by a terminal device. The first message is used to indicate one or more of: requesting the first cell to perform state transition, requesting the first cell to send at least one of an SSB, an MIB, an SIB, and a paging message, requesting the first cell to send part or all common signals, the terminal device has a requirement for data transmission, the terminal device has a requirement for network access, requesting the first cell to activate cell DTX/DRX, requesting the first cell to deactivate the cell DTX/DRX, requesting the first cell to modify the cell DTX/DRX, requesting the first cell to use a recommended cell DTX/DRX parameter, and recommending a cell DTX/DRX parameter to the first cell.

In a ninth aspect, a wireless communication method is provided. The method includes the following. A network device to which a first cell belongs does not send a PRS or sends the PRS according to first configuration information when the first cell is in a first state. The first configuration information is used to indicate PRS configuration of one or more cells. The first state includes one or more of: an energy-saving state, an off state, a state of being in a cell DTX/DRX non-active time period, and a state of being in a time period of using an energy-saving technology.

In a tenth aspect, a wireless communication method is provided. The method includes the following. A network device to which a first cell belongs activates or deactivates DTX/DRX configuration of the first cell by using a first signaling.

In an eleventh aspect, a wireless communication method is provided. The method includes the following. A network device to which a first cell belongs sends first handover configuration to a terminal device. The first handover configuration includes one or more handover conditions. The first handover configuration is used for cell handover by the terminal device.

In a twelfth aspect, a wireless communication method is provided. The method includes the following. A network device to which a first cell belongs sends third information of the first cell to a first terminal device. The third information is used to determine one or more of: whether the first terminal device can access/select/reselect the first cell, whether a second terminal device can access/select/reselect the first cell, whether the first cell is barred, whether the first cell is a candidate cell, and whether the first cell is a reserved cell.

In a thirteenth aspect, a wireless communication method is provided. The method includes the following. A network device to which a second cell belongs sends first information of a first cell to a terminal device. The first information is associated with SI and/or an SSB of the first cell.

In a fourteenth aspect, a terminal device is provided. The terminal device includes an acquisition module configured to acquire first information of a first cell. The first information is associated with SI and/or an SSB of the first cell. The first information is acquired based on a first request message from the terminal device. Or, the first information is broadcasted/indicated by a second cell.

In a fifteenth aspect, a terminal device is provided. The terminal device includes a sending module configured to send a first message to a first cell. The first message is used to indicate one or more of: requesting the first cell to perform state transition, requesting the first cell to send at least one of an SSB, an MIB, an SIB, and a paging message, requesting the first cell to send part or all common signals, the terminal device has a requirement for data transmission, the terminal device has a requirement for network access, requesting the first cell to activate cell DTX/DRX, requesting the first cell to deactivate the cell DTX/DRX, requesting the first cell to modify the cell DTX/DRX, requesting the first cell to use a recommended cell DTX/DRX parameter, and recommending a cell DTX/DRX parameter to the first cell.

In a sixteenth aspect, a terminal device is provided. The terminal device includes a receiving module configured to cause a terminal device to not receive a PRS of a first cell or to receive the PRS of the first cell according to first configuration information when the first cell is in a first state. The first configuration information is used to indicate PRS configuration of one or more cells. The first state includes one or more of: an energy-saving state, an off state, a state of being in a cell DTX/DRX non-active time period, and a state of being in a time period of using an energy-saving technology.

In a seventeenth aspect, a terminal device is provided. The terminal device includes a receiving module and a handover module. The receiving module is configured to receive first handover configuration sent by a first cell. The first handover configuration includes one or more handover conditions. The handover module is configured to execute cell handover according to the first handover configuration.

In an eighteenth aspect, a terminal device is provided. The terminal device is a first terminal device. The terminal device includes an acquisition module configured to acquire third information of a first cell. The third information is used to determine one or more of: whether the first terminal device can access/select/reselect the first cell, whether a second terminal device can access/select/reselect the first cell, whether the first cell is barred, whether the first cell is a candidate cell, and whether the first cell is a reserved cell.

In a nineteenth aspect, a terminal device is provided. The terminal device is a second terminal device. The terminal device includes an acquisition module and/or an execution module. The acquisition module is configured to acquire fourth information of a first cell. The execution module is configured to perform one or more of: acquiring third information of the first cell, determining that the third information indicates reservation or barring, and ignoring the third information. The fourth information is used to determine one or more of: whether the second terminal device can access/select/reselect the first cell, whether the first cell is barred, whether the first cell is a candidate cell, whether the first cell is a suitable or an acceptable cell, and whether the first cell is a reserved cell.

In a twentieth aspect, a network device is provided. The network device is a network device to which a first cell belongs. The network device includes a receiving module and a sending module. The receiving module is configured to receive a first request message sent by a terminal device. The first request message is used to acquire first information of the first cell. The first information is associated with SI and/or an SSB of the first cell. The sending module is configured to send the first information to the terminal device.

In a twenty-first aspect, a network device is provided. The network device is a network device to which a first cell belongs. The network device includes a receiving module configured to receive a first message sent by a terminal device. The first message is used to indicate one or more of: requesting the first cell to perform state transition, requesting the first cell to send at least one of an SSB, an MIB, an SIB, and a paging message, requesting the first cell to send part or all common signals, the terminal device has a requirement for data transmission, the terminal device has a requirement for network access, requesting the first cell to activate cell DTX/DRX, requesting the first cell to deactivate the cell DTX/DRX, requesting the first cell to modify the cell DTX/DRX, requesting the first cell to use a recommended cell DTX/DRX parameter, and recommending a cell DTX/DRX parameter to the first cell.

In a twenty-second aspect, a network device is provided. The network device is a network device corresponding to a first cell. The network device includes a sending module configured to not to send a PRS or send the PRS according to a first configuration information when the first cell is in a first state. The first configuration information is used to indicate a PRS configuration of one or more cells. The first state includes one or more of: an energy-saving state, an off state, a state of being in a cell DTX/DRX non-active time period, and a state of being in a time period of using an energy-saving technology.

In a twenty-third aspect, a network device is provided. The network device is a network device to which a first cell belongs. The network device includes an activation or deactivation module configured to activate or deactivate DTX/DRX configuration of the first cell by using a first signaling.

In a twenty-fourth aspect, a network device is provided. The network device is a network device to which a first cell belongs. The network device includes a sending module configured to send first handover configuration to a terminal device. The first handover configuration includes one or more handover conditions, and the first handover configuration is used for cell handover by the terminal device.

In a twenty-fifth aspect, a network device is provided. The network device is a network device to which a first cell belongs. The network device includes a sending module configured to send third information of the first cell to a first terminal device. The third information is used to determine one or more of: whether the first terminal device can access/select/reselect the first cell, whether a second terminal device can access/select/reselect the first cell, whether the first cell is barred, whether the first cell is a candidate cell, and whether the first cell is a reserved cell.

In a twenty-sixth aspect, a network device is provided. The network device is a network device to which a second cell belongs. The network device includes a sending module configured to send first information of a first cell to a terminal device. The first information is associated with SI and/or an SSB of the first cell.

In a twenty-seventh aspect, a terminal device is provided. The terminal device includes a processor, a memory, and a communication interface. The memory is configured to store one or more computer programs. The processor is configured to invoke the computer programs stored in the memory, to cause the terminal device to perform some or all of the steps in method of any one of the first to sixth aspects.

In a twenty-eighth aspect, a network device is provided. The network device includes a processor, a memory, and a communication interface. The memory is configured to store one or more computer programs. The processor is configured to invoke the computer programs stored in the memory, to cause the terminal device to perform some or all of the steps in method of any one of the seventh to thirteenth aspects.

In a twenty-ninth aspect, a communication system is provided in embodiments of the disclosure. The communication system includes the aforementioned terminal device and/or network device. In another possible design, the system may also include other devices that interact with the terminal device or the network device in solutions provided in embodiments of the disclosure.

In a thirtieth aspect, a computer-readable storage medium is provided in embodiments of the disclosure. The computer-readable storage medium is configured to store computer programs. The computer programs are operable with a computer to perform some or all of the steps in method of each of the above aspects.

In a thirty-first aspect, a computer program product is provided in embodiments of the disclosure. The computer program product includes a non-transitory computer-readable storage medium storing computer programs. The computer programs are operable with a computer to perform some or all of the steps in methods of the above various aspects. In some implementations, the computer program product may be a software installation package.

In a thirty-second aspect, a chip is provided in embodiments of the disclosure. The chip includes a memory and a processor. The processor can invoke and execute computer programs in the memory to implement some or all of the steps described in methods of the above aspects.

In embodiments of the disclosure, the terminal device can request (actively acquire) or acquire the first information of the first cell (such as an energy-saving cell, a SIB-less cell, etc.) from the second cell, which helps the terminal device to camp on/access/select/reselect the first cell according to the first information, and is conducive to the operation of the terminal device in the first cell.

### BRIEF DESCRIPTION OF THE DRAWINGS

FIG. 1 is a schematic system architectural diagram of a wireless communication system to which embodiments of the disclosure are applicable.
FIG. 2 is a schematic flow diagram of a conditional handover (CHO) procedure.
FIG. 3 is a schematic flow diagram of a wireless communication method provided in an embodiment of the disclosure.
FIG. 4 is a schematic flow diagram of a wireless communication method provided in another embodiment of the disclosure.
FIG. 5 is a schematic flow diagram of a wireless communication method provided in yet another embodiment of the disclosure.
FIG. 6 is a schematic flow diagram of a wireless communication method provided in yet another embodiment of the disclosure.
FIG. 7 is a schematic flow diagram of a wireless communication method provided in yet another embodiment of the disclosure.
FIG. 8 is a schematic flow diagram of a wireless communication method provided in yet another embodiment of the disclosure.
FIG. 9 is a schematic structural diagram of a terminal device provided in an embodiment of the disclosure.
FIG. 10 is a schematic structural diagram of a terminal device provided in another embodiment of the disclosure.
FIG. 11 is a schematic structural diagram of a terminal device provided in yet another embodiment of the disclosure.
FIG. 12 is a schematic structural diagram of a terminal device provided in yet another embodiment of the disclosure.
FIG. 13 is a schematic structural diagram of a terminal device provided in yet another embodiment of the disclosure.
FIG. 14 is a schematic structural diagram of a terminal device provided in yet another embodiment of the disclosure.
FIG. 15 is a schematic structural diagram of a network device provided in an embodiment of the disclosure.
FIG. 16 is a schematic structural diagram of a network device provided in another embodiment of the disclosure.
FIG. 17 is a schematic structural diagram of a network device provided in yet another embodiment of the disclosure.
FIG. 18 is a schematic structural diagram of a network device provided in yet another embodiment of the disclosure.
FIG. 19 is a schematic structural diagram of a network device provided in yet another embodiment of the disclosure.
FIG. 20 is a schematic structural diagram of a network device provided in yet another embodiment of the disclosure.
FIG. 21 is a schematic structural diagram of a network device provided in yet another embodiment of the disclosure.
FIG. 22 is a schematic structural diagram of a communication apparatus provided in embodiments of the disclosure.

### DETAILED DESCRIPTION

### Communication System Architecture

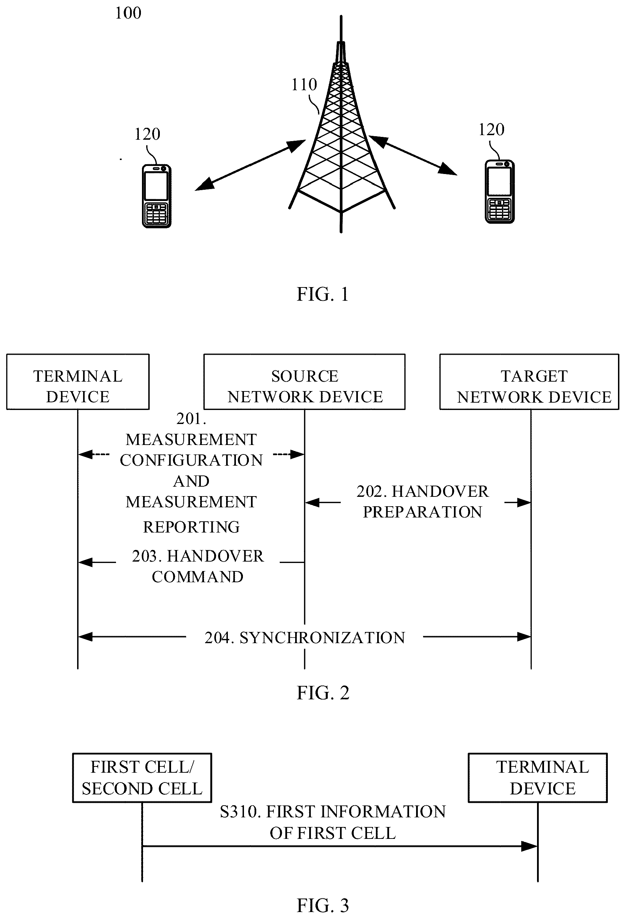

FIG. 1 is a schematic system architectural diagram of a wireless communication system 100 to which embodiments of the disclosure are applicable. The wireless communication system 100 may include a network device 110 and a terminal device 120. The network device 110 may be a device that can communicate with the terminal device 120. The network device 110 can provide a communication coverage for a specific geographical area and communicate with the terminal device 120 in the coverage area.

FIG. 1 exemplarily illustrates one network device and two terminal devices. Optionally, the wireless communication system 100 may include multiple network devices, and there can be other numbers of terminal devices in a coverage area of each of the network devices. Embodiments of the disclosure are not limited in this regard.

Optionally, the wireless communication system 100 may further include other network entities such as a network controller, a mobility management entity, etc., and embodiments of the disclosure are not limited in this regard.

It can be understood that, the technical solutions of the disclosure are applicable to various communication systems, such as the fifth generation (5G) system or a new radio (NR) system, a long term evolution (LTE) system, an LTE frequency division duplex (FDD) system, an LTE time division duplex (LTE-TDD) system, etc. The technical solutions of the disclosure are also applicable to a future communication system, such as the sixth generation (6G) mobile communication system, a satellite communication system, etc.

A terminal device in embodiments of the disclosure may be referred to as a user equipment (UE), an access terminal, a subscriber unit, a subscriber station, a mobile station (MS), a mobile terminal (MT), a remote station, a remote terminal, a mobile device, a user terminal, a terminal device, a wireless communication device, a user agent, or a user device. The terminal device in embodiments of the disclosure may also be a device providing voice and/or data connectivity to users and may be used to connect people, objects, and machines, such as a handheld device with wireless connection functions, an in-vehicle device, etc. The terminal device in embodiments of the disclosure may be a mobile phone, a pad, a laptop computer, a personal digital assistant (PDA), a mobile internet device (MID), a wearable device, a virtual reality (VR) terminal device, an augmented reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the UE can act as a base station. For example, the UE can serve as a scheduling entity providing sidelink signals between UEs in vehicle-to-everything (V2X) or device-to-device (D2D), etc. For instance, a cellular phone and a vehicle communicate with each other using sidelink signals. The cellular phone and a smart home device communicate without relaying communication signals through a base station.

The network device in embodiments of the disclosure may be a device used for communicating with the terminal device, and may also be referred to as an access network (AN) device or a radio access network (RAN) device, such as the base station. The network device in embodiments of the disclosure may refer to a RAN node (or device) for access of the terminal device to a radio network. The base station can be broadly covered by or replaced with various names as follows, such as: a Node B (NB), an evolved Node B (eNB), a next generation NodeB (gNB), a relay station, an access point (AP), a transmitting and receiving point (TRP), a transmitting point (TP), a master eNodeB (MeNB), a secondary eNodeB (SeNB), a multistandard radio (MSR) node, a home base station, a network controller, an access node, a radio node, an access point (AP), a transmitting node, a transmitting and receiving node, a base band unit (BBU), a remote radio unit (RRU), an active antenna unit (AAU), a remote radio head (RRH), a central unit (CU), a distributed unit (DU), a location node, etc. The base station may be a macro base station, a micro base station, a relay node, a donor node, or the like, or a combination thereof. The base station may also refer to a communication module, a modem, or a chip used in the aforementioned device or apparatus. The base station may be a mobile switching center, a device performing functions of the base station in D2D communication, V2X communication, and machine-to-machine (M2M) communication, a network-side device in a 6G network, a device performing functions of the base station in the future communication system, etc. The base station can support networks with the same or different access technologies. Specific technologies and specific device forms adopted by the network device are not limited in embodiments of the disclosure.

The base station can be either fixed or mobile. For example, a helicopter or a drone can be configured as a mobile base station, and one or more cells can move according to a position of the mobile base station. In other examples, the helicopter or the drone can be configured as a device communicating with another base station.

In some deployments, the network device in embodiments of the disclosure may refer to the CU or the DU, or, the network device includes the CU and the DU. The gNB may also include the AAU.

The network device and the terminal device can be deployed on land, which includes indoor or outdoor, handheld, or in-vehicle. The terminal device can also be deployed on water. The terminal device can also be deployed in an airplane, a balloon, a satellite in the air. The scenarios where the network device and the terminal device are located are not limited in embodiments of the disclosure.

It can be understood that all or some of the functions of the communication device in the disclosure can also be implemented through a software function running on a hardware, or through a virtualized function instantiated on a platform (such as a cloud platform).

### 5G Application Scenario

Currently, with pursuit of people for speed, low latency, high-speed mobility and energy efficiency, and diversity and complexity of services in future life, the 3rd generation partnership project (3GPP) international standard organization began to research and develop 5G. 5G is mainly applied to: enhanced mobile broadband (eMBB), ultra-reliable low-latency communication (URLLC), and massive machine-type communication (mMTC).

On the one hand, the eMBB still intends to enable users to acquire multimedia content, services, and data and grows rapidly in demands. On the other hand, since the eMBB may be deployed in different scenarios, such as indoor, urban, rural, etc., capabilities and requirements of the eMBB vary widely. Therefore, the eMBB cannot be generalized and it is necessary to analyze in detail in combination with specific deployment scenarios.

A key feature of the URLLC is low latency. In such scenario, a connection latency can be 1 millisecond or less, and can support highly reliable connections under high-speed movement. For example, when moving at a speed of 500 kilometers per hour, a reliability can be 99.999%. The URLLC is typically applied to industrial automation, power automation, telemedicine operations, and traffic safety assurance, etc.

The mMTC is typically characterized by high connection density, small amount of data, delay-insensitive services, low cost of modules, and long service life, etc. Based on such characteristics, the mMTC may include one or more of the following types of communication: communication in industrial wireless sensor network, communication in a video surveillance scenario, and communication with a wearable device.

### Radio Resource Control (RRC) State

In certain scenarios, an NR can also be deployed alone. To reduce air interface signaling, achieve fast wireless connection recovery, and achieve fast data service recovery, the 5G defines a new RRC state, namely an RRC_INACTIVE state. This state is different from an RRC_IDLE state and an RRC_CONNECTED state.
(1) RRC_IDLE state ("idle state" for short): mobility is based on a cell selection and a cell reselection of a terminal device. Paging is initiated by a core network (CN). A paging area is configured by the CN. A network-device side has no terminal device access stratum (AS) context or RRC connection.
(2) RRC_CONNECTED state ("connected state" for short): there is an RRC connection. Both a network device and the terminal device have the terminal device AS context. The network-device side knows that a location of the terminal device is cell level-based. Mobility is controlled by the network-device side. Unicast data can be transferred between the terminal device and the network device.
(3) RRC_INACTIVE state ("inactive state" for short): mobility is based on the cell selection and the cell reselection of the terminal device. There is a connection between the CN and an RAN. The terminal device AS context exists on an anchor network device. Paging is triggered by the RAN, a RAN-based paging area is managed by the RAN, and the network-device side knows that the location of the terminal device is based on a RAN-based paging area level.

### Conditional Handover (CHO)

To address the issues of frequent handovers and a high handover failure rate in a high-speed mobile scenario and a high-frequency deployment scenario, in Rel-16, the 3GPP introduced a condition-triggered handover procedure, known as conditional handover (CHO), for LTE and NR systems. A basic principle of CHO is that a network pre-configures a target cell for a terminal device, and a condition for triggering the terminal device to execute a handover (also referred to as a handover condition) is included in a handover command (HO command). The terminal device measures or evaluates the target cell according to a condition configured by the network side. When the target cell meets the handover condition, the terminal device executes handover to the target cell (i.e., triggering a random access procedure and sending a handover completion message) in accordance with the pre-configured handover command. In this way, problems of being too late or unable to send a measurement report or receive the handover command due to entering an area with a poor coverage during high-speed movement can be avoided.

For CHO, the network can configure multiple candidate target cells in the handover command, and configure a CHO execution condition respectively for each candidate target cell. The CHO execution condition for each candidate target cell can include one or more triggering events. In Rel-16, the events available for CHO include Event A3 and Event A5. In Rel-17 NTN, the events available for CHO can further include Event A4. The terminal device can determine which target cell to access based on the configured CHO execution condition.

A measurement event supported in an NR is briefly introduced below. Currently, the measurement event supported in the NR may include the following types.

Event A1: the signal quality of a serving cell is greater than a threshold.

Event A2: the signal quality of a serving cell is poorer than a threshold.

Event A3: the signal quality of a neighbor cell is greater than that of a special cell (SpCell) by a threshold.

Event A4: the signal quality of a neighbor cell is greater than a threshold.

Event A5: the signal quality of a SpCell is lower than threshold 1, and the signal quality of a neighbor cell is greater than threshold 2.

Event A6: the signal quality of a neighbor cell is greater than that of a secondary cell (SCell) by a threshold.

Event B1: the signal quality of a neighbor cell with a different technology is greater than the threshold.

Event B2: the signal quality of a primary cell (PCell) is lower than threshold 1, and the signal quality of a neighbor cell with a different technology is greater than threshold 2.

To facilitate understanding, a CHO procedure is introduced below with reference to FIG. 2. It can be understood that a source network device (or a source cell) mentioned below may refer to a network device (or a cell) serving the terminal device before handover, and a target network device (or a target cell) may refer to a network device (or a cell) serving the terminal device after handover.

As illustrated in FIG. 2, in step 201, the source network device sends measurement configuration information to the terminal device, and the terminal device performs measurement reporting based on measurement configuration. In step 202, handover preparation information is exchanged between the source network device and the target network device. In step 203, the source network device sends a CHO command to the terminal device, and the CHO command may carry a handover condition for the cell. In step 204, when the CHO command is met, the terminal device achieves synchronization with the target network device.

### Network Energy Saving (NES)

With the development of communication technologies, wireless communication systems (for example, NR systems) have achieved significant improvements in key indicators such as a transmission rate, a transmission latency, and a connection scale, which can support more diverse business scenarios and applications. However, the continuous development of the wireless communication system has also brought new issues to operators, such as energy consumption.

Currently, the energy consumption has become an important part of an operating cost for the operator. According to a report by global system for mobile communications association (GSMA), an energy cost of a mobile network accounts for approximately 23% of a total operator cost. Most of the energy consumption comes from a RAN, especially from an AAU, while a data center and fiber optic transmission account for only a small share.

Energy consumption of the mobile network can be classified into two categories: dynamic energy consumption and static energy consumption. The dynamic energy consumption can refer to, for example, consumption during data transmission/reception. The static energy consumption can refer to, for example, consumption incurred to maintain the operation of necessary radio access device, even when there is no continuous data transmission/reception.

The GSMA report only evaluated a potential benefit of the network energy consumption and did not assess the impact of NES (network energy saving) on a balance between the network and user performance. The applicant regards that for NES projects, NES should not have a significant impact on some key indicators of the terminal device. For example, NES should not have a significant impact on a spectrum efficiency, a capacity, a UE perceived throughput (UPT), latency, a power consumption, complexity, handover performance, a call drop rate, initial access performance, etc., of the terminal device (may also be referred to as "UE" below).

Regarding energy consumption, related arts (such as NR R18) have proposed an NES project, in which some possible research directions have been put forward.

Exemplarily, in meeting RAN2#119, a solution group for NES may include, for instance, the following.
1. Adaptation of MIB/SSB/SIB;
   - partial/simplified SSB.
2. Increase of SSB/SIB periodicity.
3. On-demand SSB/SIB1 (for further study (FFS) if there are enhancements for other SIBs);
   - FFS for on-demand MIB.
4. Receiving SSB/SIB on one carrier/cell and performing access to another carrier/cell.
5. Handover/Fast PCell change for NES;
   - CHO or new configuration, and/or, a group HO.
6. Resource adaptation (frequency and time domain);
   - including following resources and periodicities: a physical random access channel (PRACH), a sounding reference signal (SRS), a physical uplink shared channel (PUSCH), a physical uplink control channel (PUCCH);
   - cell discontinuous transmitting (DTX)/discontinuous reception (DRX);
   - measurement;
   - reference signal type and configuration of reference signal pattern for connected mode;
   - bandwidth part (BWP) adaptation.
7. Any cell activation/re-activation or UE wake up request signal (connected/idle).
8. Paging enhancements (includes paging-less solutions).
9. Cell selection/reselection (ie. cell prioritization also including a legacy UE).

Exemplarily, in meeting RAN2#119, possible research directions for NES may include the following.
1. Study group configuration and signaling for transitions for different solutions.
2. Identify/capture RAN2 impact to legacy for different solutions.
3. Awareness of the NES states at a UE side for the different solutions.
4. Aim to minimize downlink (DL) signaling for NES.
5. Consider UE complexity and the energy consumption.
6. UE assistance information for the specific network energy technique, it's benefits and impact to UE/NW.

To achieve NES, as a feasible implementation, related arts have proposed an energy-saving cell, or a cell with an energy-saving working state, such as an SSB-less cell, a SIB-less cell, etc. In some embodiments, the energy-saving cell can achieve energy saving by reducing common signal transmission, or can achieve energy saving through the DTX and/or DRX. To facilitate understanding, the SSB-less cell and the SIB-less cell is briefly introduced below.

### SSB-less Cell

The SSB-less cell can refer to a cell that does not send (or, does not broadcast, does not indicate, etc.) part or all of SSBs, or a cell that does not send part or all other common signals. In some embodiments, the fact that the SSB-less cell does not send part or all of the SSBs can be understood as that the SSB-less cell does not actively send part or all of the SSBs. In other words, a legacy cell normally sends or broadcasts information such as the SSB to enable a terminal device to perform uplink synchronization or cell access, etc. However, the SSB-less cell does not actively send or broadcast information such as the SSB under a normal circumstance.

In some embodiments, the SSB-less cell may be an SCell. That is to say, in some embodiments, certain SCells may not send part or all of the SSBs. The SCell may be an intra-band cell with an SpCell or other SCells (that is, the SSB-less cell may be in the same frequency band as the SpCell or other SCells).

As a feasible implementation, when the terminal device needs to synchronize with the SSB-less cell (or, an SSB-less SCell), the terminal device can synchronize with the SSB-less cell through the SpCell or other SCells. For example, the terminal device can acquire an SSB of the SSB-less cell from the SpCell or other SCells and synchronize with the SSB-less cell based on the acquired SSB.

In some embodiments, whether a cell transmits or broadcasts the SSB can be indicated by a field (or a parameter) of *absoluteFrequencySSB,* which is introduced below.

Frequency of the SSB is to be used for a serving cell. SSB related parameters (e.g. an SSB index) provided for the serving cell refer to the SSB frequency unless mentioned otherwise. A cell-defining SSB (CD-SSB) of a PCell is always on a sync raster. Frequencies can be considered to be on the sync raster if they are also identifiable with a global synchronization channel number (GSCN) value (see TS 38.101-1 [15]). If the field is absent, the SSB related parameter can be absent. For example, *ssb-PositionsInBurst, ssb-periodicityServingCell* and *subcarrierSpacing* in *ServingCellConfigCommon* information element (IE) can be absent. If the field is absent, the UE obtains timing reference from a suitable SpCell or the SCell as described in clause 4.1 in TS 38.213 [13]. This is only supported in case the Cell for which the UE obtains the timing reference is in the same frequency band as the cell (i.e. the SpCell or the SCell) from which the UE obtains the timing reference.

For a cell supporting a reduced capability (RedCap), the field corresponds to the CD-SSB.

In R18, NES projects are considering to extend an intra-band approach to an inter-band scenario, that is, the SSB-less SCell can be an inter-band cell together with the PCell or other SCells.

In future, the SSB-less cell can serve as the SCell or an independently-working cell.

### SIB-less Cell

The SIB-less cell can refer to a cell that does not send (or, does not broadcast, does not indicate, etc.) part or all of SIBs, or a cell that does not send part or all SI. In some embodiments, the fact that the SIB-less cell does not send part or all of the SIBs can be understood as that the SIB-less cell does not actively send part or all of the SIBs. In other words, a legacy cell normally sends or broadcasts information such as the SIB to enable a terminal device to perform cell camping on, cell access, cell selection/reselection, etc. However, the SIB-less cell does not actively send or broadcast information such as the SIB under a normal circumstance or in an energy-saving situation.

In some embodiments, the SIB-less cell can be understood as a special type of an SSB-less cell. That is to say, the SIB-less cell is also the SSB-less cell. The SIB-less cell can send an SSB but does not send part or all of the SIBs. Of course, in some embodiments, the SIB-less cell can also refer to a cell that neither sends the SIB nor the SSB, which is not limited in embodiments of the disclosure.

The SIB or the SI not sent by the SIB-less cell are not limited in embodiments of the disclosure. Exemplarily, the SIB-less cell may not send SIB1 but may send other SIBs except SIB1. Or, the SIB-less cell may not send all SIBs (including SIB1, SIB2, SIB3, etc.). Or, the SIB-less cell may not send an MIB or part or all (or at least part) of information contained in the MIB, but send other SIBs or SIs. Or, the SIB-less cell may not send part or all of information contained in the SIBs (for example, not sending a part of information in SIB1, or not sending a part of information in SIB1 and other SIBs, or not sending part or all of information in MIB and SIB1, etc.).

In some embodiments, the SIB-less cell may be an SCell, for example, a non-independently-operating SCell. However, the embodiments of the disclosure are not limited in this regard. In some embodiments, the SIB-less cell may be a PCell or a primary secondary cell (PSCell). In other embodiments, the SIB-less cell may be an independently-operating cell.

It can be seen that introducing the aforementioned energy-saving cells (such as the SSB-less cell, the SIB-less cell, etc.) can reduce energy consumption. However, how terminal devices operate in energy-saving cells is a problem to be solved.

Regarding the aforementioned issue, a wireless communication method, a terminal device, and a network device are provided in embodiments of the disclosure. The technical solutions in embodiments of the disclosure specify how a terminal device operates in an energy-saving cell within an NES scenario. Embodiments of the disclosure are introduced in detail below.

To facilitate understanding, some relevant concepts involved in embodiments of the disclosure are first introduced below.

Energy-saving cell/energy-saving base station: the energy-saving cell/energy-saving base station can refer to a cell/base station with energy consumption lower than an current energy consumption state, or a cell/base station that supports or can enter or be in a first state, or a cell/base station that does not provide coverage and/or capacity, or a cell or base station that serves as a SCell or a base station (such as the SCell/PSCell or corresponding base station), or a cell serves as the SSB-less cell or the SIB-less cell. To reduce the network energy consumption, energy consumption of some devices in the network (such as the base station, the cell, the terminal device, etc.) in the first state is lower than that in a normal transmission state.

The first state is not limited in embodiments of the disclosure as long as the energy consumption of the device in the first state is less than that in the normal transmission state. Exemplarily, the first state may include one or more of: an abnormal transmission state, a state in which part of information is not transmitted, an off state, an energy-saving state, an NES state, a low-load state, a DRX state, a DTX state, an on-off transition state, a state where all or part of common channels or channels are not transmitted, a state where data is not transmitted, a state where terminal device-dedicated information is not transmitted, etc.

In some embodiments, the first state being the DRX state may refer to a DRX on/off state. In some embodiments, the first state being the DTX state may refer to a DTX on/off state.

In other embodiments, the first state being the DRX state may refer to a DRX off state. In some embodiments, the first state being the DTX state may refer to a DTX off state.

In other embodiments, the first state may be a DRX/DTX state, that is, both DRX and DTX are configured. Optionally, a configuration parameter of DTX and a configuration parameter of DRX may be the same or different.

In some embodiments, the first state can further be extended to: a state in which information about a non-anchor cell/non-anchor base station is acquired from an anchor cell/anchor base station, or a state in which information about the energy-saving cell/energy-saving base station (such as first information, the SSB, the SIB, the SI, etc. mentioned below) is acquired from the anchor cell/anchor base station/SCell/secondary base station.

By way of example, the cell/base station supports or can enter the first state, in some embodiments, the first state may refer to an abnormal transmission state or a state in which part of information is not transmitted of the cell/base station. Abnormal transmission or part of information being not transmitted by the cell/base station may mean that not all data/signals/channels within the cell/base station can be transmitted normally. It may be transmitted based on a request from the terminal device or may require other cells/base stations to assist in transmission, etc. By way of example, the cell/base station does not transmit the SSB and/or SIB, the cell/base station may transmit the SSB and/or the SIB based on the request from the terminal device, or may require other cells/base stations to assist in SSB transmission and/or SIB transmission, etc. In some embodiments, the first state may mean that the cell/base station can be turned off or partially turned off. In some embodiments, turning off or partially turning off the cell/base station may refer to turning off all or a part of radio frequencies of the cell/base station.

Anchor cell/anchor base station: the anchor cell/anchor base station may refer to a cell/base station that can assist the energy-saving cell/energy-saving base station in sending messages or can assist the terminal device in accessing the energy-saving cell/energy-saving base station. For example, the anchor cell/anchor base station may refer to a cell/base station that can assist the terminal device in acquiring information of the energy-saving cell/energy-saving base station (such as the first information, the SSB, the SIB, the SI, etc., mentioned below). Or, the anchor cell/anchor base station may refer to a cell/base station that can carry the information of the energy-saving cell/energy-saving base station, etc. In some embodiments, the anchor cell may refer to, for example, a cell not being in the first state. In some embodiments, the anchor cell/anchor base station may refer to, for example, a cell that does not support or does not need energy saving, or a cell/base station that provides coverage.

However, the embodiments of the disclosure are not limited in this regard. In some embodiments, the anchor cell can further have other capabilities. For example, the anchor cell may refer to a master cell, which is responsible for controlling and managing multiple established data connections to ensure speed and correctness of data transmission. The anchor cell may be a cell responsible for establishing and maintaining RRC connection.

How the terminal device operates in the energy-saving cell in the NES state is introduced below with reference to Embodiment 1 to Embodiment 6.

It can be noted that the embodiments below (for example, involved interaction processes) are described from a perspective of an interaction between the terminal device and the cell/base station. The terminal device and the base station may respectively be, for example, the terminal device 120 and the network device (base station) 110 illustrated in FIG. 1, and is not repeated below for the sake of brevity.

It can be noted that each of the embodiments described below can be used alone or in any combination with other embodiments, and the embodiments of the disclosure are not limited in this regard. For example, Embodiment 1 can be used alone, or can be used in combination with Embodiment 2 or Embodiment 3, or can be used in combination with Embodiment 2 and Embodiment 4. Alternatively, Embodiment 2 can be used alone, or can be used in combination with Embodiment 3, or can be used in combination with Embodiment 4 and Embodiment 5, etc. The embodiments below can further be used in combinations not listed herein, which is not repeated herein for the sake of brevity.

It can be noted that Embodiment 1 to Embodiment 6 below are all intended for solving issues related to how the terminal device operates in the energy-saving cell/energy-saving base station.

Each of the embodiments is respectively introduced below.

### Embodiment 1

Embodiment 1 relates to a method about how a terminal device acquires first information of a first cell when the first information of the first cell (such as a SIB-less cell) is not actively broadcasted or sent, and/or, how the terminal device operates in the first cell.

In Embodiment 1, the terminal device may be a terminal device in an RRC_CONNECTED state, or a terminal device in an RRC_IDLE state or an RRC_INACTIVE state.

FIG. 3 is a schematic flow diagram of a wireless communication method provided in an embodiment of the disclosure. The method illustrated in FIG. 3 may include step S310, which is introduced below.

Step S310: the terminal device acquires the first information of the first cell.

The first cell can be understood as an energy-saving cell or a cell of an energy-saving base station. Or, the first cell is a cell that supports NES or a cell of the energy-saving base station. For example, the first cell can be the aforementioned SSB-less cell and/or SIB-less cell.

In some embodiments, the first cell can be a cell in one or more of the following states: an energy-saving state, an NES state, an off state, a DRX state (such as a state of being in a DRX non-active time period), a DTX state (such as a state of being in a DTX non-active time period), an abnormal transmission state, a state where a part of information is not transmitted, a low-load state, an on-off transition state, a state where all or a part of common channels or channels are not transmitted, a state where data is not transmitted, a state where terminal device-dedicated information is not transmitted, etc.

In some embodiments, the first cell may refer to a cell that uses/activates an energy-saving technology.

In some embodiments, the energy-saving technology may include at least one of: a time-domain energy saving technology, a frequency-domain energy saving technology, a space-domain energy saving technology, and a code-domain energy saving technology. For example, DTX/DRX is a type of time-domain energy-saving technology.

In some embodiments, the first cell may refer to a cell with an energy-saving capability, or a cell where an energy-saving terminal device camps on, selects, or accesses.

In some embodiments, the first cell may refer to a cell serving the energy-saving terminal device.

In some embodiments, the first cell may refer to a cell that can be discovered alone or can operate independently. For example, the first cell may be a cell that can be camped on, selected, reselected, or accessed. For example, the first cell may be a PCell or a PScell. For example, the first cell can be discovered or detected by sending a first signal. For another example, the first cell can independently communicate with the terminal device without relying on other cells. In some embodiments, the aforementioned first signal may be a discovery signal, an SSB, a simplified SSB, a non-SSB, etc.

In some embodiments, the first cell may also refer to a cell that cannot be discovered alone or cannot work independently. In this case, the first cell can, for example, be discovered with the help of other cells, or can be indicated with the help of other cells, or can communicate with the terminal device with the help of other cells.

In some embodiments, the first cell may refer to a cell of not sending (or referred to as not broadcasting, not indicating, etc.) the first information.

In some embodiments, the first cell of not sending the first information may mean that the first cell does not actively send the first information. For example, the first cell can still send the first information when requested by the terminal device or by other base stations or cells. It can be noted that unless otherwise specified, in embodiments of the disclosure, "the first cell does not send information (e.g., does not send an SIB)" can be understood as that the first cell does not actively send the information, which is not repeated below for the sake of brevity.

In some embodiments, the first cell may not send an SSB.

In some embodiments, the first cell may not send an MIB.

In some embodiments, the first cell may not send part or all of SIBs.

In some embodiments, the first cell may not send the SSB and the SIB.

In some embodiments, the first cell may not send part or all of information contained in the SIB.

In some embodiments, the first cell may not send SI other than the MIB.

In some embodiments, the first cell may not send part or all SI.

In some embodiments, the first cell may not send part or all of information contained in the SI.

In some embodiments, the first cell may not send a paging message.

In some embodiments, the first cell may not send updated SI.

In some embodiments, the first cell may not send part or all of common signals/common channels.

In some embodiments, the first cell may not send random access channel (RACH) configuration/PRACH configuration.

In some embodiments, the first cell may not send information of cell selection, reselection, or camping on.

As an example, the first cell may refer to a cell that does not send SI of the first cell. For example, the first cell may refer to a cell that does not send the SIB. For example, the first cell may not actively send or broadcast the SIB.

As another example, the first cell may refer to a cell that sends synchronization information of the first cell but does not send the SI of the first cell. For example, the first cell may send the SSB but does not send the SIB, that is, the first cell may actively send or broadcast the SSB but does not send or broadcast the SIB.

As yet another example, the first cell may refer to a cell that neither sends the synchronization information of the first cell nor the SI of the first cell. For example, the first cell neither sends the SSB nor the SIB, that is, the first cell may not actively send or broadcast the SSB and the SIB.

The first information of the first cell is introduced below on a basis of the introduction of the first cell.

In some embodiments, the first information is associated (or referred to as related or corresponding) with the SI and/or synchronization information of the first cell. In other words, in some embodiments, the first information can be used to indicate the SI and/or synchronization information of the first cell.

The SI of the first cell is not limited in embodiments of the disclosure, as long as the SI indicates how the first cell is configured, so that the terminal device can access the first cell according to the SI of the first cell and operate correctly in the first cell. Taking an NR system as an example, the SI of the first cell may include, for example, the MIB, the SIB, etc. However, the embodiments of the disclosure are not limited in this regard. For example, the SI of the first cell may also refer to relevant information used to indicate cell configuration in a future communication system.

The synchronization information of the first cell is not limited in embodiments of the disclosure, as long as the synchronization information can be used for the terminal device to perform uplink synchronization with the first cell. Taking the NR system as an example, the synchronization information of the first cell may include the SSB and/or a tracking reference signal (TRS). However, the embodiments of the disclosure are not limited in this regard. For example, the synchronization information of the first cell may also be indication information used for the terminal device to perform uplink synchronization in the future communication system.

Specific content of the first information is not limited in embodiments of the disclosure. In some embodiments, the first information can be used to indicate one or more of the following information: part or all SI of the first cell; information related to accessing, camping on, selecting, or reselecting the first cell; information related to paging of the first cell; information for performing paging in the first cell; etc. In other words, in some embodiments, the first information can be used for the terminal device to perform one or more of: accessing, camping on, selecting, or reselecting the first cell; receiving paging message of the first cell; and discovering, detecting, or measuring the first cell, etc.

In some embodiments, the first information may include one or more of the following information: the MIB, part or all of the SIBs (or, the SIB or at least part of the SIB), part or all of the information contained in the SIB, part or all SI (or, the SI or at least part of the SI).

Part or all of the SIBs contained in the first information are not specifically limited in embodiments of the disclosure. For example, the first information includes the MIB. For example, the first information includes the MIB and SIB1. For another example, the first information includes all SIBs (such as SIB1, SIB2, SIB3, etc.). Alternatively, the first information includes some SIBs. For example, the first information includes SIB1. For another example, the first information includes part or all of the SIBs other than SIB1 (e.g., the first information includes SIB2 and SIB3). For another example, the first information includes SIB1 and part or all of other SIBs (e.g., the first information includes SIB1 and SIB2).

In some embodiments, part or all of the information contained in the SIB can be understood as part or all of information in a specific SIB. For example, the specific SIB is SIB1, part or all of the information contained in the SIB may refer to part or all of the information in SIB1. For another example, the specific SIB is SIB2 and SIB3, part or all of the information contained in the SIB may refer to part or all of information in SIB2 and/or SIB3.

That is to say, in some embodiments, the first information may include one or more of: the SIB, SIB1, part or all of the SIBs other than SIB1 in the SIB, part or all of the information contained in the SIB, part or all SI, part or all of the information contained in the SI, etc.

In some embodiments, the terminal device can acquire the SIB by receiving and decoding the SSB.

In some embodiments, one SIB may contain one or more SI, and the one or more SI may indicate different SI.

In some embodiments, the first information may include one or more of: slice information supported by the first cell; frequency information of the first cell; frequency priority information of the first cell; parameter information for selecting or reselecting the first cell; information on whether the first cell is barred from access (bar, or referred to as whether the first cell is barred, or whether the first cell is reserved, etc.); configuration information of a common channel or a common signal; time-frequency resource information of the common channels or the common signals; configuration information or time-frequency resource information for accessing, selecting, or reselecting the first cell; and configuration information or time-frequency resource information for paging in the first cell.

The parameter information for selecting or reselecting the first cell is not limited in embodiments of the disclosure. Exemplarily, the parameter information for selecting or reselecting the first cell may include one or more of: parameter information of a S criterion of the first cell, and parameter information of a R criterion of the first cell.

A common channel or a common signal of the first cell is not limited in embodiments of the disclosure. Exemplarily, the common channel or the common signal of the first cell may include one or more of: an SSB, an MIB, an SIB, a paging message, and SI.

In some embodiments, a broadcast status of the first information may be *notBroadcasting.* In other words, a SI broadcast status of the first information may be *notBroadcasting.* Taking the NR system as an example, *si-BroadcastStatus* of the first information can be *notBroadcasting.* For example, the first information includes SIB1, *si-BroadcastStatus* of SIB1 can be *notBroadcasting.* When the broadcast status of the first information is *notBroadcasting,* the first cell may not actively send the first information.

In some embodiments, the first information is optionally present, that is to say, the sending or broadcasting of the first information is optional. For example, the first information includes SIB1, the SIB1 is optionally present. In some embodiments, when the first information is optionally present, the first cell may not actively send the first information.

In some embodiments, the first information may be sent/broadcasted/indicated based on a request. For example, the first information includes SIB1, the SIB1 may be sent/broadcast/indicated based on the request. When the first information is to be sent/broadcasted/indicated based on the request, the first cell may not actively send the first information.

In some embodiments, the first information may be acquired based on a request from the terminal device. For example, the terminal device may send a first request message to the first cell to acquire the first information of the first cell. Alternatively, the terminal device may send the first request message to a second cell to acquire the first information of the first cell.

In some embodiments, the first information may be broadcasted/indicated by the second cell. That is to say, the terminal device can acquire the first information of the first cell through other cells (such as the second cell).

In some embodiments, the first information may be acquired by the terminal device from the first cell. For example, the terminal device may send the first request message to the first cell to acquire the first information of the first cell.

In some embodiments, the first information may be acquired by the terminal device from the second cell. For example, the terminal device may send the first request message to the second cell to acquire the first information of the first cell. Optionally, the second cell may send the first information of the first cell when the first request message is acquired. Alternatively, the second cell may broadcast/indicate the first information of the first cell, and the terminal device may acquire the first information of the first cell through information broadcasted/indicated by the second cell.

The manner in which the second cell broadcasts/indicates the first information is not limited in embodiments of the disclosure. For example, the second cell may carry or indicate the first information of the first cell in SI of the second cell. In other words, the first information may be carried in the SI of the second cell. Optionally, the aforementioned SI may be new SI, first cell-dedicated SI, or SI served as assistance information.

The second cell is not specifically limited in embodiments of the disclosure. Exemplarily, the second cell may be one or more of: an anchor cell of the first cell; a PCell of the terminal device; a PSCell of the terminal device; a cell providing information of the first cell; a cell that the terminal device is currently accessing, camping on, or selecting; a cell associated with the first cell, a non-energy-saving cell, etc.

For the anchor cell of the first cell, reference can be made to the previous text, which is not repeated herein.

The cell associated with the first cell is not limited in embodiments of the disclosure. Exemplarily, the cell associated with the first cell may include a SCell, Pcell, or PScell assisting the terminal device in accessing, camping on, selecting, or reselecting the first cell. Or, the cell associated with the first cell may be a cell that the terminal device is currently camping on. Or, the cell associated with the first cell may include the cell providing information of the first cell, etc.

As mentioned above, the terminal device can send the first request message to the first cell or the second cell to acquire the first information of the first cell. The first request message is introduced in detail below.

In some embodiments, the first request message can be sent on the first resource, which is not limited in embodiments of the disclosure. For example, the first resource may be a pre-configured resource or a pre-defined resource. Or, the first resource may be a resource used for random access, etc.

In some embodiments, the first resource may be a dedicated resource.

In some embodiments, the first resource being the resource used for random access may mean that the first resource may be a resource used for sending a preamble, and/or the first resource may be a PRACH resource.

In some embodiments, the resource used for random access corresponds to (belongs to) one or more of the following resources: a resource of the first cell, a resource of the second cell, a dedicated resource for the first information, and a dedicated resource for requesting the first information. For example, a preamble resource and/or the PRACH resource may correspond to one or more of the following resources: the resource of the first cell, the dedicated resource for the first information, and the dedicated resource for requesting the first information.

For example, the first information includes part or all of the SIBs, the resource used for random access corresponding to the dedicated resource for the first information may include the following. The resource used for random access corresponds to the SIB, or the resource used for random access corresponds to a specific SIB/SI (such as SIB1).

For example, the first information includes part or all of the SIBs, the resource used for random access corresponding to the dedicated resource for requesting the first information may include the following. The resource used for random access is a resource for requesting the SIB or a resource for requesting specific SIB/SI (such as SIB1).

In some embodiments, the aforementioned resource used for random access is sent/indicated to the terminal device by the second cell. In other words, the aforementioned resource used for random access may be sent/indicated to the terminal device by the first cell via the second cell. How the second cell carries the aforementioned resource used for random access is not specifically limited in embodiments of the disclosure. As a possible implementation, the aforementioned resource used for random access may be carried in the SIB of the second cell, or in other words, the second cell may send/indicate the resource used for random access to the terminal device through the SIB. That is to say, the second cell may indicate a resource for sending the first request message to the terminal device through the SIB. As another possible implementation, the aforementioned resource used for random access may be carried in a dedicated RRC message (such as an RRC release message) of the second cell, or in other words, the second cell may send/indicate the resource for random access to the terminal device through the dedicated RRC message. That is to say, the second cell may indicate the resource for sending the first request message to the terminal device through the dedicated RRC message.

In some embodiments, the aforementioned resource used for random access may be configured in *si-RequestConfig* or *si-RequestConfigSUL.* In other words, in some embodiments, the first resource may be configured in *si-RequestConfig* or *si-RequestConfigSUL.* For example, the second cell may configure a resource for carrying the first request message (such as the PRACH resource) in a dedicated SIB, *si-RequestConfig,* or *si-RequestConfigSUL.*

In some embodiments, if the first request message is sent by the terminal device to the first cell, the first resource corresponds to the first cell.

In some embodiments, if the first request message is sent by the terminal device to the second cell, the first resource corresponds to the second cell.

An example in which the terminal device sending the first request message is provided below, where the first resource is the resource used for random access. Assume that first information required by the terminal device is certain SI. When the terminal device triggers a random access procedure, the preamble and/or the PRACH resource corresponding to *si-RequestConfig* or *si-RequestConfigSUL* corresponding to SI required can be used for requesting the first information of the first cell. In some embodiments, a *RequestConfig* field or *si-RequestConfigSUL* may be carried in a *SI-SchedulingInfo* IE. *SI-SchedulingInfo* may carry a *schedulingInfoList* field to indicate *SchedulingInfo* corresponding to the aforementioned SI and the type of corresponding first information (e.g., which SIB or which SI, etc.). In some embodiments, SI in *si-RequestConfig* or *si-RequestConfigSUL* (e.g., SI corresponding to *SI-RequestResources)* corresponds to SI in *schedulingInfoList* in *SI-SchedulingInfo* in sequence.

The type of the first information is not limited in embodiments of the disclosure. For example, the type of the first information may be SIB1, or the MIB, or other SIBs. Alternatively, the type of the first information may be SI, etc.

The information contained (carried) in the first request message is not limited in embodiments of the disclosure. Exemplarily, the first request message may contain one or more of: a value of the first information, an index of the first information, a bitmap of the first information, a value of the first information required, an index of the first information required, and a bitmap of the first information required.

In some embodiments, the first request message may be used to indicate whether the terminal device requests the first information, and/or the content of the first information requested by the terminal device. For example, the first request message may carry the value of the first information or the index of the first information to indicate to the terminal device to request the first information, and specify the content of the first information requested (e.g., requesting all SIBs, or requesting SIB 1). Alternatively, the first request message may carry the value of the first information required or the index of the first information required, to indicate the specific first information required by the terminal device. Alternatively, the first request message may carry the bitmap of the first information or the bitmap of the first information required, to indicate to the terminal device to request the first information.

In some embodiments, if the terminal device indicates to request the first information through the bitmap of the first information or the bitmap of the first information required, it may be default that the terminal device is to request all first information of the first cell, that is, request all SI and/or SSB that have not been sent by the first cell. Exemplarily, if the first cell does not actively send SIB1 and SIB2, and if the bitmap of the first information carried in the first request message indicate to the terminal device to request the first information, it may be considered that the terminal device request SIB1 and SIB2 of the first cell.

In some embodiments, each bit of the bitmap of the first information may correspond to different or respective SI or an information identifier (ID).

The implementation of the bitmap of the first information or the bitmap of the first information required is not limited in embodiments of the disclosure. As a possible implementation, the bitmap of the first information or the bitmap of the first information required may use 1-bit indication information to indicate whether to request the first information. For example, if the value of the bitmap of the first information is "1", it indicates that the terminal device is to request the first information; if the value of the bitmap of the first information is "0", it indicates that the terminal device is not to request the first information. Alternatively, if the value of the bitmap of the first information is "0", it indicates that the terminal device is to request the first information; if the value of the bitmap of the first information is "1", it indicates that the terminal device is not to request the first information. As another possible implementation, the bitmap of the first information or the bitmap of the first information required may use multiple-bits (two-or-more-bits) indication information to indicate whether to request the first information. For example, if the value of the bitmap of the first information is "Yes", "True", "Request" or other values used to indicate to request the first information, it indicates that the terminal device is to request the first information; if the value of the bitmap of the first information is "No", "False", "Not request" or other values used to indicate not to request the first information, the terminal device is not to request the first information.

In some embodiments, the first request message is sent when a first condition is met. In other words, sending of the first request message is triggered based on the first condition. The first condition is exemplarily introduced below.

In some embodiments, the first condition may be associated (related) with one or more of: the terminal device can detect a synchronization signal of the first cell; the terminal device detects the SSB, the TRS, or other reference signals of the first cell; channel quality information of the first cell; whether the terminal device can select or reselect the first cell; whether the terminal device has data to-be-transmitted to the first cell; whether a slice supported by the first cell meets a requirement of the terminal device, etc.

Exemplarily, the first condition may include one or more of: the terminal device detects the SSB, the TRS, or other reference signals of the first cell; the terminal device detects existence of the first cell; the terminal device detects a discovery signal of the first cell; a channel quality of the first cell is greater than or equal to a first threshold; the first cell meets a R criterion or a S criterion; the first cell is a cell selected or reselected by the terminal device; the terminal device selects or reselects the first cell; the terminal device has data to-be-transmitted; an amount of data to-be-transmitted by the terminal device is greater than a second threshold; a slice required by the terminal device matches/includes/is identical to the slice supported by the first cell; a final check is required in the first cell; accessing, camping on, or transmitting data in the first cell is required; and selecting or reselecting the first cell is required.

In some embodiments, the terminal device performing a final check in the first cell can be understood as the terminal device checking whether the first cell is barred or reserved according to the first information (such as SIB 1).

In some embodiments, when the terminal device has data to-be-transmitted, the terminal device can trigger a service request to request to transmit data to the first cell. Therefore, in some embodiments, sending the first request message by the terminal device when the terminal device has data to-be-transmitted can also be understood as sending the first request message by the terminal device when the terminal device triggers the service request.

The value of the first threshold and/or the value of the second threshold is not limited in embodiments of the disclosure, and the first threshold and/or the second threshold can be set randomly according to actual situations. For example, the value of the first threshold can be 40dm or 50dm, etc. For another example, the value of the second threshold can be 1000 bytes or 2000 bytes, etc.

For example, the first information is part or all of the SIBs, when the first condition is met, the terminal device can send the first request message to the first cell or the second cell to acquire part or all of the SIBs of the first cell. As an example, when the terminal device detects the SSB of the first cell, the terminal device can send the first request message. As another example, when the terminal device has data to-be-transmitted to the first cell, the terminal device can send the first request message. As yet another example, when the terminal device requires to select or reselect the first cell, the terminal device can send the first request message. As yet another example, when the terminal device detects the SSB of the first cell and the channel quality of the first cell is greater than or equal to the first threshold, the terminal device can send the first request message. As yet another example, when the terminal device has data to-be-transmitted and the slice required by the terminal device matches/includes/is identical to the slice supported by the first cell, the terminal device can send the first request message.

A carrying mode of the first request message is not limited in embodiments of the disclosure. In some embodiments, the first request message may be a message used for random access. In some embodiments, the first request message may be an RRC dedicated message. In some embodiments, the first request message may be uplink control information (UCI) dedicated information or a PUCCH. In some embodiments, the first request message may be media access control-control element (MAC CE) information.

In the case where the first request message is the RRC dedicated message, the type of the RRC dedicated message is not limited in embodiments of the disclosure. Exemplarily, the RRC dedicated message may be UE assistance information, that is, the terminal device may request the first information through a UE assistance information message. Alternatively, the RRC dedicated message may be the dedicated RRC message, an RRC configuration message, or other RRC dedicated messages.

As an example, if the terminal device is in the RRC_IDLE state or the RRC_INACTIVE state, the first request message may be the message used for random access or the RRC dedicated message.

As another example, if the terminal device is in the RRC_CONNECTED state, the first request message may be the RRC dedicated message, the UCI dedicated information, a random access message, or a measurement reporting message.

As yet another example, if the terminal device is a terminal device handed over from another cell, the first request message may be the RRC dedicated message. A condition for handing over the terminal device from another cell to the first cell is not specifically limited in embodiments of the disclosure. Exemplarily, when the channel quality of the first cell measured at a current serving cell of the terminal device satisfies a certain threshold, or based on measurement reports from the terminal device, the terminal device can be handed over to the first cell.

In some embodiments, the first request message may be an existing message or an extended version of the existing message. For example, the first request message may be an extended version of an existing random access message (such as Msg 3 message). Alternatively, the first request message may be an extended version of an existing RRC dedicated message.

As a possible implementation, the terminal device can indicate to request the first information in a *RRCSystemInfoRequest* IE of a random access message (such as the Msg 3 message). Exemplarily, the terminal device can indicate to request the first information in a *requested-SI-List* field in the *RRCSystemInfoRequest* IE. In other words, the terminal device can carry the first information of the first cell requested through *requested-SI-List* or an extended version of *requested-SI-List.* For example, the first information includes SIB 1, the terminal device can include SIB 1 in *requested-SI-List* or an extended version of *requested-SI-List.*

As another possible implementation, the terminal device can request the first information of the first cell through a *RRCSystemInfoRequest* message. For example, the first information includes part or all of the SIBs, the terminal device can request at least one of SIB1, SIB2, SIB3, SIB4, and SIB5 through the *RRCSystemInfoRequest* message.

As another possible implementation, the terminal device can carry the first information of the first cell requested through *requestedSIB-List* IE or an extended version of *requestedSIB-List* IE. For example, the first information includes part or all of the SIBs, the terminal device can include at least one of SIB1, SIB2, SIB3, SIB4, and SIB5 in *requestedSIB-List* IE or the extended version of *requestedSIB-List* IE, to indicate to request the first information.

As another possible implementation, the terminal device can request the first information of the first cell through a *DedicatedSIBRequest* message. For example, the first information includes part or all of the SIBs, the terminal device can request at least one of SIB1, SIB2, SIB3, SIB4, and SIB5 through the *DedicatedSIBRequest* message.

In some embodiments, the first request message may be a new message, that is, the communication system may introduce a new message to send the first request message. In other words, the first request message may be a new message introduced in the communication system and dedicated for sending the first request message.

In some embodiments, when the first information includes different information, or when the first information includes different types of information, the first request message may be the same. In other words, when the terminal device requests the first information, regarding the first information requested by the terminal device, the first request message is the same. In other words, when the terminal device requests the first information, regarding the first information requested by the terminal device, a message used for the terminal device to request is the same or the form of request is the same. For example, the first information includes part or all of the SIBs, a first request message used for requesting SIB1 is the same as a first request message used for requesting other SIBs (such as SIB2, SIB3, etc.), or is the same in terms of the manner for sending the request message.

In some embodiments, different first information corresponds to the same first request message. Or, multiple types of first information correspond to the same first request message. Or, different first information corresponds to different first request messages. Or, multiple types of first information correspond to different first request messages.

In other words, when the first information includes different information, or when the first information includes different types of information, the first request message may be different. In other words, when the terminal device requests the first information, regarding different information included in the first information requested by the terminal device, the first request message can be different. In other words, when the terminal device requests the first information, regarding the first information requested by the terminal device, the message used by the terminal device to request is different or the form of request is different. For example, the first information includes part or all of the SIBs, the first request message used for requesting SIB1 and the first request message used for requesting other SIBs (such as SIB2, SIB3, etc.) are different, or they are different in terms of the form of sending.

In some embodiments, the aforementioned first request message being the same or different may include one or more of: a resource carrying the first request message is the same or different, and a message (such as an IE) carrying the first request message is the same of different.

As an example, the first request message being the same when the first information includes different information can be understood as that, for different information included in the first information requested by the terminal device, the first request message can be sent through the same resource and the same IE. For example, the first information includes part or all of the SIBs, the first request message used for requesting SIB1 and the first request message used for requesting other SIBs (such as SIB2, SIB3, etc.) can be sent through the same resource and the same IE.

As another example, the first request message being different when first information includes different information can be understood as that, for different information included in the first information requested by the terminal device, the first request message can be sent through different resources and/or IEs. For example, the first information includes part or all of the SIBs, the first request message used for requesting SIB1 and the first request message used for requesting other SIBs (such as SIB2, SIB3, etc.) can be sent through different resources and/or IEs. As a possible implementation, SIB1 can be requested through a specific resource, a pre-defined resource, or a specific IE, while other SIBs can be requested on-demand.

The above text describes the procedure in which the terminal device acquires the first information of the first cell. In some embodiments, in addition to acquiring the first information of the first cell, the terminal device can also perform other procedures to operate normally in the first cell. Other procedures performed by the terminal device in the first cell are exemplarily introduced below.

In some embodiments, if the first cell sends/broadcasts/indicates the synchronization signal (such as the SSB, the TRS, or other reference signals) to the terminal device, the terminal device may perform one or more of: receiving the synchronization signal through the first cell, measuring the synchronization signal of the first cell, and determining whether to perform cell selection and/or cell reselection and/or camping on based on the synchronization signal of the first cell. For example, the terminal device may determine whether the R criterion/S criterion is met based on the SSB, the TRS, or other reference signals of the first cell.

In some embodiments, the terminal device may perform one or more of the following according to acquired first information: determining whether it is possible to camp on the first cell, determining whether it is possible to select or reselect the first cell, performing a final check, determining whether to perform RACH in the first cell, receiving a physical downlink control channel (PDCCH) in the first cell, performing transmission with the first cell, and receiving the paging message of the first cell.

As an example, the terminal device can determine whether it is possible to camp on, reselect, or select the first cell, according to the SSB, the TRS, or other reference signals of the first cell, and/or, according to the first information. For example, when the terminal device acquires the SSB, the TRS, or other reference signals of the first cell, or when the terminal device knows that the first cell exists, the terminal device sends the first request message to request the first information. Furthermore, the terminal device determines whether to select, reselect, camp on, or access the first cell. For another example, the terminal device can determine whether to select the first cell by determining whether the first cell is barred, and/or whether the first cell is reserved, and/or whether the slice supported by the first cell matches/includes/is identical to the slice required by the terminal device.

As another example, the terminal device can determine whether to perform selection for the first cell or whether to select the first cell based on the SSB.

As a possible implementation, the terminal device can determine whether to perform cell selection or whether to select the first cell based on a measurement result of the SSB, the TRS, or other reference signals. A measurement quantity of the SSB, the TRS, or other reference signals is not limited in embodiments of the disclosure. For example, the measurement quantity of the SSB, the TRS, or other reference signals may include one or more of: a reference signal receiving power (RSRP), a reference signal receiving quality (RSRQ), a reference signal strength indicator (RSSI), etc.

As another possible implementation, the terminal device can determine whether to perform cell selection or whether to select the first cell based on one or more of: a measurement result of the first cell, a measurement result of other cells (such as a neighbor cell), whether the terminal device has data to-be-transmitted, whether an amount of data to-be-transmitted by the terminal device is greater than a certain threshold (such as the aforementioned second threshold), support for the slice by the first cell, and support for the slice by other cells.

In some embodiments, the terminal device can access the first cell when the measurement result of the first cell meets the S criterion or a cell selection criterion.

In some embodiments, whether the terminal device has data to-be-transmitted can be determined according to one or more of: information about data to-be-transmitted in a logical channel of the terminal device, and whether the terminal device has a service request.

In some embodiments, the aforementioned support for the slice by the first cell or other cells can be understood as whether the slice supported by the first cell or other cells matches/includes/is identical to the slice required by the terminal device.

As another possible implementation, when the channel quality of the first cell is greater than a certain threshold (such as the aforementioned first threshold), the terminal device can send the first request message to the first cell and further determine whether to select the first cell.

As another example, the terminal device can determine whether to perform reselection for the first cell or whether to reselect the first cell based on the SSB, the TRS, or other reference signals.

As a possible implementation, the terminal device can determine whether to perform cell reselection or whether to reselect the first cell based on the measurement result of the SSB, the TRS, or other reference signals (such as the RSRP, the RSRQ, the RSSI, etc.).

As another possible implementation, the terminal device can determine whether to perform cell reselection or whether to reselect the first cell based on one or more of: the measurement result of the first cell, the measurement result of other cells (such as the neighbor cell), whether the terminal device has data to-be-transmitted, whether the amount of data to-be-transmitted by the terminal device is greater than a certain threshold (such as the aforementioned second threshold), support for the slice by the first cell, the support for the slice by other cells.

In some embodiments, the terminal device can access the first cell when the measurement result of the first cell meets the R criterion and/or the S criterion or the cell reselection criterion.

In some embodiments, whether the terminal device has data to-be-transmitted can be determined by one or more of: the information about data to-be-transmitted in the logical channel of the terminal device, and whether the terminal device has a service request.

In some embodiments, the aforementioned support for the slice by the first cell or other cells can be understood as whether the slice supported by the first cell or other cells matches/includes/equals to the slice required by the terminal device.

As another possible implementation, when the channel quality of the first cell is greater than a certain threshold (such as aforementioned the first threshold), the terminal device can send the first request message to the first cell and further request whether to reselect the first cell.

As another example, the terminal device can finally determine whether it is possible to camp on the first cell, determine whether it is possible to select or reselect the first cell, or perform the final check according to the first information of the first cell. For example, the first information includes the SIB of the first cell, the terminal device can finally determine whether it is possible to camp on the first cell, determine whether it is possible to select or reselect the first cell, or perform the final check according to the SIB information of the first cell.

As another example, the terminal device can camp on the first cell. In other words, after the terminal device acquires the first information of the first cell, the terminal device can camp on the first cell or determine whether to camp on the first cell.

As another example, the terminal device can monitor the paging message of the first cell according to the first information. In other words, the terminal device can monitor the paging message from the first cell.

In some embodiments, monitoring configuration for the paging message and/or an SI update indication (or referred to as SI update indication information, SI update, etc.) of the first cell is determined based on the first information. For example, the monitoring configuration for the paging message and/or the SI update indication of the first cell is acquired from the SIB (such as SIB1) of the first cell. In this way, the terminal device can monitor the paging message and/or the SI update indication of the first cell after acquiring the first information of the first cell or sending the first request message to the first cell. For example, when the terminal device measures the SSB, the TRS, or other reference signals of the first cell, or when the terminal device considers (or determines) that the first cell exists, the terminal device can send the first request message to request the first information. Furthermore, the terminal device monitors the paging message and/or the SI update indication from the first cell.

In some embodiments, when there is SI update, the first cell (such as a base station of the first cell) can send the first information of the first cell.

In some embodiments, when there is a paging message, the first cell (such as the base station of the first cell) can send the first information of the first cell, or a CN corresponding to the first cell can indicate to the first cell to send the first information of the first cell.

A transmission occasion of the paging message of the first cell is not limited in embodiments of the disclosure. As a possible implementation, the transmission occasion of the paging message can refer to a transmission occasion of an existing paging message, that is, the transmission occasion of the paging message of the first cell can be a legacy occasion. As another possible implementation, the first cell can send the paging message using a specific configuration or a specific occasion. For example, the specific occasion can appear periodically. For instance, within X milliseconds (ms), the terminal device can monitor the paging message within the first m ms and not monitor the paging message within the last (X-m) ms since there is no transmission occasion for the paging message within the last (X-m) ms. As yet another possible implementation, the transmission occasion of the paging message of the first cell appears in a discontinuous manner. For example, the transmission occasion of the paging message follows an on/off pattern. In this case, the terminal device can monitor the paging message when the transmission occasion of the paging message is in an on state, and not monitor the paging message when the transmission occasion of the paging message is in an off state. As yet another possible implementation, the terminal device can monitor the paging message at all paging occasions, that is, a time when the terminal device monitors the paging message is irrelevant to an identifier of the terminal device (UE ID).

It can be noted that the transmission occasion of the aforementioned paging message can be used for the terminal device to monitor the paging message.

It can be noted that the method for determining the transmission occasion of the aforementioned paging message can also be used to determine a transmission occasion of the updated SI or a transmission occasion of the updated SI update indication (such as information scrambled by a paging radio network temporary identifier (P-RNTI)) when the SI is updated.

It can be noted that an occasion determined by the method for determining the transmission occasion of the aforementioned paging message can also be used for the terminal device to monitor the SI update indication.

As another example, the terminal device can determine whether to perform RACH (that is, perform the RACH procedure) in the first cell according to the first information. As a possible implementation, the terminal device can initiate the RACH procedure in the first cell or access the first cell when one or more of the following conditions are met: the first cell is a cell for camping on/cell selection/cell reselection, the channel quality of the first cell is greater than a certain threshold (such as the first threshold), the terminal device has data to-be-transmitted, the amount of data to-be-transmitted by the terminal device is greater than or equal to a certain threshold (such as the second threshold), the slice supported by the first cell matches/includes/is identical to the slice required by the terminal device, etc.

As another example, the terminal device can receive the PDCCH in the first cell and/or perform transmission with the first cell according to the first information. Exemplarily, the terminal device can receive the PDCCH in the first cell and/or perform transmission with the first cell in one or more of the following cases: the first cell is the cell for camping on/cell selection/cell reselection; the cell for camping on/cell selection/cell reselection is a current cell for camping on/cell selection/cell reselection, and the terminal device is handed over to the first cell (e.g., the terminal device was previously in another cell or an anchor cell, etc.).

In some embodiments, if the first information includes SIB1 of the first cell, the terminal device can also acquire the second information according to the first information. That is to say, the terminal device can acquire the second information according to SIB1 of the first cell.

In some embodiments, the second information may include one or more of: other SIBs except SIB1 of the first cell, SI update of the first cell, RACH configuration of the first cell, and paging configuration of the first cell.

As an example, other SIBs (such as SIB2, SIB3, SIB4, etc.) and/or the RACH configuration of the first cell can be acquired from SIB1 of the first cell.

In some embodiments, the terminal device may send the first request message to the first cell to acquire the second information of the first cell from the first cell, for example, acquire one or more of: other SIBs of the first cell, SI update of the first cell, the RACH configuration of the first cell, and the paging configuration of the first cell.

To facilitate understanding, several examples of Embodiment 1 are given below, where the first information includes part or all of the SIBs. It can be noted that although in the following, the first cell sends the SSB, the first cell can also send the discovery signal, the TRS, or other reference signals with related functions. Optionally, in the following, for example, the first request message is an uplink wake-up signal (UL-WUS).

For example, the first cell sends the SSB but does not send the SIB (e.g., including at least SIB1). In this case, the terminal device can detect the SSB to synchronize with the first cell. In some embodiments, the terminal device can send the UL-WUS to request the SIB (such as SIB1) of the first cell to acquire monitoring information of the paging message. Furthermore, the terminal device can monitor the paging message according to the monitoring information.

For another example, the first cell sends the SSB but does not send the SIB (e.g., including at least SIB1). In this case, the terminal device can detect the SSB to synchronize with the first cell. In some embodiments, when the first cell sends the paging message, the first cell can send the SIB (such as SIB1) so that the terminal device can acquire the monitoring information of the paging message. Furthermore, the terminal device can monitor the paging message according to the monitoring information.

For yet another example, the first cell sends the SSB but does not send the SIB (e.g., including at least SIB1). In this case, the terminal device can detect the SSB to determine whether it is possible to select or reselect the first cell. If a condition for cell selection or reselection (such as the S criterion/R criterion) is met, the terminal device can send the UL-WUS to the first cell to request the SIB (such as SIB1) of the first cell. Then, the first cell sends the SIB information. The terminal device performs the final check or determines whether to finally reselect or select the first cell according to the MIB/SIB information of the first cell (e.g., the cell is not barred or reserved, or the cell supports the slice required by the terminal device). In some embodiments, if the terminal device needs to enter a connected state, the terminal device can acquire the RACH configuration according to the SIB information (such as SIB1) of the first cell, and perform RACH in the first cell to access the first cell.

For yet another example, the first cell sends the SSB but does not send the SIB (e.g., including at least SIB1). In this case, the terminal device can detect the SSB to determine whether it is possible to select or reselect the first cell. If the condition for cell selection or reselection (such as the S criterion/R criterion) is met, the terminal device acquires the SIB information of the first cell from the second cell (such as the anchor cell). Optionally, the terminal device can also acquire the SIB information of the first cell before determining whether the R criterion/S criterion is met or after detecting the SSB of the first cell. Then, the terminal device can perform the final check or determine whether to finally reselect or select the first cell according to the MIB/SIB information of the first cell (e.g., the cell is not barred, or the cell supports the slice required by the terminal device). In some embodiments, if the terminal device needs to enter the connected state, the terminal device can acquire the RACH configuration according to the SIB information (such as SIB1) of the first cell, and perform RACH in the first cell to access the first cell.

For yet another example, the first cell sends the SSB but does not send the SIB (e.g., including at least SIB1). If the terminal device is handed over to the first cell, the terminal device can acquire the SIB of the first cell through the dedicated RRC message. When necessary, the terminal device can acquire the RACH configuration of the first cell according to the SIB (such as SIB1) of the first cell, and perform RACH in the first cell.

Embodiment 1 specifies how the terminal device operates in the energy-saving cell (such as the SIB-less cell). In other words, Embodiment 1 specifies a method for the terminal device in the connected state or a non-connected state to communicate with the first cell when the first cell is the energy-saving cell (such as the SIB-less cell). This is conducive to ensuring that the terminal device operates normally in the energy-saving cell while achieving NES. In other words, in Embodiment 1, the terminal device can request (i.e., actively acquire) or acquire from the second cell the first information of the first cell (such as the energy-saving cell, the SIB-less cell, etc.), thereby helping the terminal device to camp on/access/select/reselect the first cell according to the first information, which is conducive to the operation of the terminal device in the first cell.

### Embodiment 2

Embodiment 2 intends to specify how a terminal device requests for relevant information of a first cell, as well as the process performed when an abnormality occurs during a requesting procedure.

In Embodiment 2, the terminal device may be a terminal device in an RRC_CONNECTED state, or a terminal device in an RRC_IDLE state or an RRC_INACTIVE state.

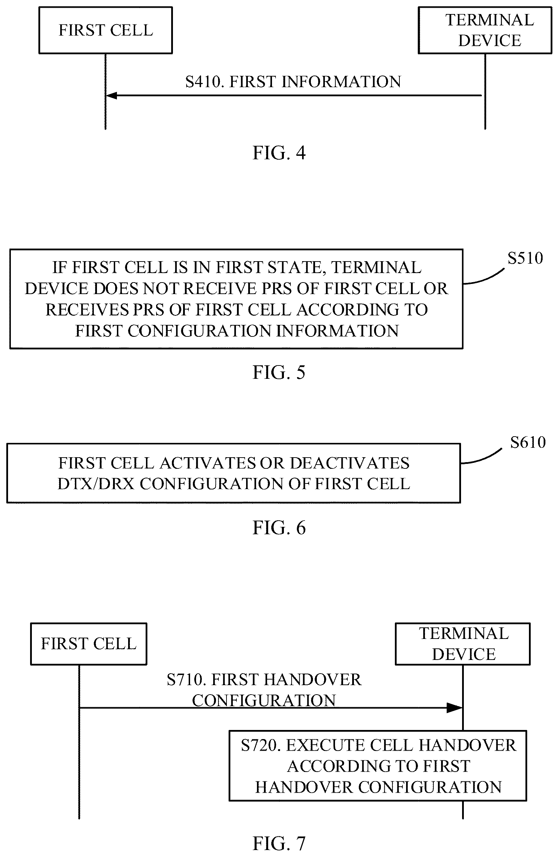

FIG. 4 is a schematic flow diagram of a wireless communication method provided in another embodiment of the disclosure. The method illustrated in FIG. 4 may include step S410, which is introduced below.

Step S410: the terminal device sends a first message to the first cell.

The first cell can be an energy-saving cell or a cell of an energy-saving base station. Or, the first cell is a cell that supports NES or a cell of the energy-saving base station. For example, the first cell can be the aforementioned SSB-less cell and/or SIB-less cell.

In some embodiments, the first cell is one or more of: an energy-saving cell, a cell in an energy-saving state, a cell in an NES state, a cell in an off state, a cell in a DRX state (such as a state of being in a DRX non-active time period), a cell in a DTX state (such as a state of being in a DTX non-active time period), a cell in an abnormal transmission state, a cell in a state where a part of information is not transmitted, a cell in a low-load state, a cell in an on-off switching state, a cell in a state where all or a part of common channels or channels are not transmitted, a cell in a state where data is not transmitted, a cell in a state where terminal device-dedicated information is not transmitted, a cell using/activating an energy-saving technology, a cell with an energy-saving capability, a cell where an energy-saving terminal device camps on, selects, or accesses, a cell serving the energy-saving terminal device, etc.

The energy-saving technology used/activated by the first cell is not limit in the disclosure. Exemplarily, the energy-saving technology may include at least one of: a time-domain energy saving technology, a frequency-domain energy saving technology, a space-domain energy saving technology, and a code-domain energy saving technology. For example, the DTX/DRX is a type of the time-domain energy-saving technology.

In some embodiments, the first cell meets one or more of: the first cell does not send an SSB, the first cell does not send an MIB, the first cell does not send part or all of SIBs, the first cell does not send the SSB and the SIB, the first cell does not send part or all of information contained in the SIB, the first cell does not send part or all of common signals/common channels, the first cell does not send SI other than the MIB, the first cell does not send part or all SI, the first cell does not send part or all of information contained in the SI, the first cell does not send a paging message, the first cell does not send an SI update indication, the first cell does not send part or all of the common signals or the common channels, the first cell does not send RACH/PRACH configuration, the first cell does not send information for cell selection, reselection, or camping on.

For a detailed introduction to the first cell, reference can be made to the introduction in the above Embodiment 1, which is not repeated herein for the sake of brevity.

The first message may be used to indicate relevant information of the first cell. Exemplarily, the first message may be used to indicate one or more of: requesting the first cell to perform state transition; requesting the first cell to send at least one of the SSB, the MIB, the SIB, and a paging message; requesting the first cell to send part or all of the common signals; the terminal device has a requirement for data transmission or a requirement for network access; requesting the first cell to activate or deactivate cell DTX/DRX; requesting the first cell to modify cell DTX/DRX; requesting the first cell to use a recommended cell DTX/DRX parameter; and recommending a cell DTX/DRX parameter to the first cell.

A resource carrying the first message is not limited in embodiments of the disclosure. For example, the first message can be sent on a pre-defined resource or a pre-configured resource. Alternatively, the first message can be sent on a specific resource configured by a network side. In other words, the first message can be sent through a specific occasion or a specific signaling (the specific occasion or the specific signaling may be configured by the network side).

In some embodiments, the first message may be transmitted repeatedly. For example, the first message may be transmitted repeatedly for N times. The number of repetitions of the first message is not limited in embodiments of the disclosure, and the number can be set randomly according to actual requirements. Configuration method for the number of repetitions of the first message is not limited in embodiments of the disclosure. For example, the number may be configured by a network device, or may be pre-configured, or may be determined by the terminal device.

In some embodiments, the method of Embodiment 2 may further include the following steps. If a first condition is met within a first duration after sending the first message, the terminal device determines that the first cell is unavailable, or the first cell is barred, or the first cell is barred for a period of time.

A duration corresponding to the period of time in which the first cell is barred is not limited in embodiments of the disclosure. For example, the period of time can be 300ms or other time durations. In some embodiments, the first cell being barred for a period of time may also mean that within the duration, at least one of the following is performed: not camping on, not evaluating, not selecting, not reselecting to, not accessing, not performing measurements on, or not considering the first cell as a suitable/acceptable cell., etc. In some embodiments, the first cell being barred for a period of time may mean that the first cell is barred until the terminal device receives a response message for the first message or the terminal device receives a signal of the first cell (such as the SSB, the MIB, etc.), or the first cell performs the state transition.

Optionally, the cell being barred mentioned in embodiments of the disclosure can also be understood as or be replaced with the cell being reserved.

The aforementioned first condition may include one or more of: the terminal device does not receive the response message for the first message; the terminal device receives a rejection message or a negative acknowledgement (NACK) message for the first message; the terminal device receives the NACK message for the first message for K times (where K can be an integer greater than or equal to 1); the first cell does not perform state transition; the first cell does not send at least one of the SSB, the MIB, the SIB, and the paging message; the terminal device fails to acquire part or all of the common signals of the first cell; the first cell does not activate or deactivate cell DTX/DRX; the first cell does not modify cell DTX/DRX; and the first cell does not use the recommended cell DTX/DRX parameter.

In some embodiments, the aforementioned first duration may correspond to a first timer. In other words, the terminal device may start the first timer when the terminal device sends the aforementioned first message. A duration of the first timer is equal to the first duration.

Configuration method of the aforementioned first duration is not limited in embodiments of the disclosure. For example, the first duration may be a pre-defined duration or a duration configured by the network device.

In some embodiments, the first message may be transmitted repeatedly within the first duration. For example, the first message may be transmitted repeatedly for N times within the first duration.

In some embodiments, the method of Embodiment 2 may further include the following steps. If the terminal device determines that the first cell is unavailable, or the first cell is barred, or the first cell is barred for a period of time, the terminal device resends the first message when the first duration expires.

The number of times that the terminal device resends the first message is not limited in embodiments of the disclosure. For example, if the terminal device determines that the first cell is unavailable, or the first cell is barred, or the first cell is barred for a period of time, the terminal device may resend the first message for M times when the first duration expires.

In some embodiments, each time the terminal device resends the first message, the terminal device may start the first timer or a second timer.

For example, the terminal device starts the first timer when the terminal device resends the first message, the duration of the first timer can be equal to the aforementioned first duration or a second duration, which is not limited in embodiments of the disclosure. For example, the terminal device starts the first timer when the terminal device resends the first message. The duration of the first timer is equal to the second duration, and the second duration can be shorter than the first duration.

For example, the terminal device starts the second timer when the terminal device resends the first message, the duration of the second timer can be equal to the aforementioned first duration, or can be equal to the second duration. Alternatively, the duration of the second timer can also be not equal to the first duration. Embodiments of the disclosure are not limited in this regard. For example, the terminal device starts the second timer when the terminal device resends the first message. The duration of the second timer is equal to the second duration, and the second duration can be shorter than or longer than the first duration. Alternatively, the terminal device starts the second timer when the terminal device resends the first message, and the duration of the second timer is equal to the first duration.

It can be understood that the second timer mentioned in embodiments of the disclosure may be different from the first timer. For example, the second timer and the first timer are different timers, or the second timer and the first timer are the same timer but have different time durations.

The aforementioned first duration and/or second duration can be used to determine various types of information. For example, the first duration and/or second duration can be used to determine one or more of: whether the first cell can be used for camping on/cell selection/cell reselection of the terminal device; whether the first message is sent successfully; whether a network status of the first cell is transitioned; whether the first cell activates or deactivates cell DTX/DRX; whether the first cell modifies cell DTX/DRX; whether the first cell uses the recommended cell DTX/DRX; whether the terminal device can receive at least one of the SSB, the MIB, the SIB, and the paging message of the first cell; whether the terminal device can receive part or all of the common signals of the first cell; whether the terminal device can perform network access from the first cell or perform RACH procedure in the first cell; whether the terminal device can receive SI other than the MIB of the first cell; whether the terminal device can receive part or all SI of the first cell; whether the terminal device can receive part or all of the information contained in the SI of the first cell; whether the terminal device can receive the paging message of the first cell; and whether the terminal device can receive the SI update indication of the first cell.

To facilitate understanding, several examples are given below, where the first cell is the SIB-less cell. It can be noted that although in the following, a synchronization signal of the first cell is the SSB, the synchronization signal of the first cell can also be a discovery signal, a TRS, or other reference signals with related functions. Optionally, in the following, for example, the first message is a UL-WUS.

For example, the first cell does not send the SSB/ SIB. In this case, the terminal device can send the UL-WUS to request the network to send the SSB/SIB (such as SIB1). Optionally, the terminal device can send the UL-WUS repeatedly for N times, where N can be 1 or greater than 1. If the terminal device fails to acquire the SSB/SIB (such as SIB1) of the first cell within a first duration, the terminal device cannot select/reselect/camp on the first cell, or the terminal device considers that the first cell is barred for a period of time, such as 300s.

For another example, the first cell sends the SSB but does not send the SIB. In this case, the terminal device can send the UL-WUS to request the network to send the SIB (such as SIB1). Optionally, the terminal device can send the UL-WUS repeatedly for N times, where N can be 1 or greater than 1. If the terminal device fails to acquire the SSB/SIB (such as SIB1) of the first cell within the first duration, the terminal device cannot select/reselect/camp on the first cell, or the terminal device considers that the first cell is barred for a period of time, such as 300s.

For yet another example, the first cell is in an off state or an energy-saving state. In this case, the terminal device can send the UL-WUS to request the network to transition the state to an on state or a non-energy-saving state. Optionally, the terminal device can send the UL-WUS repeatedly for N times, where N can be 1 or greater than 1. If the terminal device fails to acquire state transition of the first cell or a state transition indication within the first duration, the terminal device cannot select/reselect/camp on the first cell, or the terminal device considers that the first cell is barred for a period of time, such as 300s, or the terminal device delays transmission.

For yet another example, the first cell sends the SSB/SIB/paging message, but activates cell DTX/DRX. In a cell DTX/DRX non-active state, the terminal device can send the UL-WUS to request the network to deactivate cell DTX/DRX, or request the network to receive/send a signal (such as at least one of configured grant (CG)/downlink grant (DG)/PDCCH/PUCCH). Optionally, the terminal device can send the UL-WUS repeatedly for N times, where N can be 1 or greater than 1. If the terminal device does not receive an acknowledgement (ACK) from the first cell or a cell DTX/DRX deactivation indication within the first duration, the terminal device cannot select/reselect/camp on the first cell. Or, the terminal device considers that the first cell is barred for a period of time, such as 300 seconds. Or, the terminal device delays the transmission (that is, following cell DTX/DRX configuration, transmission can be performed during a cell DTX/DRX active time period).

Optionally, the cell being barred mentioned in embodiments of the disclosure can also be understood as or replaced with the cell being reserved.

Embodiment 2 specifies how the terminal device requests for relevant information of the first cell, which is conducive to ensuring normal communication between the terminal device and the first cell.

### Embodiment 3

Embodiment 3 intends to specify a processing procedure of a PRS in an energy-saving scenario.

In Embodiment 3, for the definition of the first cell, reference can be made to the above introduction of the first cell, which is not repeated herein for the sake of brevity.

FIG. 5 is a schematic flow diagram of a wireless communication method provided in yet another embodiment of the disclosure. The method illustrated in FIG. 5 may include step S510, which is introduced below.

Step S510: if the first cell is in a first state, a terminal device does not receive a PRS of the first cell or receives the PRS of the first cell according to first configuration information.

Correspondingly, for the first cell, if the first cell is in the first state, the first cell does not send the PRS or sends the PRS according to the first configuration information.

The first cell being in the first state may mean that the first cell is in a certain state capable of energy saving. For example, the first state may include one or more of: an energy-saving state, an off state, a state of being in a cell DTX/DRX non-active time period, a state of being in a time period of using an energy-saving technology, etc.

For other descriptions of the first state, reference can be made to the above introduction, which is not repeated herein for the sake of brevity.

The first configuration information is introduced below.

In Embodiment 3, the first configuration information can be used to indicate PRS configuration of one or more cells. For example, the first configuration information can indicate PRS configuration of the first cell. In some embodiments, in addition to indicating the PRS configuration of the first cell, the first configuration information can also indicate PRS configuration of other cells.

In some embodiments, the first configuration information is sent by a positioning server (such as a location management function (LMF)) to a terminal device.

In some embodiments, the first configuration information is sent by the positioning server to the first cell (or a base station of the first cell).

In some embodiments, the first configuration information is sent by the positioning server to the first cell (or the base station of the first cell). Optionally, the first cell (or the base station of the first cell) can configure second configuration information based on the first configuration information.

In some embodiments, the first configuration information is sent by the positioning server to the terminal device, and then sent the first cell (or the base station of the first cell) by the terminal device.

In some embodiments, the first cell (or the base station of the first cell) can configure the second configuration information by using the first configuration information. The second configuration information can be used to indicate DTX/DRX configuration of the first cell.

In some embodiments, the first configuration information can be used to configure or adjust the second configuration information. For example, after the positioning server or the terminal device sends the first configuration information to the first cell, the first cell can configure or adjust the second configuration information according to the first configuration information.

In other embodiments, the first configuration information is determined based on the second configuration information. The second configuration information can be used to indicate the DTX/DRX configuration of the first cell.

In some embodiments, the terminal device or the first cell can send the second configuration information to the positioning server, so that the positioning server configures or adjusts the first configuration information according to the second configuration information. Then, the positioning server can send the first configuration information to the terminal device and/or the first cell (or the base station of the first cell). Optionally, after the positioning server sends the first configuration information to the terminal device, the terminal device can further send the first configuration information to the first cell (or the base station of the first cell).

In Embodiment 3, when the first cell is in the first state (a state related to cell energy saving), the first cell may not send the PRS or may send the PRS according to relevant configuration information, which is conducive to NES.

### Embodiment 4

Embodiment 4 intends to specify a method for activating or deactivating DTX/DRX of a first cell.

In Embodiment 4, for the definition of the first cell, reference can be made to the above introduction of the first cell, which is not repeated herein for the sake of brevity.

FIG. 6 is a schematic flow diagram of a wireless communication method provided in yet another embodiment of the disclosure. The method illustrated in FIG. 6 may be performed by the first cell (or a base station of the first cell). The method illustrated in FIG. 6 may include step S610, which is introduced below.

Step S610: the first cell activates or deactivates the DTX/DRX of the first cell (or may also be referred to as a DTX/DRX operation or DTX/DRX configuration).

In some embodiments, if all parameters of the DTX/DRX configuration of the first cell (such as a periodicity, an on-duration/on-duration time, offset, etc.) are configured in an RRC, or a specific parameter of the DTX/DRX configuration of the first cell (such as at least one of the periodicity, the on-duration/on-duration time, and the offset, e.g., the offset) are configured in the RRC, the DTX/DRX of the first cell can be activated or deactivated in an RRC manner (e.g., activate if configured and not activate if not configured), or a UE activates or deactivates the DTX/DRX of the first cell when the UE receives RRC configuration (e.g., activate if configured and deactivate if not configured).

In some embodiments, if some parameters of the DTX/DRX configuration of the first cell (such as at least one of the periodicity, the on-duration/on-duration time, and the offset) are configured in the RRC and some parameters of the DTX/DRX configuration of the first cell (such as at least one of the periodicity, the on-duration/on-duration time, and the offset) are carried in downlink control information (DCI) or an MAC CE, or a parameter that is not provided for the DTX/DRX configuration of the first cell in the RRC configuration is carried in the DCI or the MAC CE, the UE activates or deactivates the DTX/DRX of the first cell when the UE receives the DCI or the MAC CE (e.g., activate if received and deactivate if not received).

In some embodiments, if some parameters of the DTX/DRX configuration of the first cell (such as the periodicity, and the on-duration/on-duration time) are configured in the RRC, and some parameters of the DTX/DRX configuration of the first cell (such as the offset) are carried in the DCI or the MAC CE, the UE activates or deactivates the DTX/DRX of the first cell when the UE receives the DCI or the MAC CE (e.g., activate if received and deactivate if not received).

In some embodiments, if a specific parameter of the DTX/DRX configuration of the first cell (such as at least one of the periodicity, the on-duration/on-duration time, and the offset, e.g., the offset) are configured in the RRC, the DTX/DRX of the first cell can be activated or deactivated in the RRC manner (e.g., activate if configured and not activated if not configured).

In some embodiments, the first cell can activate or deactivate the DTX/DRX of the first cell by using a first signaling. For example, the first cell can activate or deactivate the DTX/DRX configuration of the first cell by using the RRC (e.g., activate if configured and deactivate if not configured).

In some embodiments, the first cell can activate or deactivate the DTX/DRX of the first cell by using the first signaling. For example, the first cell can activate or deactivate the DTX/DRX by using the DCI. Optionally, the DCI can carry all or part of the DTX/DRX configuration of the first cell (such as the periodicity, the on-duration/on-duration time, and the offset). Optionally, the DCI can be an UE-specific DCI or a common DCI.

In some embodiments, the first cell can activate or deactivate the DTX/DRX of the first cell by using the first signaling. For example, the first cell can activate or deactivate the DTX/DRX of the first cell by using the MAC CE. Optionally, the MAC CE carries all or part of the DTX/DRX configuration of the first cell (such as the periodicity, the on-duration/on-duration time, and the offset).

In some embodiments, the UE can activate or deactivate DTX/DRX of the first cell according to a specific first signaling, such as the latest DTX/DRX signaling for the first cell, the MAC CE, the DCI, or the RRC.

In some embodiments, the aforementioned first signaling may be associated with a logical channel identifier (LCID). In other words, the LCID can be used to identify or recognize the aforementioned first signaling. For example, the aforementioned first signaling can be associated with a new LCID (the new LCID is used to identify the first signaling).

In some embodiments, the first signaling can be used to activate or deactivate one DTX/DRX configuration. That is to say, one signaling can activate or deactivate one DTX/DRX configuration.

In some embodiments, the first signaling may be used to activate or deactivate multiple DTX/DRX configurations. In other words, the first signaling can be used to activate or deactivate different DTX/DRX configurations. That is to say, one signaling can activate or deactivate multiple DTX/DRX configurations or different DTX/DRX configurations.

In some embodiments, the first signaling may be used to activate or deactivate the LCID. That is to say, one signaling can activate or deactivate one LCID.

In some embodiments, the first signaling may be used to activate or deactivate multiple LCIDs. In other words, the first signaling may be used to activate or deactivate different LCIDs. That is to say, one signaling may activate or deactivate multiple LCIDs or different LCIDs.

A payload of the first signaling is not limited in embodiments of the disclosure. For example, the payload of the first signaling may be one of: a fixed value, a variable value, or a default value.

As an example, the first signaling may be used to indicate activating or deactivating one DTX/DRX configuration of the first cell, or a specific DTX/DRX configuration, or a specific number of DTX/DRX configurations.

As an example, the first signaling may be used to indicate activating or deactivating all DTX/DRX configurations of the first cell.

As an example, the first signaling can use any fixed value (such as a number, a character) to indicate activating or deactivating the DTX/DRX configuration of the first cell. For instance, when the value of the first signaling is "activate", it represents activating the DTX/DRX configuration of the first cell; when the value of the first signaling is "deactivate", it represents deactivating the DTX/DRX configuration of the first cell. Alternatively, when the value of the first signaling is "1", it represents activating the DTX/DRX configuration of the first cell; when the value is "0", it represents deactivating the DTX/DRX configuration of the first cell. Alternatively, when the value of the first signaling is "1", it represents receiving an indication for activating or deactivating the DTX/DRX configuration of the first cell; when the value is "0", it represents not receiving the indication for activating or deactivating the DTX/DRX configuration of the first cell. Alternatively, when the value of the first signaling is "0", it represents activating the DTX/DRX configuration of the first cell; when the value is "1", it represents deactivating the DTX/DRX configuration of the first cell, etc.

As another example, the first signaling can use the variable value to indicate activating or deactivating the DTX/DRX configuration of the first cell. For instance, when the value of the first signaling is a non-zero value (which can be any non-zero value), it represents activating the DTX/DRX configuration of the first cell; when the value of the first signaling is "0", it represents deactivating the DTX/DRX configuration of the first cell. Alternatively, when the value of the first signaling is "0", it represents activating the DTX/DRX configuration of the first cell; when the value of the first signaling is a non-zero value (which can be any non-zero value), it represents deactivating the DTX/DRX configuration of the first cell. For instance, when the value of the first signaling is a non-zero value (which can be any non-zero value), it represents receiving the indication for activating or deactivating the DTX/DRX configuration of the first cell; when the value of the first signaling is "0", it represents not receiving the indication for activating or deactivating the DTX/DRX configuration of the first cell.

As another example, the first signaling can use the default value to indicate activating or deactivating the DTX/DRX configuration of the first cell. Taking the default value of "0" as an example, assuming that a default state of the DTX/DRX configuration of the first cell is "deactivate", then the first cell receiving the first signaling once, which indicates activating the DTX/DRX configuration of the first cell, and the next time the first cell receives the first signaling, which indicates deactivating the DTX/DRX configuration of the first cell. Of course, the default value is not limited to "0" in embodiments of the disclosure. In practice, the default value can be any default value specified or pre-configured by a protocol, or configured by the network device.

Information contained in the first signaling is not specifically limited in embodiments of the disclosure. For example, the first signaling may include one or more of the following indication information: activation indication or deactivation indication, an index of cell DTX/DRX, an index of cell DTX, and an index of cell DRX. As an example, the first signaling may include the activation indication and the index of cell DRX; in this case, it can be considered that the first signaling is used to activate DRX configuration corresponding to the DRX index. As another example, the first signaling may include the deactivation indication and the index of cell DTX; in this case, it can be considered that the first signaling is used to deactivate DTX configuration corresponding to the DTX index. As yet another example, the first signaling may include the activation indication, the index of cell DTX, and the index of cell DRX; in this case, it can be considered that the first signaling is used to activate the DTX configuration corresponding to the DTX index and the DRX configuration corresponding to the DRX index. As yet another example, the first signaling may include the activation indication and the index of cell DTX/DRX; in this case, it can be considered that the first signaling is used to activate the DTX configuration corresponding to the DTX index and the DRX configuration corresponding to the DRX index.

Optionally, when the first cell is in a non-active state of the DTX/DRX, or enters/transitions to the non-active state of the DTX/DRX, the UE stops all running timers, such as at least one of a configured grant timer (CGT) and a configured grant retransmission timer (CGRT). Furthermore, when the first cell is in an active state of the DTX/DRX, or enters/transitions to the active state of the DTX/DRX, the UE restarts or starts all timers, such as at least one of the CGT and the CGRT. Optionally, the aforementioned timers started or restarted are those that are stopped when the first cell is in the non-active state of the DTX/DRX or enters/transitions to the non-active state of the DTX/DRX.

Optionally, when the first cell is in the non-active state of the DTX/DRX, or enters/transitions to the non-active state of the DTX/DRX, the UE suspends all running timers, such as at least one of the CGT and the CGRT. Furthermore, when the first cell is in the active state of the DTX/DRX, or enters/transitions to the active state of the DTX/DRX, the UE resumes all timers, such as at least one of the CGT and the CGRT. Optionally, the aforementioned timers started or restarted are those that are suspended when the first cell is in the non-active state of the DTX/DRX, or enters/transitions to the non-active state of the DTX/DRX.

Optionally, if configuration parameters corresponding respectively to the DTX configuration of the first cell and the DRX configuration of the first cell are different, for instance, at least one of the periodicity, the on-duration period/on-duration time, and offset is different, a UE behavior may further include at least one of: for information transmitted during DTX on-duration, its feedback information is allowed to be transmitted during a DRX non-active time period; for information transmitted during the DTX on-duration, its feedback information is defined, by using an enhanced timing, to be transmitted during DRX active time period; for information transmitted during DRX on-duration, its feedback information is allowed to be transmitted during the DTX non-active time period; and for information transmitted during the DRX on-duration, its feedback information is defined, by using the enhanced timing, to be transmitted during the DTX active time period.

In some embodiments, the UE may perform at least one of the following situations.

Case A: the terminal device sends a scheduling request (SR) during a cell DRX active time period, but cannot monitor subsequent PDCCH during a cell DTX non-active time period. In this case, the following possible solutions can be adopted.

Solution 1: introduce a new exceptional UE behavior to enable the UE to continue monitoring PDCCH after sending the SR.

Solution 2: when a configured monitoring window is within a cell DRX non-active time period, allow the UE to delay SR transmission during cell DRX on-duration.

Case B: the UE sends a CG during the cell DRX on-duration, but cannot monitor a corresponding hybrid automatic repeat request (HARQ) feedback during the cell DTX non-active period. In this case, the following possible solutions can be adopted.

Solution 1: introduce a new UE behavior to ensure that when the configured monitoring window is within the cell DRX non-active time period, the CG timer (CGT) is stopped during the cell DRX on-duration.

Case C: the network sends a semi-persistent scheduling (SPS) during a cell DTX on-duration, but the UE cannot send a HARQ feedback during the cell DRX non-active time period. In this case, the following possible solutions can be adopted.

Solution 1: introduce a new exceptional UE behavior so that when the UE receives the SPS, the UE can send the HARQ feedback (such as the ACK/NACK) during the cell DTX non-active time period.

Solution 2: introduce a new HARQ feedback, which can be sent with a delay during the cell DRX on-duration.

Case D: the network sends the DCI to activate or deactivate the CG/SPS during the cell DTX on-duration, but the UE cannot send an acknowledgement-media access control-control element (ACK MAC CE) during the cell DRX non-active time period. In this case, the following possible solutions can be adopted.

Solution 1: introduce a new exceptional UE behavior to ensure that when the UE receives an indication signaling (such as the DCI) for activating or activating the CG/SPS, the UE sends a PUSCH carrying the ACK MAC CE during the cell DTX non-active time period.

Case E: the network sends the DCI to trigger aperiodic channel state information (A-CSI) during the cell DTX on-duration, but the UE cannot send channel state information (CSI) during the cell DRX non-active time period. In this case, the following possible solutions can be adopted.

Solution 1: introduce a new exceptional UE behavior to ensure that when receiving a DCI trigger signaling, the UE can send the A-CSI during the cell DRX non-active time period.

Solution 2: introduce a new A-CSI reporting timeline to delay the cell DRX on-duration.

In Embodiment 4, the DTX/DRX configuration of the first cell can be activated or deactivated through signaling, thereby achieving greater flexibility.

### Embodiment 5

Embodiment 5 intends to specify a method for a terminal device to execute cell handover (HO) in an energy-saving scenario. In other words, Embodiment 5 intends to specify an UE behavior with different execution condition configurations of conditional handover (CHO).

In Embodiment 5, for the definition of a first cell, reference can be made to the above introduction of the first cell, which is not repeated herein for the sake of brevity.

FIG. 7 is a schematic flow diagram of a wireless communication method provided in yet another embodiment of the disclosure. The method illustrated in FIG. 7 may include steps S710 and S720, which are introduced below.

Step S710: the terminal device receives first handover configuration sent by the first cell.

Step S720: the terminal device executes cell handover according to the first handover configuration. In other words, the terminal device determines to handover from a source cell to a target cell according to the first handover configuration.

The first handover configuration may include one or more handover conditions (also known as handover execution conditions). The one or more handover conditions may be used for the terminal device to determine whether to execute cell handover (such as the CHO).

The first handover configuration may include one or more handover conditions. Optionally, different handover conditions correspond to the same situation or are executed in the same state. For example, the handover conditions correspond to NES or an NES state, or the handover conditions are executed in NES or the NES state. Alternatively, the handover conditions correspond to non-network energy saving (non-NES) or a non-NES state, or the handover conditions are executed in non-NES or the non-NES state.

The first handover configuration may include one or more handover conditions. Optionally, different handover conditions correspond to different situations or are executed in different states. For example, some handover conditions correspond to NES or the NES state, or are executed in NES or the NES state, while other handover conditions correspond to non-NES or the non-NES state, or are executed in non-NES or the non-NES state.

Optionally, in a first situation where different handover conditions correspond to the same situation or are executed in the same state, when there are multiple handover conditions, if all of the multiple handover conditions are met, a corresponding target candidate cell or a triggered cell is determined (or considered), or execution of the CHO is determined. Optionally, in the first situation, when there is one handover condition, if the one handover condition is met, the corresponding target candidate cell or the triggered cell is determined, or execution of the CHO is determined. Optionally, different handover conditions can correspond to the source cell or the target candidate cell.

Optionally, in a second situation where different handover conditions correspond to different situations or are executed in different states, when there are multiple handover conditions, if all of the multiple handover conditions are met or at least one of them is met, the corresponding target candidate cell or the triggered cell is determined, or execution of the CHO is determined. Optionally, in the second situation, when there is one handover condition, if the one handover condition is met, the corresponding target candidate cell or the triggered cell is determined, or execution of the CHO is determined. Optionally, different handover conditions can correspond to the source cell or the target candidate cell.

In some embodiments, the one or more handover conditions may be associated with various types of information. For example, the one or more handover conditions may be associated with one or more of the following information: a channel quality of a cell, a state of a cell, energy-saving time information of a cell, etc.

Exemplarily, the aforementioned one or more handover conditions may include one or more of: a handover condition related to channel quality; a time-based handover condition; a handover condition related to energy-saving state, state transition, or state indication of the source cell; and a handover condition related to energy-saving state, state transition, or state indication of the target cell. It can be noted that "the handover condition related to energy-saving state, state transition, or state indication of the source cell or the target cell" mentioned below can be understood as "the handover condition related to energy-saving state, state transition, or state indication of the source cell; or the handover condition related to energy-saving state, state transition, or state indication of the target cell".

The handover condition related to channel quality is not limited in embodiments of the disclosure. For example, the handover condition related to channel quality may include one or more trigger events, and the trigger events may include, for instance, one or more of Event A3, Event A4, and Event A5. In other words, the handover condition related to channel quality may include one or more of Event A3, Event A4, and Event A5. Of course, the handover condition related to channel quality may further include other events, such as Event A1, Event A2, etc. The embodiments of the disclosure are not limited in this regard.

In some embodiments, the aforementioned time-based handover condition may include: a handover condition related to a time when the first cell enters the energy-saving state, activates the energy-saving technology, or is turned off.

In some embodiments, the aforementioned time-based handover condition may include: a handover condition related to a time when the source cell or the target cell enters the energy-saving state, activates the energy-saving technology, or is turned off.

In some embodiments, the aforementioned handover condition related to energy-saving state, state transition, or state indication of the source cell or the target cell may include: a handover condition related to the first cell entering the energy-saving state, activating the energy-saving technology, being in a cell off state, or state transition; or, a handover condition which is indication information indicating to the first cell to enter the energy-saving state, activate the energy-saving technology, or turn off.

In some embodiments, when a second condition is met, the terminal device can perform one or more of: executing cell handover, determining that a handover event is satisfied, determining a target candidate cell meeting the handover condition as a triggered cell. The second condition includes: when the handover condition includes one condition, the one handover condition is met; or, when the handover condition includes multiple conditions, all of the multiple handover conditions are met.

In some embodiments, if the aforementioned handover condition includes one condition, when the one handover condition is met, the terminal device may perform one or more of: executing cell handover, determining that the handover event is met, and determining a target candidate cell meeting the one handover condition as the triggered cell (i.e., the target cell). In some embodiments, the triggered cell can be understood as a cell that the UE selects to handover to from one or more target candidate cells.

In some embodiments, if the aforementioned handover condition includes multiple conditions, when all of the multiple handover conditions are met, the terminal device may perform one or more of: executing cell handover, determining that the handover event is met, and determining a target candidate cell meeting the multiple handover conditions as the triggered cell (i.e., the target cell).

In some embodiments, the aforementioned handover condition(s) may be for the same target candidate cell. For example, when the aforementioned handover condition includes multiple conditions, the multiple handover conditions are for the same target candidate cell. In this case, when all of the multiple handover conditions are met, the terminal device may execute cell handover, or may determine that the handover event is met, or may determine the target candidate cell meeting the multiple handover conditions as the triggered cell.

In some embodiments, the aforementioned handover condition may be for the same target candidate cell and the source cell. For example, when the aforementioned handover condition includes multiple conditions, some of the multiple handover conditions are conditions for the source cell, and some of the multiple handover conditions are for the same target candidate cell. In this case, when all of the multiple handover conditions are met, the terminal device may execute cell handover, determine that the handover event is satisfied, or determine the target candidate cell meeting the multiple handover conditions as the triggered cell.

In some embodiments, each of the aforementioned one or more handover conditions may be configured or executed alone. In other words, different handover conditions may be configured or executed alone. For example, the aforementioned one or more handover conditions include a handover condition related to channel quality and a time-based handover condition, and the handover condition related to channel quality and the time-based handover condition may be configured or executed alone.

In some embodiments, at least two of the aforementioned multiple handover conditions are configured or executed together. In other words, different handover conditions can be configured or executed together. For example, the aforementioned multiple handover conditions include the handover condition related to channel quality and the time-based handover condition, and the handover condition related to channel quality and the time-based handover condition can be configured or executed together.

In some embodiments, the first handover configuration may configure one of the following handover conditions: the handover condition related to channel quality, the time-based handover condition, and the handover condition related to energy-saving state, state transition, or state indication of the source cell or the target cell.

In some embodiments, the first handover configuration may configure at least two of the following handover conditions, in other words, one of the following handover conditions needs to be configured or executed simultaneously with other handover conditions: the time-based handover condition, and the handover condition related to energy-saving state, state transition, or state indication of the source cell or the target cell. As an example, the time-based handover condition and the handover condition related to channel quality may be configured or executed simultaneously. As another example, the handover condition related to energy-saving state, state transition, or state indication of the source cell or the target cell and the handover condition related to channel quality may be configured or executed simultaneously. As yet another example, the time-based handover condition, the handover condition related to energy-saving state, state transition, or state indication of the source cell or the target cell, and the handover condition related to channel quality may be configured or executed simultaneously. As an example, the time-based handover condition cannot be configured or executed alone. As an example, the handover condition related to channel quality can be configured or executed alone. As an example, the handover condition related to energy-saving state, state transition, or state indication of the source cell or the target cell cannot be configured or executed alone.

In some embodiments, in the case where the one or more handover conditions include the handover condition related to channel quality and the time-based handover condition, if the handover condition related to channel quality and the time-based handover condition are contained in the same handover configuration, the terminal device can execute cell handover when both the handover condition related to channel quality and the time-based handover condition are met. For example, the handover configuration received by the terminal device includes the first handover configuration, and the handover condition contained in the first handover configuration includes the handover condition related to channel quality and the time-based handover condition. In this case, the terminal device can execute cell handover when both the handover condition related to channel quality and the time-based handover condition are met.

In some embodiments, in the case where the one or more handover conditions include the handover condition related to channel quality and the time-based handover condition, if the handover condition related to channel quality and the time-based handover condition are contained in different handover configurations, the terminal device can execute cell handover when the handover condition related to channel quality is met. For example, the handover configuration received by the terminal device includes the first handover configuration and a second handover configuration. The handover condition contained in the first handover configuration includes the handover condition related to channel quality. The handover condition contained in the second handover configuration includes the time-based handover condition. In this case, the terminal device may execute cell handover when the handover condition related to channel quality is met, that is, the terminal device can execute cell handover according to the first handover configuration.

In some embodiments, in the case where the one or more handover conditions include the handover condition related to channel quality and the handover condition related to energy-saving state, state transition, or state indication of the source cell or the target cell, if the handover condition related to channel quality and the handover condition related to energy-saving state, state transition, or state indication of the source cell or the target cell are contained in the same handover configuration, the terminal device can execute cell handover when the handover condition related to channel quality is met.

In some embodiments, in the case where the one or more handover conditions include the handover condition related to channel quality and the time-based handover condition, if the handover condition related to channel quality and the time-based handover condition are contained in different handover configurations, the terminal device can execute cell handover when the time-based handover condition is met. For example, the handover configuration received by the terminal device includes the first handover configuration and the second handover configuration. The handover condition contained in the first handover configuration includes the handover condition related to channel quality. The handover condition contained in the second handover configuration includes the time-based handover condition. In this case, the terminal device may execute cell handover when the time-based handover condition is met, that is, the terminal device can execute cell handover according to the second handover configuration.

In some embodiments, in the case where the one or more handover conditions include the handover condition related to channel quality and the handover condition related to energy-saving state, state transition, or state indication of the source cell or the target cell, if the handover condition related to channel quality and the handover condition related to energy-saving state, state transition, or state indication of the source cell or the target cell are contained in the same handover configuration, the terminal device can execute cell handover when both the handover condition related to channel quality and the handover condition related to energy-saving state, state transition, or state indication of the source cell or the target cell are met. For example, the handover configuration received by the terminal device includes the first handover configuration. The handover condition contained in the first handover configuration includes the handover condition related to channel quality and the handover condition related to energy-saving state, state transition, or state indication of the source cell or the target cell. In this case, the terminal device can execute cell handover when both the handover condition related to channel quality and the handover condition related to energy-saving state, state transition, or state indication of the source cell or the target cell are met.

In some embodiments, in the case where the one or more handover conditions include the handover condition related to channel quality and the handover condition related to energy-saving state, state transition, or state indication of the source cell or the target cell, if the handover condition related to channel quality and the handover condition related to energy-saving state, state transition, or state indication of the source cell or the target cell are contained in different handover configurations, the terminal device can execute cell handover when the handover condition related to channel quality is met. For example, the handover configuration received by the terminal device includes the first handover configuration and the second handover configuration. The handover condition contained in the first handover configuration includes the handover condition related to channel quality. The handover condition contained in the second handover configuration includes the handover condition related to energy-saving state, state transition, or state indication of the source cell or the target cell. In this case, the terminal device can execute cell handover when the handover condition related to channel quality is met, that is, the terminal device may execute cell handover according to the first handover configuration.

In some embodiments, in the case where the one or more handover conditions include the handover condition related to channel quality and the handover condition related to energy-saving state, state transition, or state indication of the source cell or the target cell, if the handover condition related to channel quality and the time-based handover condition are contained in different handover configurations, the terminal device can execute cell handover when the handover condition related to energy-saving state, state transition, or state indication of the source cell or the target cell is met. For example, the handover configuration received by the terminal device includes the first handover configuration and the second handover configuration. The handover condition contained in the first handover configuration includes the handover condition related to channel quality. The handover condition contained in the second handover configuration includes the handover condition related to energy-saving state, state transition, or state indication of the source cell or the target cell. In this case, the terminal device can execute cell handover when the handover condition related to energy-saving state, state transition, or state indication of the source cell or the target cell is met, that is, the terminal device may execute cell handover according to the second handover configuration.

In some embodiments, in the case where the one or more handover conditions include the handover condition related to channel quality and the handover condition related to energy-saving state, state transition, or state indication of the source cell or the target cell, if the handover condition related to channel quality and the handover condition related to energy-saving state, state transition, or state indication of the source cell or the target cell are contained in the same handover configuration, the terminal device can execute cell handover when the handover condition related to channel quality is met.

In some embodiments, if the one or more handover conditions include the handover condition related to channel quality, the terminal device can execute cell handover when the handover condition related to channel quality is met. For example, when the one or more handover conditions include the handover condition related to channel quality and the time-based handover condition, the terminal device can execute cell handover when the handover condition related to channel quality is met.

In some embodiments, if the one or more handover conditions include the time-based handover condition, the terminal device can execute cell handover when the time-based handover condition is met. For example, when the one or more handover conditions include the handover condition related to channel quality and the time-based handover condition, the terminal device can execute cell handover when the time-based handover condition is met.

In some embodiments, if the one or more handover conditions include the handover condition related to energy-saving state, state transition, or state indication of the source cell or the target cell, the terminal device can execute cell handover when the handover condition related to energy-saving state, state transition, or state indication of the source cell or the target is met. For example, when the one or more handover conditions include the handover condition related to channel quality and the handover condition related to energy-saving state, state transition, or state indication of the source cell or the target cell, the terminal device can execute cell handover when the handover condition related to energy-saving state, state transition, or state indication of the source cell or the target cell is met.

Embodiment 5 specifies how the terminal device executes the CHO in the energy-saving scenario, which is conducive to ensuring normal communication between the terminal device and the energy-saving cell.

### Embodiment 6

Embodiment 6 intends to specify how a legacy terminal device and an energy-saving terminal device respectively accesses a first cell.

In Embodiment 6, for the definition of the first cell, reference can be made to the above introduction of the first cell, which is not repeated herein for the sake of brevity.

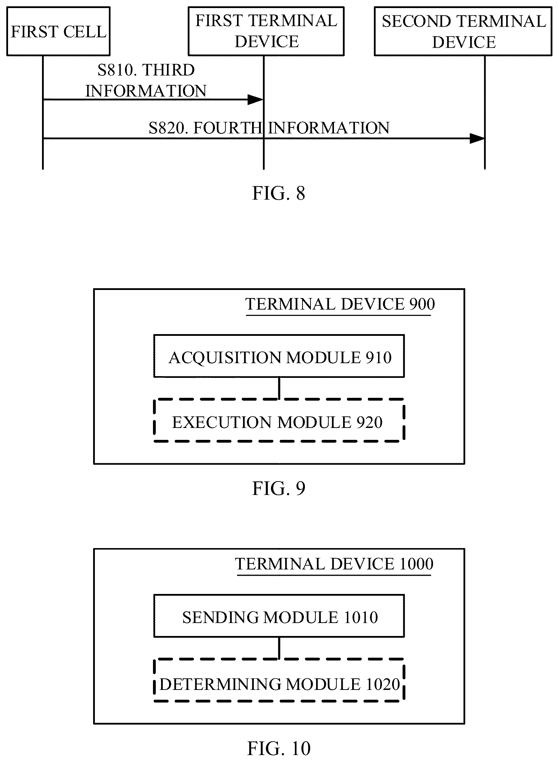

FIG. 8 is a schematic flow diagram of a wireless communication method provided in yet another embodiment of the disclosure. The method illustrated in FIG. 8 is introduced from a perspective of interaction between a first terminal device, a second terminal device and a first cell. The method illustrated in FIG. 8 may include step S810 and step S820.

Step S810: the first terminal device acquires third information of the first cell. For example, the first cell sends the third information, or the first cell sends the third information to the first terminal device. However, the disclosure is not limited to this regard. For example, the first terminal device can also acquire the third information of the first cell from other cells.

Step S820: the second terminal device acquires fourth information of the first cell. For example, the first cell sends the fourth information, or the first cell sends the fourth information to the second terminal device. However, the disclosure is not limited to this regard. For example, the second terminal device can also acquire the fourth information of the first cell from other cells.

In some embodiments, the aforementioned first terminal device is different from the second terminal device.

In some embodiments, the aforementioned first terminal device may include at least one of: a terminal device without an energy-saving capability, a terminal device not using an energy-saving technology, a terminal device of a non-specific version, a terminal device unable to use one or more energy-saving technologies, and a terminal device barred from accessing the first cell, or with low priority in accessing, selecting or reselecting the first cell.

It can be noted that the "priority" or "low priority" mentioned in the embodiments of the disclosure refers to a relative priority between the first terminal device and the second terminal device. For example, the first terminal device with low priority in accessing the first cell can be understood as the first terminal device having a lower priority to access the first cell compared with the second terminal device.

In some embodiments, the aforementioned second terminal device may include at least one of: a terminal device with the energy-saving capability, a terminal device using the energy-saving technology, a terminal device of a specific version, a terminal device capable of using one or more energy-saving technologies, and a terminal device allowed to access the first cell, or with priority in accessing, selecting or reselecting the first cell.

In some embodiments, the aforementioned first cell may include at least one of: a cell that gives priority to or allows the second terminal device to access, select, or reselect; a cell that gives low priority to or does not allow the first terminal device to access, select, or reselect; a cell in an energy-saving state; a cell in an off state; a cell using/activating the energy-saving technology; a cell with the energy-saving capability; a cell where an energy-saving terminal device camps on, selects, or accesses; a cell serving the energy-saving terminal device; and a cell using a cell DTX/DRX technology.

An execution order of step S810 and step S820 is not limited in embodiments of the disclosure. For example, step S810 can be executed before step S820, after step S820, or simultaneously with step S820, etc.

The third information and the fourth information are introduced respectively below.

In some embodiments, the third information can be used to indicate relevant information of the first cell, for example, whether the first cell is barred, whether the first cell is a candidate cell, or whether the first cell is a reserved cell, etc.

In some embodiments, the third information can be used to determine one or more of: whether the first terminal device can access/select/reselect the first cell, whether the second terminal device can access/select/reselect the first cell, whether the first cell is barred, whether the first cell is the candidate cell, and whether the first cell is the reserved cell.

As an example, the third information includes indication information indicating whether the terminal device is barred. If the third information is used to indicate that the terminal device is barred, the first terminal device cannot access the first cell. If the third information is used to indicate that the terminal device is not barred, the first terminal device and/or the second terminal device can access the first cell.

In some embodiments, the third information can be carried in SI of the cell. For example, the third information may be carried in an SIB1 or an MIB. As a specific example, the third information can be carried in an SIB1 or an MIB of the first cell.

In some embodiments, the third information can be cell-reserved information or cell-barred information; and/or, the third information is information for determining whether a cell is the reserved cell or information for determining whether the cell is a barred cell. For example, the third information may be a *cellReservedForFutureUse* IE, a *cellReservedForOperaterUse* IE, a *cellReservedForOtherUse* IE, or a *cellBarred* IE.

Optionally, if the *cellReservedForOperaterUse* IE or the *cellReservedForOtherUse* IE is used, the first cell further indicates, whether a first terminal device supporting a specific function (such as a non-public network (NPN)) or a specific access level can access, camp on, select, or reselect the first cell, and/or, whether a first terminal device not supporting the specific function (such as the NPN) or the specific access level can access, camp on, select, or reselect the first cell.

In some embodiments, the fourth information can be used to indicate the relevant information of the first cell, for example, whether the first cell is barred, whether the first cell is the candidate cell, whether the first cell is a suitable cell or an acceptable cell, whether the first cell is the reserved cell, etc.

In some embodiments, the fourth information can be used for the second terminal device to determine one or more of: whether the second terminal device can access/select/reselect the first cell, whether the first cell is barred, whether the first cell is the candidate cell, whether the first cell is the suitable cell or the acceptable cell, and whether the first cell is the reserved cell.

In some embodiments, the second terminal device processes the third information as one of the following: acquiring the third information, determining that the third information indicates reservation or barring, and ignoring the third information.

In some embodiments, the fourth information is acquired by the second terminal device in one or more of the following situations: the second terminal device acquires the third information, the second terminal device determines that the third information indicates reservation or barring, and the second terminal device ignores the third information.

As an example, after the second terminal device acquires the third information, the second terminal device can further acquire the fourth information to acquire the relevant information of the first cell. As another example, if the second terminal device fails to acquire the third information, or ignores the third information, or ignores the third information after acquiring the third information, the terminal device can acquire the fourth information to acquire the relevant information of the first cell. As yet another example, if the second terminal device determines that the third information being the *cellReservedForFutureUse* IE, the *cellReservedForOperaterUse* IE, the *cellReservedForOtherUse* IE, or the *cellBarred* IE indicates barred or reserved, the second terminal device can acquire the fourth information to acquire the relevant information of the first cell.

In some embodiments, the fourth information can be carried in the SI of the cell. For example, the fourth information can be carried in SIB1 or the MIB. As a specific example, the fourth information may be carried in SIB1 or the MIB of the first cell.

In some embodiments, the fourth information can be indication information for a specific terminal device, rather than indication information for all terminal devices.

In some embodiments, the fourth information can be indication information dedicated for some terminal devices.

In some embodiments, the fourth information can be indication information for the second terminal device.

In some embodiments, the fourth information can be indication information dedicated for at least one of the following types of terminal devices: a terminal device with an energy-saving capability; a terminal device using an energy-saving technology; a terminal device of a specific version; a terminal device capable of using one or more energy-saving technologies; a terminal device allowed to access, access with priority, select, or reselect the first cell; etc.

To facilitate understanding, several specific examples of Embodiment 6 are provided below.

For example, cell-barred information (cellbarred) can be used to control whether the first terminal device can access the first cell. Alternatively, the *cellReservedForFutureUse* IE can also be used to control whether the first terminal device can access the first cell. Correspondingly, a legacy UE or an NES-capable UE determines whether it is possible to camp on, select, or reselect the cell, or determines whether the cell is the candidate cell according to cellbarred or the *cellReservedForFutureUse* IE. Optionally, if the indication is "true", or indicates barred or reserved, the legacy UE or the non-NES-capable UE cannot camp on, select, or reselect the cell, and/or, determine the cell as the reserved cell. Otherwise (if the indication is "false", or indicates not barred or not reserved), the legacy UE or the non-NES-capable UE can camp on, select, or reselect the cell, or determine the cell as the suitable cell, the acceptable cell, or an unreserved cell.

For example, for the legacy UE or the non-NES-capable UE, the following behaviors can be performed: when a cell state is indicated as "true" or for future use, the terminal device can determine the cell state of the cell as "reserved" or determine the cell as the reserved cell.

For example, the third information and the fourth information can be used as follows. Assume that the third information is cellbarred or *cellReservedForFutureUse,* and the fourth information is *cellBarredNES.* However, the embodiments of the disclosure are not limited to this regard. For example, the third information can also be *cellReservedForOperatorUse* or *cellReservedForOtherUse.*

Optionally, if cellbarred or *cellReservedForFutureUse* indicates "barred" or "true" or "reserved", the legacy UE or the non-NES-capable UE is barred from accessing the cell. Otherwise, the legacy UE or the non-NES-capable UE can access the cell.

Optionally, if cellbarred or *cellReservedForFutureUse* indicates "barred" or "true" or "reserved", and *cellBarredNES* indicates "not barred" in SIB1, the NES-capable UE can access the cell.

Optionally, if cellbarred or *cellReservedForFutureUse* indicates "barred" or "true" or "reserved", and *cellBarredNES* indicates "barred" in SIB1, the NES-capable UE cannot access the cell.

Optionally, if cellbarred or *cellReservedForFutureUse* indicates "barred" or "true" or "reserved", and *cellBarredNES* does not exist in SIB1, the NES-capable UE cannot access the cell. Alternatively, if the cellbarred or the *cellReservedForFutureUse* indicates "barred" or "true" or "reserved", and the *cellBarredNES* exists in SIB1, the NES-capable UE can access the cell.

For another example, the third information and the fourth information can be used as follows. Assume that the third information is cellbarred or *cellReservedForFutureUse,* and the fourth information is *cellBarredNES.* However, the embodiments of the disclosure are not limited in this regard. For example, the third information can also be *cellReservedForOperatorUse* or *cellReservedForOtherUse.*

Optionally, if cellbarred or *cellReservedForFutureUse* indicates "barred" or "true" or "reserved", the legacy UE or the non-NES-capable UE are barred from accessing the cell. Otherwise, the legacy UE or non-NES-capable UE can access the cell.

Optionally, the NES-capable UE ignores cellbarred or *cellReservedForFutureUse.*

Optionally, if *cellBarredNES* indicates "not barred" in SIB1, the NES-capable UE can access the cell.

Optionally, if *cellBarredNES* indicates "barred" in SIB1, the NES-capable UE cannot access the cell.

Optionally, if *cellBarredNES* does not exist in SIB1, the NES-capable UE cannot access the cell. Optionally, if *cellBarredNES* does not exist in SIB1, the NES-capable UE can access the cell.

For yet another example, the third information and the fourth information can be used as follows. Assume that the third information is *cellReservedForOtherUse* and *cellReservedForFutureUse,* and the fourth information is *cellBarredNES* (1 bit is added in SIB1 for all UEs supporting NES capability). Possible UE behavior(s) is at least one of the following, where T represents "true" and F represents "false".

Behavior 1: if (*cellReservedForOtherUse*=F, *cellReservedForFutureUse*=F, *cellBarredNES*=F), all UEs can camp.

Behavior 2: if (*cellReservedForOtherUse*=T, *cellReservedForFutureUse*=F, *cellBarredNES*=F)*,* a UE supporting NPN capability and a UE supporting NES capability (regardless of whether supporting NPN capability) can camp.

Behavior 3: if (*cellReservedForOtherUse*=T, *cellReservedForFutureUse*=T, *cellBarredNES*=F)*,* the UE supporting NES capability (regardless of whether supporting NPN capability) can camp.

Behavior 4: if (*cellReservedForOtherUse*=T, *cellReservedForFutureUse*=T, *cellBarredNES*=T), all UEs are barred.

For yet another example, the third information and the fourth information can be used as follows. Assume that the third information is *cellReservedForOtherUse* and *cellReservedForFutureUse,* and the fourth information is two IEs in SIB1. The two identifiers (IDs) respectively correspond to a UE not supporting NES capability/ not supporting NPN capability (i.e., cellBarredNESnonNPNUE) and a UE supporting NES capability/supporting NPN capability (i.e., cellBarredNESNPNUE). Possible UE behavior(s) is at least one of the following, where T represents "true" and F represents "false".

Behavior 1: if (*cellReservedForOtherUse*=F, *cellReservedForFutureUse*=F, *cellBarredNESnonNPNUE*=F, *cellBarredNESNPNUE*=F), all UEs can camp.

Behavior 2: if (*cellReservedForOtherUse*=T, *cellReservedForFutureUse*=F, *cellBarredNESnonNPNUE*=F*, cellBarredNESNPNUE*=F)*,* the UE supporting NPN capability and the UE supporting NES capability (regardless of whether it supports NPN capability) can camp.

Behavior 3: if (*cellReservedForOtherUse*=T, *cellReservedForFutureUse*=T, *cellBarredNESnonNPNUE*=F, *cellBarredNESNPNUE*=F), the UE supporting NES capability can camp.

Behavior 4: if (*cellReservedForOtherUse*=T, *cellReservedForFutureUse*=T*, cellBarredNESnonNPNUE*=T, *cellBarredNESNPNUE*=F), the UE supporting NES capability or the UE supporting NPN capability can camp.

Behavior 5: if (*cellReservedForOtherUse*=T*, cellReservedForFutureUse*=T, *cellBarredNESnonNPNUE*=F, *cellBarredNESNPNUE*=T)*,* the UE supporting NES capability or the UE not supporting NPN capability can camp.

Behavior 6: if (*cellReservedForOtherUse*=T*, cellReservedForFutureUse*=T, *cellBarredNESnonNPNUE*=T, *cellBarredNESNPNUE*=T)*,* all UEs are barred.

In Embodiment 6, compared with the legacy UE, the embodiments of the disclosure additionally specify a method for the energy-saving terminal device to access the energy-saving cell, which is conducive for the energy-saving terminal device to access the energy-saving cell with priority.

To facilitate understanding, the technical solutions of the disclosure are introduced below with reference to several specific examples.

It can be noted that examples below can be used alone or in any combination, and the embodiments of the disclosure are not limited in this regard. For example, Example 1 can be used alone, or can be used in combination with Example 2 or Example 3, or can be used in combination with Example 7 and Example 8. Alternatively, Example 4 can be used alone, or can be used in combination with Example 5, or can be used in combination with Example 5, Example 6, and Example 7, etc. The examples below can further be used in combinations not listed herein, which is not repeated herein for the sake of brevity.

### Example 1: SIB-less Cell Operation Method

In Example 1, first information includes part or all of SIBs.

In Example 1, a first cell sends an SSB but does not send an SIB. Correspondingly, a terminal device behavior includes at least one of the following.

Behavior 1: the terminal device receives the SSB through the first cell or measures the SSB of the first cell.

Behavior 2: the terminal device determines whether to perform cell selection and/or cell reselection and/or camping on based on the SSB of the first cell (for example, determine whether R criterion/S criterion is met).

Behavior 3: the terminal device acquires SIB information of the first cell.

Optionally, the SIB information of the first cell includes at least all or part of the SIB information. For example, the SIB information of the first cell includes information of at least one of SIB1, SIB2, SIB3, SIB4, and SIB5. Alternatively, the SIB information of the first cell includes part or all of information of a specific SIB (such as SIB1).

Optionally, the SIB information of the first cell includes at least one of: slice information supported by the first cell, frequency information of the first cell, frequency priority information of the first cell, a parameter of the S criterion, a parameter of the R criterion, whether the first cell is barred, etc.

Optionally, the terminal device can acquire the SIB information of the first cell through other cells (such as an anchor cell). For example, other cells can carry or indicate the SIB information of the first cell, for instance, carrying or indicating the SIB information of the first cell through SI of other cells.

Optionally, the terminal device can acquire the SIB information of the first cell through the first cell.

As an example, for the first cell, the terminal device needs to acquire the SIB information (such as SIB1) of the first cell through request.

As an example, *si-BroadcastStatus* of the SIB information of the first cell is *notBroadcasting.* As an example, the SIB information of the first cell is optional. As an example, the SIB information of the first cell is broadcasted/indicated per request. Exemplarily, the aforementioned SIB information includes at least SIB1, and/or at least one of SIB2, SIB3, SIB4, and SIBS.

As an example, the terminal device may request the SIB information (such as SIB1) of the first cell through a first request message.

For example, the terminal device can send the first request message by using a pre-configured or pre-defined time-frequency resource. For example, the first request message can be sent through the first cell or can be sent in the first cell.

For example, the terminal device can send the first request message by using a preamble resource and/or a PRACH resource. In some embodiments, the preamble resource and/or PRACH resource correspond to a resource of the first cell. In some embodiments, the preamble resource and/or PRACH resource are resources corresponding to the SIB information or a specific SIB/SI (such as SIB1). In some embodiments, the preamble resource and/or PRACH resource are resources for requesting the SIB information or the specific SIB/SI (such as SIB1). In some embodiments, the preamble resource and/or the PRACH resource may be sent through other cells (such as the anchor cell). In some embodiments, the preamble resource and/or PRACH resource may be sent through SIB of other cells or a dedicated RRC message (such as an RRC release message).

As an example, the first request message may carry a value or an index of the SIB/SI requested, or carry a bitmap of the SIB/SI requested (e.g., the value of "1" indicates "request", and the value of "0" indicates "not request"; or vice versa).

As an example, when a first condition is met, the terminal device may send the first request message. The first condition is at least one of: the terminal device detects the SSB of the first cell, a channel quality of the first cell meets a threshold, the first cell meets the R criterion or the S criterion, the first cell is a cell for cell selection or cell reselection, the terminal device selects or reselects the first cell, the terminal device has data to-be-transmitted (e.g., a service request can be triggered), and a slice required by the terminal device matches/includes/is identical to a slice supported by the first cell.

As an example, the terminal device sends the first request message to the first cell to request the first cell to send the SIB information. For example, the terminal device is a terminal device in an idle state or an inactive state.

For example, the terminal device can request the SIB of the first cell by employing an existing message, an extended version of the existing message, or a newly defined RRC message.

For example, the terminal device can indicate requesting for the SIB in *requested-SI-List* of *RRCSystemInfoRequest.*

For example, an RACH resource for sending the first request message can be configured in *si-RequestConfig* or *si-RequestConfigSUL.*

For example, for the SIB requested, the first request message can be the same message or different messages. For example, the first request message can be sent through a specific time-frequency resource, or a pre-defined time-frequency resource or message. For another example, SIB1 can be sent through the specific time-frequency resource, or the pre-defined time-frequency resource or message, while other SIBs can be requested through an on-demand procedure.

For example, the terminal device can carry the SIB of the first cell requested through *requested-SI-List* or an extended version of *requested-SI-List.* In some embodiments, the terminal device may include at least SIB1 in *requested-SI-List* or the extended version of *requested-SI-List.* In some embodiments, the terminal device may request the SIB information of the first cell through *RRCSystemInfoRequest.*

For example, the terminal device triggers a random access procedure and request the SIB of the first cell by using a preamble and a PRACH resource corresponding to *si-RequestConfig or si-RequestConfigSUL* of SI required. *si-RequestConfig* or *si-RequestConfigSUL* is carried in *SI-SchedulingInfo.* In some embodiments, *SI-SchedulingInfo* also carries *schedulingInfoList,* with indicated SI corresponds to *SchedulingInfo* that specifies corresponding SIB/SIB-TypInfo (including the type, such as a type of the SIB). The SI in the *si-RequestConfig* or the *si-RequestConfigSUL* (e.g., SI corresponding to *SI-RequestResources*) sequentially corresponds to SIs in the *schedulingInfoList* in *SI-SchedulingInfo.* In some embodiments, the type of the SIB can be extended to SIB1.

As an example, the terminal device can acquire the SIB information through a dedicated RRC. For example, the terminal device is a terminal device in a connected state, or the terminal device is a terminal device handed over from other cells.

For example, the terminal device can acquire the SIB of the first cell through an RRC re-configuration message.

For example, when the channel quality of the first cell meets the threshold, or based on a measurement report, the serving cell of the terminal device can handover the terminal device to the first cell.

As an example, the terminal device can send the first request message to the first cell to request the first cell to send the SIB information of the first cell. For instance, the terminal device is a terminal device in the connected state.

For example, the terminal device can carry the SIB of the first cell requested through *requestedSIB-List* or an extended version of *requestedSIB-List.* In some embodiments, the terminal device can include at least one of SIB1, SIB2, SIB3, SIB4, SIB5, etc. in *requestedSIB-List* or the extended version of *requestedSIB-List.* In some embodiments, the terminal device can request the SIB information of the first cell through *DedicatedSIBRequest.*

Optionally, the terminal device may determine whether it is possible to camp on, reselect, or select the first cell (e.g., whether the first cell is barred, etc., e.g., whether the slice supported by the first cell matches/includes/is identical to the slice required by the terminal device) according to the SSB and/or the SIB of the first cell.

Optionally, for cell selection, the terminal device can determine whether to perform selection for the first cell or whether to select the first cell based on the SSB.

As an example, the terminal device can determine whether to perform cell selection or select a corresponding first cell based on a SSB measurement result (such as RSRP/RSRQ/RSSI, etc.).

As an example, the terminal device can determine whether to perform cell selection or select the first cell, based on a measurement result of the first cell and a measurement result of other cells, and/or, whether the terminal device has data to-be-transmitted (such as according to data information to-be-transmitted of a logical channel (LCH) or having service request) or whether an amount of data to-be-transmitted is greater than the threshold, and/or, a support for the slice by the cell (e.g., whether a slice supported by other cells/an SSB-less cell matches/includes/is identical to the slice required by the terminal device). In some embodiments, the terminal device can access the SSB-less cell when the measurement result of the first cell meets the S criterion or a cell selection criterion.

As an example, when the channel quality of the first cell is greater than the threshold, the terminal device can send the first request message. Furthermore, the terminal device can request whether to select the first cell.

Optionally, for the cell reselection, the terminal device can determine whether to perform reselection for the first cell or whether to reselect the first cell based on the SSB.

As an example, the terminal device can determine whether to perform cell reselection or reselect a corresponding first cell based on the measurement results of the first cell (such as RSRP/RSRQ/RSSI, etc.).

As an example, the terminal device can determine whether to perform cell reselection or reselect the first cell, based on the measurement result of the first cell and the measurement result of other cells, and/or, whether the terminal device has data to-be-transmitted (such as according to the data information to-be-transmitted of the LCH or having service request) or whether the amount of data to-be-transmitted is greater than the threshold, and/or, the support of the cell for the slice (e.g., whether the slice supported by other cells/SSB-less cells matches/includes/is identical to the slice required by the terminal device). In some embodiments, the terminal device can access the first cell when the measurement result of the first cell meet the R criterion and/or S criterion or the cell reselection criterion.

As an example, when the channel quality of the first cell is greater than the threshold, the terminal device can send the first request message. Furthermore, the terminal device can request whether to reselect the first cell.

Behavior 4: the terminal device can finally determine whether it is possible to camp on the first cell, or whether it is possible to select or reselect the first cell, or to perform a final check based on the SIB information of the first cell.

Behavior 5: the terminal device camps on the first cell; or, after the terminal device acquires the SIB of the first cell, the terminal device camps on the SSB-less cell or determines whether to camp on the SSB-less cell.

Behavior 6: the terminal device monitors paging from the first cell. Optionally, configuration for paging monitoring can be acquired from the SIB (such as SIB1) of the first cell. For example, after the terminal device acquires the SIB information of the first cell or sends the first request message, the terminal device can monitor the paging from the first cell.

Behavior 7: the terminal device can acquire other SIBs from the first cell, and/or, acquire updated SI, and/or, acquire RACH configuration. Optionally, other SIBs of the first cell (such as SIB2, SIB3, SIB4, SIB5, etc.) and/or the RACH configuration can be acquired from the SIB of the first cell (such as SIB1). For example, after the terminal device acquires the SIB information (such as SIB1) of the first cell or sends the first request message, the terminal device can acquire other SIBs from the first cell, and/or, can acquire the updated SI, and/or, can acquire the RACH configuration.

Behavior 8: the terminal device determines whether to perform RACH procedure in the first cell. For example, when the first cell is a cell used for camping on/cell selection/cell reselection, and/or when the channel quality of the first cell is greater than the threshold, or when the terminal device has data to-be-transmitted (such as according to data information to-be-transmitted of the LCH or having service request), or when the amount of data to-be-transmitted by the terminal device is greater than or equal to the threshold, or when the slice supported by the SSB-less cell matches the slice required by the terminal device (such as being the same or being in an inclusive relationship), the terminal device can initiate the RACH procedure or access the first cell.

Behavior 9: the terminal device receives PDCCH from the first cell, and/or, performs transmission with the first cell. Optionally, when the first cell is a cell used for camping on/cell selection/cell reselection, or, when the cell used for camping on/cell selection/cell reselection is a cell that the terminal device is currently camping on/selecting/reselecting, or, when a terminal device (e.g., previously being in other cells or the anchor cell) is handed over to the first cell, the terminal device can receive the PDCCH from the first cell, and/or, can perform transmission with the first cell.

Behavior 10: the first cell sends the paging. Correspondingly, the terminal device receives the paging from the first cell. Alternatively, if the terminal device acquires the SIB of the first cell, the terminal device can receive the paging from the first cell. Optionally, when there is paging, a base station of the first cell can send the SIB information of the first cell, or a CN corresponding to the first cell can indicate to the first cell to send the SIB information of the first cell.

Optionally, a paging occasion can be a legacy occasion.

Optionally, the first cell can send the paging by using specific configuration or occasion. For example, the paging occasion can appear periodically (for instance, within X ms, the terminal device can monitor the paging within first m ms and not monitor the paging within the last (X-m) ms, that is, there is no paging occasion within the last (X-m) ms). Or, the paging occasion follows an on/off pattern. Or, the terminal device can monitor at all paging occasions, that is, a time when the terminal device monitors the paging is independent of an UE ID.

To facilitate understanding, several specific implementations of Example 1 are provided below.

For example, the first cell sends the SSB but does not send the SIB (e.g., including at least SIB1). In this case, the terminal device can detect the SSB to synchronize with the first cell. In some embodiments, the terminal device can send a UL-WUS to request the SIB (such as SIB1) of the first cell to acquire monitoring information of a paging message. Furthermore, the terminal device can monitor the paging message according to the monitoring information.

For another example, the first cell sends the SSB but does not send the SIB (e.g., the SIB including at least SIB1). In this case, the terminal device can detect the SSB to synchronize with the first cell. In some embodiments, when the first cell sends the paging message, the first cell can send the SIB (such as SIB1) so that the terminal device can acquire the monitoring information of the paging message. Furthermore, the terminal device can monitor the paging message according to the monitoring information.

For yet another example, the first cell sends the SSB but does not send the SIB (e.g., including at least SIB1). In this case, the terminal device can detect the SSB to determine whether it is possible to select or reselect the first cell. If a condition for cell selection or reselection (such as the S criterion/ R criterion) is met, the terminal device can send the UL-WUS signal to the first cell to request the SIB (such as SIB1) of the first cell. Then, the first cell sends the SIB information. The terminal device performs the final check or determines whether to finally reselect or select the first cell according to MIB/SIB information of the first cell (e.g., the cell is not barred, or the cell supports the slice required by the terminal device). In some embodiments, if the terminal device needs to enter the connected state, the terminal device can acquire the RACH configuration according to the SIB information (such as SIB1) of the first cell, and perform RACH in the first cell to access the first cell.

For yet another example, the first cell sends the SSB but does not send the SIB (e.g., the SIB including at least SIB1). In this case, the terminal device can detect the SSB to determine whether it is possible to select or reselect the first cell. If the condition for cell selection or reselection (e.g., the S criterion/R criterion) is met, the terminal device acquires the SIB information of the first cell from a second cell (such as the anchor cell). Optionally, before determining whether the R criterion/S criterion is met or after detecting the SSB of the first cell, the terminal device can also acquire the SIB information of the first cell. Then, the terminal device can perform the final check or determine whether to finally reselect or select the first cell according to the MIB/SIB information of the first cell (e.g., the cell is not barred, or the cell supports the slice required by the terminal device). In some embodiments, if the terminal device needs to enter the connected state, the terminal device can acquire the RACH configuration according to the SIB information (such as SIB1) of the first cell, and perform RACH in the first cell to access the first cell.

For yet another example, the first cell sends the SSB but does not send the SIB (e.g., including at least SIB1). If the terminal device is handed over to the first cell, the terminal device can acquire the SIB of the first cell through the dedicated RRC message. When necessary, the terminal device can acquire the RACH configuration of the first cell according to the SIB (such as SIB1) of the first cell, and perform RACH in the first cell.

### Example 2: Handling of First Message Failure

The method in Example 2 may include at least one of the following steps.

Step 1: a terminal device sends a first message. The first message may be used to request a first cell to perform state transition, or to send at least one of an SSB/an SIB/paging, or to send part or all common signals, or to indicate that the terminal device has a requirement for data transmission/network access.

Optionally, the first cell is an energy-saving cell, or a cell in an energy-saving state, or a cell in an off state, or a cell using/activating an energy-saving technology (such as a cell configuring or activating cell DTX/DRX, and a cell using a frequency-domain energy-saving technology or an air-domain energy-saving technology).

Optionally, the first cell is an SSB-less cell (a cell at least not sending the SSB), or an SIB-less cell (for example, a cell sending the SSB but not sending part or all of SIBs or SIBs).

Optionally, the first cell is a cell that does not send a common signal.

Optionally, the terminal device is a terminal device in an idle state/an inactive state/a connected state.

Optionally, the first message may be sent to a network through a specific occasion, or by using a specific time-frequency resource or a pre-defined time-frequency resource or a specific signaling.

Step 2: the terminal device sends the first message. The first message can be transmitted repeatedly for N times.

Optionally, the value of "N" can be configured by the network, or be pre-configured, or be determined by the terminal device.

Step 3: when the first message is sent, if within a first duration, the terminal device does not receive a feedback for the first message, or the network does not perform state transition, or the first cell does not send at least one of the SSB/SIB/paging, or the first cell does not send part or all common signals, or the terminal device fails to acquire at least one of the SSB/SIB/paging, or the terminal device fails to acquire part or all common signals of the first cell, then the terminal device determines that the first cell is unavailable, or is barred, or is barred for a period of time (e.g., being barred for 300ms, or being barred until receiving a feedback, a signal, or a network transition from the network).

Optionally, the first duration corresponds to a first timer.

Optionally, the first timer may be started when or in a case of sending the first message.

Optionally, the first duration is pre-defined, or is configured by the network.

Optionally, within the first duration, the first message may be transmitted repeatedly for N times.

Optionally, if within the first duration, the terminal device fails to receive the feedback, the signal, or the network transition from the network, then the terminal device may resend the first message. For example, the terminal device may resend for M times. Optionally, each time the terminal device resends the first message, the terminal device may start a second timer.

Optionally, the first timer or the second timer can be used to determine whether the first cell is a cell used for camping on/cell selection/cell reselection, or to determine whether the first request is sent successfully, or to determine whether a network state transition is done, or to determine whether at least one of the SSB/SIB/paging of the first cell can be received, or to determine whether part or all common signals of the first cell can be received, or to determine whether the network access or an RACH procedure can be performed from the first cell.

To facilitate understanding, several specific implementations of Example 2 are provided below.

For example, the first cell does not send the SSB/SIB. In this case, the terminal device can send a UL-WUS to request the network to send the SSB/SIB (such as SIB1). Optionally, the terminal device can send the UL-WUS repeatedly for N times, where N can be 1 or greater than 1. If the terminal device fails to acquire the SSB/SIB (such as SIB1) of the first cell within a first duration, the terminal device cannot select/reselect/camp on the first cell, or the terminal device determines that the first cell is barred for 300s.

For another example, the first cell sends the SSB but does not send the SIB. In this case, the terminal device can send the UL-WUS to request the network to send the SIB (such as SIB1). Optionally, the terminal device can send the UL-WUS repeatedly for N times, where N can be 1 or greater than 1. If the terminal device fails to acquire the SSB/the SIB (such as SIB1) of the first cell within the first duration, the terminal device cannot select/reselect/camp on the first cell, or the terminal device determines that the first cell is barred for 300s.

For yet another example, the first cell is in an off state or an energy-saving state. In this case, the terminal device can send the UL-WUS to request the network to transition the state as to an active state or a non-energy-saving state. Optionally, the terminal device can send the UL-WUS repeatedly for N times, where N can be 1 or greater than 1. If the terminal device fails to acquire state transition of the first cell or a state transition indication within the first duration, the terminal device cannot select/reselect/camp on the first cell, or the terminal device determines that the first cell is barred for 300s, or delays transmission.

For yet another example, the first cell sends the SSB/SIB/paging message, but activates cell DTX/DRX. In a cell DTX/DRX non-active state, the terminal device can send the UL-WUS to request the network to deactivate cell DTX/DRX, or request the network to receive/send a signal (such as at least one of a CG/DG/PDCCH/PUCCH). Optionally, the terminal device can send the UL-WUS repeatedly for N times, where N can be 1 or greater than 1. If the terminal device does not receive an ACK from the first cell or a cell DTX/DRX deactivation indication within the first duration, the terminal device cannot select/reselect/camp on the first cell. Or, the terminal device determines that the first cell is barred for 300 seconds. Or, the terminal device delays the transmission (that is, following cell DTX/DRX configuration, transmission can be performed during the cell DTX/DRX active time period).

### Example 3: Processing of Reference Signal (such as PRS) in Energy Saving Scenario

The method in Example 3 may include at least one of the following steps.

Step 1: when a first cell is in an energy-saving state or in a cell DTX/DRX non-active time period, the first cell does not send a PRS. Correspondingly, a terminal device does not receive the PRS.

Step 2: the first cell or the terminal device interacts cell DTX/DRX configuration with an LMF. Then, according to the cell DTX/DRX configuration, the LMF can configure or adjust PRS configuration of one or more relevant cells.

Optionally, the LMF can send configured or adjusted PRS configuration to the terminal device.

Optionally, when the first cell is in the energy-saving state or in the cell DTX/DRX non-active time period, the terminal device may receive the PRS or may not receive the PRS according to configured PRS.

Step 3: the LMF can interact the PRS configuration of one or more relevant cells with the terminal device or with an energy-saving cell (i.e., a cell using cell DTX/DRX) corresponding to the terminal device.

Optionally, the cell can acquire the PRS configuration from the LMF (or can acquire the PRS configuration from the terminal device).

Optionally, the cell can configure or adjust the cell DTX/DRX configuration according to the PRS configuration. Optionally, when the first cell is in the energy-saving state or in the cell DTX/DRX non-active time period, the terminal device may receive the PRS or may not receive the PRS according to the configured PRS.

### Example 4: Method for Activating or Deactivating Cell DTX/DRX

In some embodiments, a network may activate or deactivate cell DTX/DRX through an MAC CE.

Optionally, the MAC CE may use a new LCID.

Optionally, one MAC CE may activate/deactivate one LCID.

Optionally, one MAC CE may activate/deactivate different LCIDs.

Optionally, a payload of the MAC CE may be a fixed value or may be variable.

Optionally, the payload of the MAC CE may be 0. For example, a default state of cell DTX/DRX is "deactivated"; upon receiving the MAC CE once, the state is "activated", and upon receiving the MAC CE again, the state is "deactivated".

Optionally, the MAC CE may include one of the following indication information: activation/deactivation indication, an index of cell DTX, and an index of cell DRX.

### Example 5: Implementation of CHO in Energy-saving Scenario

With different CHO execution condition configurations, a terminal device behavior may be different. In some embodiments, different CHO execution conditions may include at least one of: a condition related to channel quality (such as Event A3/Event A4/Event A5), a condition related to a time or an indication for entering NES (such as a time or an indication for a source cell or a target cell to enter the NES).

Optionally, different CHO execution conditions can be configured or executed alone.

Optionally, different CHO execution conditions can be configured or executed in combination.

Optionally, for different execution conditions, terminal device behaviors may be different.

A possible CHO execution procedure is provided below. The CHO execution procedure may include steps 1 to 3 (the "terminal device" mentioned below is referred to as the "UE").

Step 1: in the enhanced CHO configuration, the source cell configures the UEs with the NES-related parameters.

Besides the dedicated handover configurations of each candidate target cell (i.e. *RRCReconfiguration*)*,* the enhanced CHO configuration includes the specific NES CHO execution condition based on source cell NES mode.

The specific NES CHO execution condition contains a time-based execution event. Such a time-based execution event indicates the time that the source cell enters the NES mode and thus requires the UE to execute the CHO once the starting point/time of the source cell NES approaches. The time indicated would be the reference system frame number (SFN) or the universal time coordinated (UTC) time of the source cell to enter the NES. Accordingly, the UE starts to judge whether such a time approaches upon receiving the enhanced CHO configuration as well as executes the CHO once it is time for the source cell to enter the NES.

As agreed, the specific NES CHO execution condition can also be one of Event A3, Event A4 and Event A5. Thus, the source cell can configure one of Event A3, Event A4 and Event A5 as a CHO execution condition. Such radio link-related events can work alone or together with time-based execution events.

The UE determines the source cell will enter the NES based on a time-based CHO execution event, which is contained in the enhanced CHO configuration.

The starting point of the source cell entering the NES is contained in the time-based CHO execution event for the NES mode determination. Accordingly, the UE considers the event to be fulfilled if such a starting point of the source cell approaches.

Event A3/Event A4/Event A5 can be configured alone or together with the time-based CHO execution event.

Step 2: the UE evaluates the CHO conditions once it receives the enhanced CHO configuration.

Upon receiving the enhanced CHO configuration, the UE performs CHO condition evaluation associated with the CHO event configured.

Step 3: the UE executes the CHO and switches to another cell.

Based on the network strategy, the network may configure the UE with either or both of time-based event and Event A3/Event 4/Event 5. Accordingly, the UE would face several cases in the CHO execution.

Case 1: both the time-based execution event and Event A3/Event 4/Event 5 are configured.

The intention of this case is to achieve a trade-off between radio link quality and the source cell NES requirement. Thus, the source cell would configure a relaxed condition for Event A3/Event A4/Event A5. Following this assumption, the UE would execute the CHO when any candidate target cell fulfils both CHO execution events, i.e. the UE executes the CHO if the source cell enters the NES and if any candidate target cell fulfils Event A3/Event A4/Event A5.

Alternatively, when Event A3/Event A4/Event A5 is completed in any candidate target cell, the terminal device may execute the CHO.

Moreover, it is possible that the channel quality of the candidate target cell is good enough before the source cell enters the NES mode, thus the network would configure one additional Event A3/Event A4/Event A5 to allow the UE to switch to the candidate target cell as soon as possible (ASAP). If such additional Event A3/Event A4/Event A5 is configured, the UE would follow the legacy behavior, i.e. the UE executes the CHO and switches to any candidate target cell that fulfils the additional Event A3/Event A4/Event A5.

In the case that the time-based execution event is configured for the source cell and Event A3/Event 4/Event 5 is configured for a target candidate cell, the UE considers the target candidate cell as a triggered cell if both execution events are fulfilled.

Case 2: the time-based execution event is not configured and Event A3/Event A4/Event A5 is configured

As legacy, the UE executes the CHO and switches to any cell that fulfils Event A3/Event A4/Event A5.

In the case that the time-based execution event is not configured for the source cell and the Event A3/Event A4/Event A5 is configured for the target candidate cell, the UE considers the target candidate cell as the triggered cell if the Event A3/Event A4/Event A5 is fulfilled

Case 3: the time-based execution event is configured and Event A3/Event A4/Event A5 is not configured.

Normally the UE should switch to the candidate target cell with a good enough channel quality. However, if the source cell cannot serve the UEs anymore due to energy saving (e.g. cell off) and neither of Event A3/Event A4/Event A5 is configured for any candidate target cell, it means the most important thing is to switch the UE to another cell, thus a relaxed rule for handover can be considered. As an implementation, the UE can choose a candidate cell with a better channel quality, e.g. UE chooses and switches to a cell with the highest channel quality. If only one candidate target cell is indicated in the CHO configuration, the UE may have to switch to this cell without choice.

In the case that the time-based execution event is configured for the source cell and neither of Event A3/Event A4/Event A5 is configured for any candidate target cell, the UE needs to choose and switch to the candidate target cell with a better channel quality if time-based event is fulfilled.

Alternatively, another implementation for Case 3 can be one of: based on the implementation of the terminal device, select a target cell to execute the CHO (optionally, the target cell is a configured target candidate cell with CHO configured); or, the terminal device selects a target cell that meets a certain condition (such as a threshold) to execute the CHO (optionally, including at least one of: the target cell is the configured target candidate cell with CHO configured; the threshold can be pre-configured or otherwise configured); or, the terminal device can select a target cell with better channel quality to execute the CHO (optionally, the target cell is the configured target candidate cell with CHO configured, and/or a target candidate cell whose channel quality is measured).

In some embodiments, the terminal device may require the network to configure channel quality-related events (such as Event A3/Event 4/Event 5), and configuration method of case 3 will not occur.

### Example 6: Reporting of UE Assistance Information (UAI)

Optionally, Example 6 can be used in an energy-saving scenario or a non-energy-saving scenario.

Optionally, Example 6 can be used in a specific UE scenario, a specific service (such as extended reality (XR)) scenario, or all UE or service scenarios.

Optionally, Example 6 is used for a UE with assistance information reported. In other words, the UE mentioned in Example 6 can be a UE with capability of reporting assistance information.

When the UE needs to report first assistance information, the UE can report the assistance information according to at least one of the following situations. The first assistance information includes at least one of: an uplink jitter (UL jitter), a burst arrival time (BAT), and a periodicity.

Optionally, the BAT can be identified as one or more of: a reference SFN, a reference slot, a reference symbol, an SFN offset, a slot offset, a symbol offset, a time domain offset, a UTC time (such as which day, hour, and second), etc.

Optionally, the BAT can be expressed as at least one of: a conditional CG starting position, a conditional CG offset position, a DRX starting position, a DRX offset position, offset in a DRX active time period, etc.

For example, if the UE has not previously sent UAI related to UL jitter/BAT, the UE initiates UAI transmission to provide UL jitter/BAT.

For example, if the UE has not previously sent the UAI related to UL jitter/BAT/periodicity, the UE initiates the UAI transmission to provide at least one of UL jitter/BAT/periodicity.

For example, if the UE has not previously sent BAT-related UAI, the UE initiates the UAI transmission to provide UL BAT.

For example, if the UE has not previously sent UL jitter-related UAI, the UE initiates the UAI transmission to provide UL jitter.

For example, if the UE has not previously sent periodicity-related UAI, the UE initiates the UAI transmission to provide the periodicity.

For example, if the current UL jitter/BAT, or at least one of the current UL jitter/BAT, is different from the UL jitter/BAT indicated in the last UAI sent by the UE, and a reporting prohibit timer expires, the UE initiates the UAI transmission to report an updated UL jitter/BAT.

For example, if the current UL jitter is different from the UL jitter indicated in the last UAI sent by the UE, and a corresponding reporting prohibit timer expires, the UE initiates the UAI transmission to report the updated UL jitter, or to report at least one of UL jitter/BAT/periodicity.

For example, if the current BAT is different from the BAT indicated in the last UAI sent by the UE, and the corresponding reporting prohibit timer expires, the UE initiates the UAI transmission to report the updated BAT, or reports at least one of the UL jitter/BAT/periodicity.

For example, if at least one of the current UL jitter/BAT is different from the UL jitter/BAT indicated in the last UAI sent by the UE, and the reporting prohibit timer expires, the UE initiates the UAI transmission to report the updated UL jitter/BAT.

For example, if the variation of the current UL jitter/BAT, or the variation of at least one of the UL jitter/BAT exceeds a variation threshold, the UE initiates the UAI transmission to report the updated UL jitter/BAT, or reports the UL jitter/BAT.

For example, if the variation of the current UL jitter/BAT/periodicity, or the variation of at least one of the UL jitter/BAT/periodicity exceeds the variation threshold, the UE initiates the UAI transmission to report an updated UL jitter/BAT/periodicity, or reports the UL jitter/BAT/periodicity.

For example, if the variation of the current UL jitter exceeds variation threshold 1, the UE initiates the UAI transmission to report the updated UL jitter, or reports all assistance information, or reports all updated assistance information.

For example, if the variation of the current BAT exceeds variation threshold 2, the UE initiates the UAI transmission to report the updated BAT, or reports all assistance information, or reports all updated assistance information.

For example, if the variation of the current periodicity exceeds variation threshold 3, the UE initiates the UAI transmission to report the updated periodicity, or reports all assistance information, or reports all updated assistance information.

Optionally, if the UE reports the periodicity and the CN indicates the periodicity to a base station, then the base station can use the periodicity reported by the UE, the periodicity indicated by the CN, or the latest/last acquired periodicity. Optionally, the periodicity indicated by the UE and the CN to the base station is for the UL, and/or the values of the periodicities indicated by the UE and the CN to the base station may be different.

Optionally, the network configures the reporting prohibit timer for the first assistance information and/or a variation threshold in an RRC configuration message (such as otherConfig).

Optionally, when the first assistance information contains multiple contents, for example, the first assistance information contains at least two of UL jitter, BAT, and periodicity, the reporting prohibit timer corresponding to the first assistance information can be the same; or, different reporting prohibit timers or timer durations can be configured for different contents.

Optionally, when the first assistance information contains multiple contents, for example, the first assistance information contains at least two of UL jitter, BAT, and periodicity, a variation threshold corresponding to the first assistance information can be the same; or, different variation thresholds can be configured for different contents. For example, a first variation threshold is configured for the UL jitter, and reporting is triggered when the variation of the UL jitter exceeds the first variation threshold; a second variation threshold is configured for the BAT, and reporting is triggered when the variation of the BAT exceeds the second variation threshold.

Optionally, the UE can report a capability indication to the network to indicate whether the UE can report the first assistance information. However, the embodiments of the disclosure are not limited in this regard. For example, there is no need to introduce a UE capability indication, and that the UE can identify a protocol data unit (PDU) set or a data burst is indicated through indication information, so that the UE can further report the first assistance information.

### Example 7: Latency Information Reporting

Optionally, Example 7 can be used in an energy-saving scenario or a non-energy-saving scenario.

Optionally, Example 7 can be used in a specific UE scenario, or a specific service (such as XR) scenario, or all UE or service scenarios.

Optionally, Example 7 is used for a UE with latency information reported. In other words, the UE mentioned in Example 7 can be a UE with a capability of reporting latency information.

When the UE needs to report latency information, a UE behavior may include at least one of the following, which is introduced below.

Behavior 1: the UE reports transmission latency. Specifically, the UE reporting the transmission latency may include at least one of the following.

In some embodiments, the UE reports the latency information for a LCH/logical channel group (LCG) for which latency information reporting is indicated or configured.

In some embodiments, the UE can report the latency information by using an MAC CE. For example, a communication system may introduce a new MAC CE to report the latency information.

In some embodiments, the aforementioned MAC CE contains latency information of one LCH/LCG, or includes latency information of multiple LCHs/LCGs. In some embodiments, the aforementioned MAC CE contains latency information of one LCG, or includes latency information of multiple LCGs. In some embodiments, the aforementioned MAC CE contains latency information of one LCH, or includes latency information of multiple LCHs. In some embodiments, the aforementioned MAC CE includes latency information of one LCH in one LCG, or includes latency information of multiple LCHs in one LCG.

In some embodiments, the aforementioned MAC CE may further include information about an amount of data to-be-transmitted corresponding to the latency information of the LCH/LCG.

In some embodiments, the aforementioned MAC CE may further include information about an amount of data to-be-transmitted corresponding to the latency information of the LCH.

In some embodiments, the aforementioned MAC CE may further include information about an amount of data to-be-transmitted corresponding to the latency information of the LCG.

In some embodiments, the aforementioned MAC CE may further include information about an amount of data to-be-transmitted corresponding to the latency information of one or more LCHs of one LCG.

In some embodiments, the length of the aforementioned MAC CE is limited. For example, the aforementioned MAC CE has a variable size or a fixed size. For example, the length of the aforementioned MAC CE is A bytes. For example, the length of the MAC CE cannot exceed a certain size, such as *X* bytes, or the length of the MAC CE cannot exceed a length that can be indicated by an L field in an existing MAC CE design.

In some embodiments, when reporting the latency information of the LCH/LCG, for one LCH/LCG, the UE may report one piece of latency information (e.g., a certain piece of latency information of the LCG, or the maximum latency information of the LCG, or the minimum latency information of the LCG, or average latency information of the LCG, or the minimum latency information in multiple pieces of latency information greater than a certain threshold, or the maximum latency information in multiple pieces of latency information less than the certain threshold, or the minimum latency information in multiple pieces of latency information less than the certain threshold), or may report multiple pieces of latency information (e.g., reporting one piece of latency information for each LCH in the LCG, or reporting one piece of latency information for each PDU set or burst in the LCH/LCG, or reporting latency information for a PDU set/LCG/LCH whose latency exceeds the threshold).

In some embodiments, when reporting the latency information of the LCG, for one LCG, the UE may report one piece of latency information (e.g., the minimum latency information of the LCG), or may report multiple pieces of latency information (e.g., reporting one piece of latency information for each LCH in the LCG, or reporting one piece of latency information for each PDU set or burst in the LCG, or reporting latency information for the PDU set/LCG/LCH whose latency exceeds the certain threshold).

In some embodiments, when reporting the latency information of the LCH, for one LCH, the UE may report one piece of latency information (e.g., the minimum latency information in the LCH), or may report multiple pieces of latency information (e.g., reporting one piece of latency information for each PDU set or burst reported by the LCH, or reporting latency information for the PDU set/LCH/burst whose latency exceeds the certain threshold).

In some embodiments, if the UE only reports one piece of latency information, the latency information may be one of the following latency information of the UE, LCH, or LCG: a certain piece of latency information, or the maximum latency information, or the minimum latency information, or the average latency information, or the minimum latency information in multiple pieces of latency information greater than the certain threshold, or the maximum latency information in multiple pieces of latency information less than the certain threshold, or the minimum latency information in multiple pieces of latency information less than the certain threshold.

In some embodiments, if the UE only reports one piece of latency information, the UE may report the minimum latency information of the LCG.

In some embodiments, if the UE only reports one piece of latency information, the UE may report the minimum latency information of the UE or in the LCH.

In some embodiments, if the UE only reports one piece of latency information for each LCH in the LCG, the UE may report the minimum latency information of the LCH.

In some embodiments, the UE reports the latency information to a base station when a certain condition is met. The above condition includes one of: the latency or remaining latency is less than a threshold, or waiting latency exceeds the threshold, or a duration of a timer is less than the threshold, or the timer is started, or there is an arrival of a new PDU set or burst. Optionally, in this case, the latency reported by the UE is for the PDU set, the burst, the LCG, the UE, or the LCH.

In some embodiments, if the UE intends to report a remaining time of the PDU set, the UE may only report a value that is equal to a remaining time of *discardTimer* associated with the first service data unit (SDU) of the PDU set.

In some embodiments, if the UE intends to report the remaining time of the PDU set, the UE may only report a value that is equal to a remaining time of *discardTimer* associated with the last SDU or a certain SDU of the PDU set.

In some embodiments, if the UE reports the latency information, it may simultaneously report information about the amount of data to-be-transmitted. Optionally, in the case where a network indicates or configures that a certain LCH/LCG can use multiple buffer status (BS) tables, the UE may select a BS table to-be-used based on the network indication, or the UE may make its own decision (e.g., based on a size of data amount) to select the BS table.

In some embodiments, in the case where the LCG can use both a legacy BS table and a new BS table simultaneously, the UE can select a table to-be-used for encoding based on the network indication. For example, if the network indicates to use or prioritize the use of the new BS table, the UE uses the new BS table. Alternatively, if the network indicates a low-priority use of the new BS table, the UE uses the legacy BS table first. For example, if the network indicates to the UE to select a table with a small quantization error, the UE can select the BS table to-be-used based on the quantization error.

In some embodiments, in the case where the LCG can use both the legacy BS table and the new BS table simultaneously, the UE can select the BS table to-be-used according to a size of data cached. For example, in the case where an amount of the data cached by the UE is greater than the minimum value of the new BS table, the UE can choose the new BS table for encoding. For example, the UE selects the BS table to-be-used based on the size of the quantization error (e.g., selecting a BS table with the small quantization error).

In some embodiments, the BS table selected by the UE is for LCH/LCG.

In some embodiments, the UE may report a per-logical channel group buffer status (per-LCG BS) table to the network.

In some embodiments, the UE may report a selected BS table to the network. For example, the UE reports the selected BS table for the LCG.

Optionally, the aforementioned legacy BS table may be a BS table supported by NR system R17.

Behavior 2: the UE reports a capability indication to the network to indicate whether the UE can report the latency information.

In some embodiments, the communication system does not need to introduce a UE capability indication to indicate whether the UE can identify the PDU set or a data burst, but implicitly indicates whether the UE can identify the PDU set or the data burst by reporting capability indication information, or indicates that the UE can identify the PDU set or the data burst.

Behavior 3: the UE reports the capability indication to the network to indicate whether the UE can report BS information by using the new BS table, the new MAC CE, or a new BS reporting mechanism.

In some embodiments, the communication system does not need to introduce the UE capability indication to indicate whether the UE can identify the PDU set or the data burst, but implicitly indicates whether the UE can identify the PDU set or the data burst by reporting the capability indication information, or indicates that the UE can identify the PDU set or the data burst.

### Example 8: Data Packet Deletion

Optionally, Example 8 can be used in an energy-saving scenario or a non-energy-saving scenario.

Optionally, Example 8 can be used in a specific UE scenario, or a specific service (such as XR) scenario, or all UE or service scenarios.

Optionally, Example 8 is used for a UE with a data packet deletion capability. In other words, the UE mentioned in Example 8 can be the UE with the data packet deletion capability.

A UE behavior performed when the UE needs to delete a data packet based on a PDU set is described below.

In some embodiments, the aforementioned data packet deletion or discarding is performed at a packet data convergence protocol (PDCP).

In some embodiments, the aforementioned data packet deletion or discarding is performed at a radio link control (RLC).

In some embodiments, if PDU set discard is configured for the UE or a specific data radio bearer (DRB), or an indication based on PDU set discard is configured for the UE or the specific DRB, or an indication enabling PDU set discard is configured for the UE or the specific DRB, the UE may perform an enhanced operation on PDU set discard and a PDCP discard timer. The enhanced operation may include at least one of: maintaining a discard timer(s) for some SDUs in the PDU set, maintaining a discard timer for each SDU/PDU in the PDU set, maintaining different discard timer durations for SDUs/PDUs in the PDU set, stopping discard timers of all SDUs/PDUs in the PDU set when discard timers of some SDUs/PDUs in the PDU set expire, and deleting all SDUs/PDUs in the PDU set when the discard timers of some SDUs/PDUs in the PDU set expire.

In some embodiments, if PDU set discard or a PDU set discard-based operation/indication is configured for the UE or the specific DRB, when the first SDU of the PDU set is received from an upper layer, a relevant PDCP transmitting entity may start a discard timer associated with the SDU.

In some embodiments, if PDU set discard or the PDU set discard-based operation/indication is configured for the UE or the specific DRB, once a discard timer associated with the first SDU in the PDU set expires, the relevant PDCP transmitting entity may discard all PDCP SDUs in the PDU set.

In some embodiments, for other SDUs that are not the first SDU in the PDU set, the discard timer may not be started. Alternatively, the discard timer may be started.

In some embodiments, if PDU set discard or the PDU set discard-based operation/indication is configured for the UE or the specific DRB, when each SDU of the PDU set is received from the upper layer, the relevant PDCP transmitting entity may start the discard timer associated with the SDU. Optionally, discard timer durations for different SDUs are the same or different.

In some embodiments, if PDU set discard or the PDU set discard-based operation/indication is configured for the UE or the specific DRB, once a discard timer associated with a certain SDU in the PDU set expires, the relevant PDCP transmitting entity may discard all PDCP SDUs in the PDU set, and/or stop all SDUs/PDUs corresponding to the PDU set.

In some embodiments, if a discard timer is started for other SDUs of the first SDU in the PDU set, the discard timer duration is a configured PDCP discard timer duration.

Optionally, the first SDU is the first one of SDUs in a corresponding PDU set, or the first one of SDUs in the PDU set that arrives the PDCP or an AS.

In some embodiments, if the discard timer is started for SDUs other than the first SDU in the PDU set, then for these other SDUs, a corresponding discard timer duration may be the configured PDCP discard timer duration, or the discard timer duration is equal to the configured PDCP discard timer duration minus a time interval between other SDUs and the first SDU, or the timer duration may be a remaining duration of the discard timer of the first SDU.

In some embodiments, if the discard timer is started for SDUs other than the first SDU in the PDU set, for any one of these other SDUs, the corresponding discard timer duration may be the configured PDCP discard timer duration, or the discard timer duration is equal to the configured PDCP discard timer duration minus a time interval between the SDU and the first SDU, or the timer duration may be the remaining duration of the discard timer of the first SDU.

In some embodiments, the network may configure a PDU set importance (PSI) based discard operation, that is, perform packet-based discard based on the value, the level, or the classification of the PSI.

In some embodiments, when performing PDU set discard, the network may configure PSI-based discard, that is, perform PDU set-based discard based on the value, the level, or the classification of the PSI.

In some embodiments, the UE may report the capability indication to the network to indicate whether the UE can perform PDU set discard. In some embodiments, the communication system does not need to introduce a UE capability indication to indicate whether the UE can identify the PDU set or the data burst, but instead implicitly indicates or indicates whether the UE can identify the PDU set or the data burst through discard capability indication.

In some embodiments, the UE may report the capability indication to the network to indicate whether the UE can perform PSI-based discard. In some embodiments, the communication system does not need to introduce the UE capability indication to indicate whether the UE can identify the PDU set or the data burst, but instead implicitly indicates or indicates whether the UE can identify the PDU set or the data burst through a PSI discard capability indication. In some embodiments, the communication system does not need to introduce the UE capability indication to indicate whether the UE can perform PDU set discard operation, but instead implicitly indicates or indicates whether the UE can perform PDU set discard operation through the PSI discard capability indication.

In some embodiments, UE supporting PSI-based discard requires a capability to simultaneously support PDU set-based discard.

In some embodiments, indicating a capability to support PDU set-based discard also represents indicating that the UE supports PSI-based discard.

In some embodiments, for a PSI discard or a PSI-based discard mechanism, one of the following methods may be adopted.

Method 1: configure parameters for the aforementioned mechanism through an RRC. The parameter includes a threshold or a classification criterion (used to distinguish PSI levels or types, or determine importance, or specify a PDU set for which PSI-based discard is performed), and/or, a PSI-specific timer or a PSI-specific value for discard timer.

In some embodiments, the UE may be indicated to use/not use, or activate/deactivate the PSI-based discard mechanism through one or more of: an RRC, an MAC CE, a PDCP control PDU indication, DCI.

Optionally, the aforementioned RRC and an RRC configuring the parameter for the PSI-based discard mechanism may be the same or different RRC signaling. Optionally, after the UE receives the aforementioned RRC, the RRC of the UE may indicate to the PDCP of the UE to use/not use, or activate/deactivate the PSI-based discard mechanism.

Optionally, after the UE receives the aforementioned MAC CE, the MAC of the UE may indicate to the PDCP of the UE to use/not use, or activate/deactivate the PSI-based discard mechanism.

Optionally, the PDCP control PDU indication can indicate the UE to use/not use, or activate/deactivate the PSI-based discard mechanism. Optionally, sending of the PDCP control PDU indication can be triggered based on this requirement or by using a new trigger mechanism.

Optionally, the network may indicate to the UE, via the DCI, to use/not use, or activate/deactivate the PSI-based discard mechanism. Optionally, after the UE receives the aforementioned DCI, the physical layer of the UE may indicate to the PDCP of the UE to use/not use, or activate/deactivate the PSI-based discard mechanism.

Method 2: the parameter for the aforementioned mechanism is pre-configured or defined in a protocol. The parameter includes the threshold or the classification criterion (used to distinguish PSI levels or types, or determine the importance, or specify a PDU set for which PSI-based discard is performed), and/or the PSI-specific timer or the PSI-specific value for discard timer.

In some embodiments, the UE may be indicated to use/not use, or activate/deactivate the PSI-based discard mechanism through one or more of: an RRC, an MAC CE, a PDCP control PDU indication, DCI.

Optionally, the aforementioned RRC and the RRC configuring the parameter for the PSI-based discard mechanism may be the same or different RRC signaling. Optionally, after the UE receives the aforementioned RRC, the RRC of the UE may indicate to the PDCP of the UE to use/not use, or activate/deactivate the PSI-based discard mechanism.

Optionally, after the UE receives the aforementioned MAC CE, the MAC of the UE may indicate to the PDCP of the UE to use/not use, or activate/deactivate the PSI-based discard mechanism.

Optionally, the PDCP control PDU indication can indicate to the UE to use/not use, or activate/deactivate the PSI-based discard mechanism. Optionally, the sending of the PDCP control PDU indication can be triggered based on this requirement, or by using the new trigger mechanism.

Optionally, the network can indicate to the UE, via the DCI, to use/not use, or activate/deactivate the PSI-based discard mechanism. Optionally, after the UE receives the aforementioned DCI, the physical layer of the UE can indicate to the PDCP of the UE to use/not use, or activate/deactivate the PSI-based discard mechanism.

Method 3: the network indicates to the UE to use/not use, or activate/deactivate the PSI-based discard mechanism through an RRC, an MAC CE, a PDCP control PDU indication, or DCI.

Optionally, the RRC, the MAC CE, the PDCP control PDU indication, or the DCI carries an explicit indication to indicate to the UE to use/not use, or activate/deactivate the PSI-based discard mechanism.

Optionally, the RRC, the MAC CE, the PDCP control PDU indication, or the DCI does not carry the explicit indication, but instead indicates to the UE to use/not use, or activate/deactivate the PSI-based discard mechanism through some parameters. For example, if there is a parameter or a specific parameter (such as a threshold, a classification criterion, a PSI-specific timer, or a PSI-specific value for discard timer), the UE uses or activates the PSI-based discard mechanism. For another example, if there is no parameter or no specific parameter (such as the threshold, the classification criterion, the PSI-specific timer, or the PSI-specific value for discard timer), the UE does not use or deactivates the PSI-based discard mechanism.

Optionally, the RRC can indicate the parameter for the aforementioned mechanism. The RRC includes the threshold or the classification criterion (used to distinguish PSI levels or types, or determine the importance, or specify the PDU set for which PSI-based discard is performed), and/or the PSI-specific timer or the PSI-specific value for discard timer. In some embodiments, if the aforementioned parameters exist, or at least one of the parameters exists, the UE uses or activates PSI-based discard; otherwise, the UE does not use or deactivates PSI-based discard. Optionally, after the UE receives the aforementioned RRC, the RRC of the UE may indicate to the PDCP of the UE to use/not use, or activate/deactivate the PSI-based discard mechanism. Optionally, the RRC provides the parameter to the PDCP layer for use.

Optionally, the MAC CE indicates to the UE to use/not use, or activate/deactivate the PSI-based discard mechanism. Optionally, the MAC CE may include the threshold or the classification criterion (used to distinguish PSI levels or types, or determine the importance, or specify the PDU set for which PSI-based discard is performed), and/or the PSI-specific timer or the PSI-specific value for discard timer. In some embodiments, if the aforementioned parameters exist, or at least one of the parameters exists, the UE uses or activates PSI-based discard; otherwise, the UE does not use or deactivates PSI-based discard. Optionally, after the UE receives the aforementioned MAC CE, the MAC of the UE may indicate to the PDCP of the UE to use/not use, or activate/deactivate the PSI-based discard mechanism, and/or, the aforementioned parameter (such as the threshold, the classification criterion, the PSI-specific timer, or the PSI-specific value for discard timer).

Optionally, the aforementioned PDCP control PDU indication can indicates to the UE to use/not use, or activate/deactivate the PSI-based discard mechanism. Optionally, transmission indicated by PDCP information, such as the PDCP control PDU indication, can be triggered based on this requirement or by the new trigger mechanism. Optionally, the aforementioned control PDU includes the threshold or the classification criterion (used to distinguish PSI levels or types, or determine the importance, or specify the PDU set for which PSI-based discard is performed), and/or the PSI-specific timer or the PSI-specific value for discard timer. In some embodiments, if the aforementioned parameters exist, or at least one of the parameters exists, the UE uses or activates PSI-based discard; otherwise, the UE does not use or deactivates PSI-based discard.

Optionally, the UE may determine whether to use or activate PSI-based discard according to DCI indication. Optionally, the DCI may indicate the parameter for the aforementioned mechanism, including the threshold or the classification criterion (used to distinguish PSI levels or types, or determine the importance, or specify the PDU set for which PSI-based discard is performed), and/or, the PSI-specific timer or the PSI-specific value for discard timer. In some embodiments, if the aforementioned parameters exist, or at least one of the parameters exists, the UE uses or activates PSI-based discard; otherwise, the UE does not use or deactivates PSI-based discard. Optionally, after the UE receives the aforementioned DCI, the physical layer of the UE may indicate to the PDCP of the UE to use/not use, or activate/deactivate the PSI-based discard mechanism, and/or, the aforementioned parameter (e.g., the threshold or the classification criterion or the PSI-specific timer or the PSI-specific value for discard timer).

Optionally, a duration of the PSI-specific discard timer can be 0 or a non-zero value.

For example, PSI-based discard can be enabled/disabled through on/off information, that is, if a specific indication is set as enabled or is configured with a specific parameter, the UE may apply PSI-based XR discard or PSI-based data discard. For example, an "on" operation remains active until the network commands the UE to turn off the discard operation.

For example, a threshold can be introduced as a specific parameter for PSI-based discard to classify the PDU set per importance. In this way, the UE can discard a PDU set with less importance according to the threshold. Alternatively, the UE can discard the PDU set with less importance by using a separate discard timer (or a value of the timer) based on the configured threshold (if the network configures the separate discard timer or the value of the timer to achieve flexible congestion handling).

For another example, in PSI-based discard configuration, a threshold for classifying the PDU set per importance is included. In this way, when the UE receives the PSI-based discard configuration, the UE may discard a PDU set whose PSI meets the configured threshold (such as greater than the threshold or less than the threshold, so as to discard the less important PDU sets as soon as possible). Alternatively, when the UE receives the PSI-based discard configuration, the UE can use the separate discard timer (or the value of the timer) to discard the PDU set whose PSI meets the configured threshold (such as greater than the threshold or less than the threshold, if the separate discard timer or the value of the timer is included in the PSI-based discard configuration or is configured for the UE, so as to achieve flexible congestion handling).

### Example 9: Processing of Relevant Data Packet

Optionally, Example 9 can be used in an energy-saving scenario or a non-energy-saving scenario.

Optionally, Example 9 can be used in a specific UE scenario, or a UE group scenario, or a specific service (such as XR) scenario, or multi-modal scenarios, or all UEs or service scenarios.

The relevant data packet involved in Example 9 may belong to different UEs, and the different UEs may operate under different base stations.

The relevant data packet involved in Example 9 may belong to different UEs, and the different UEs may operate under the same base station.

In some embodiments, the aforementioned relevant data packet may be a data packet, a quality of service (QoS) flow, or a PDU session that have a synchronization requirement or a cooperative transmission requirement.

In some embodiments, processing of the aforementioned relevant data packet can also be understood as processing of a relevant UE, or processing of the aforementioned relevant data packet by the relevant UE.

In some embodiments, the aforementioned relevant UE may be a UE that have the synchronization requirement or the cooperative transmission requirement.

Taking an example where the relevant UE includes UE1 and UE2, in some embodiments, UE1 may report first information to a network, and/or the network may indicate second information to UE2. A purpose is to ensure a transmission requirement for relevant data (such as synchronization, or transmission within a period of time, or cooperative transmission).

In some embodiments, the network may indicate the second information to other relevant UEs (such as UE2). The second information may be indication information (including, for example, at least one of: a PDCP status report, a service data adaptation protocol (SDAP) status report, an RLC status report, an HARQ feedback, an automatic repeat request (ARQ) feedback, an indication of which resource to be transmitted with priority, which HARQ process to be selected with priority, which PDU or PDU set to be deleted, which PDU set or PDU not need to be transmitted, which PDU or PDU set to be retransmitted, which MAC PDU to be retransmitted, whether to use an operation based on PDU or PDU set, whether to report information of relevant UE, whether to report information of relevant data packet, an indication of reporting at least one of a buffer status report (BSR)/latency/power) or configuration information (including, for example, at least one of: configuring or adjusting PDCP configuration (e.g., discard, duplicate transmission, multiplex), configuring or adjusting LCH configuration (e.g., a LCH mapping restriction or a logical channel prioritization (LCP) parameter), configuring or adjusting CG/DG resource configuration, configuring or adjusting a physical layer parameter or resource).

In some embodiments, the network may indicate the second information to other relevant UEs (such as UE2) based on a report of a UE (such as UE1) or a situation of the relevant UE (such as UE1/UE2). The second information may be the indication information (including, for example, at least one of: the PDCP status report, the SDAP status report, the RLC status report, the HARQ feedback, the ARQ feedback, the indication of which resource to be transmitted with priority, which HARQ process to be selected with priority, which PDU or PDU set to be deleted, which PDU set or PDU not need to be transmitted, which PDU or PDU set to be retransmitted, which MAC PDU to be retransmitted, whether to use the operation based on PDU or PDU set, whether to report information of the relevant UE, whether to report information of the relevant data packet, the indication of reporting at least one of the BSR/latency/power) or the configuration information (including, for example, at least one of: configuring or adjusting the PDCP configuration (e.g., the discard, the duplicate transmission, the multiplex), configuring or adjusting the LCH configuration (e.g., the LCH mapping restriction or the LCP parameter), configuring or adjusting of the CG/DG resource configuration, configuring or adjusting of the physical layer parameter or resource).

In some embodiments, the network may periodically send the second information to the UE2. Optionally, a periodicity is pre-configured or configured by the network.

In some embodiments, the network may send the second information to UE2 when an event is triggered. For example, the network may send the second information to UE2 when the latency and/or a UE data amount meets a certain condition. For example, the network may send the second information to UE2 when there is a handover. For example, the network may send the second information to UE2 when receiving an indication from another entity.

In some embodiments, the network may send the second information to UE2 when the first information is received.

In some embodiments, if multiple base stations are involved, when the first information is received, a UE1 network may send information to a UE2 network. The information is the first information, or information containing the first information, or a variant of the first information. Optionally, the information includes a UE identifier.

In some embodiments, UE1 may report the first information to the network when the network configures or indicates.

In some embodiments, UE1 may report the first information to the network when the event is triggered. For example, UE1 reports the first information to the network when the latency and/or a UE1 data amount meets the certain condition. For example, UE1 reports the first information to the network when there is the handover.

In some embodiments, UE1 may report the first information to the network periodically. Optionally, the periodicity is pre-configured or configured by the network.

In some embodiments, the aforementioned first information may be indication information (including, for example, at least one of: the PDCP status report, the SDAP status report, the RLC status report, the HARQ feedback, the ARQ feedback, the indication of which resource to be transmitted with priority, which HARQ process to be selected with priority, which PDU or PDU set to be deleted, which PDU set or PDU not need to be transmitted, which PDU or PDU set to be retransmitted, which MAC PDU to be retransmitted, whether to use operation based on the PDU or PDU set, report information of the relevant UE, report information of the relevant data packet, report at least one of the BSR/latency/power) or recommended configuration information (including, for example, at least one of: recommended configuration or adjustment of the PDCP configuration (e.g., the discard, the duplicate transmission, the multiplex), recommended configuration or adjustment of the LCH configuration (e.g., the LCH mapping restriction or the LCP parameter), recommended configuration or adjustment of the CG/DG resource configuration, recommended physical layer parameter or resource, etc.).

The above text describes the method embodiments of the disclosure in detail with reference to FIG. 1 to FIG. 8. The following will describe the apparatus embodiments of the disclosure in detail with reference to FIG. 9 to FIG. 22. It can be understood that the description of the method embodiments corresponds to the description of the apparatus embodiments; therefore, for the parts not described in detail, reference can be made to the foregoing method embodiments.

FIG. 9 is a schematic structural diagram of a terminal device provided in an embodiment of the disclosure. A terminal device 900 illustrated in FIG. 9 may include an acquisition module 910.

The acquisition module 910 is configured to acquire first information of a first cell. The first information is associated with SI and/or an SSB of the first cell. The first information is acquired based on a first request message from the terminal device. Or, the first information is broadcasted/indicated by a second cell.

Optionally, the first information is used to indicate one or more of the following information: part or all SI of the first cell; information related to accessing, camping on, selecting, or reselecting the first cell; information related to paging of the first cell; and information for performing paging in the first cell.

Optionally, the first information includes one or more of the following information: an SIB, SIB1, part or all of other SIBs except SIB1 in the SIB, part or all of information contained in the SIB, and part or all SI.

Optionally, the first information includes one or more of the following information: slice information supported by the first cell; frequency information of the first cell; frequency priority information of the first cell; parameter information for selecting the first cell; parameter information for reselecting the first cell; information on whether the first cell is barred from access; configuration information of a common channel or a common signal; time-frequency resource information of the common channel or the common signal; configuration information for accessing, selecting, or reselecting the first cell; time-frequency resource information for accessing, selecting, or reselecting the first cell; configuration information for paging in the first cell; and time-frequency resource information for paging in the first cell.

Optionally, a broadcast status of the first information is not broadcasting. Or, the first information is broadcasted/indicated per request.

Optionally, the first cell does not send the SSB. Or, the first cell does not send part or all of SIBs. Or, the first cell does not send the SSB and the SIB. Or, the first cell does not send part or all of information contained in the SIB. Or, the first cell does not send SI other than an MIB. Or, the first cell does not send part or all SI. Or, the first cell does not send part or all of information contained in the SI. Or, the first cell does not send a paging message. Or, the first cell does not send an SI update indication. Or, the first cell does not send part or all of the common signals or the common channels.

Optionally, the first information is acquired by the terminal device from the first cell. Or, the first request message is sent to the first cell.

Optionally, the first information is acquired by the terminal device from the second cell. Or, the first request message is sent to the second cell.

Optionally, the first information is carried in SI of the second cell.

Optionally, the first request message is sent on a first resource. The first resource is a pre-configured resource or a pre-defined resource, or the first resource is a resource used for random access.

Optionally, the resource used for random access includes a resource used for sending a preamble, and/or a PRACH resource.

Optionally, the resource used for random access corresponds to one or more of the following resources: a resource of the first cell, a dedicated resource for the first information, and a dedicated resource for requesting the first information.

Optionally, the resource used for random access is sent by the second cell to the terminal device.

Optionally, the resource used for random access is carried in the SIB or a dedicated RRC message of the second cell.

Optionally, the first request message includes one or more of: a value of the first information, an index of the first information, a bitmap of the first information, a value of the first information required, an index of the first information required, and a bitmap of the first information required.

Optionally, the first request message is sent when a first condition is met. The first condition includes at least one of: the terminal device detects the SSB of the first cell, a channel quality of the first cell is greater than or equal to a first threshold, the first cell meets a R criterion or a S criterion, the first cell is a cell selected or reselected by the terminal device, the terminal device selects or reselects the first cell, the terminal device has data to-be-transmitted, an amount of data to-be-transmitted by the terminal device is greater than a second threshold, a slice required by the terminal device matches a slice supported by the first cell, a final check is required in the first cell, accessing to the first cell is required, camping on the first cell is required, transmitting data in the first cell is required, and selecting or reselecting the first cell is required.

Optionally, the first request message is a message used for random access, or the first request message is an RRC dedicated message or UCI dedicated information.

Optionally, different first information corresponds to the same first request message. Or, multiple types of first information correspond to the same first request message. Or, different first information corresponds to different first request messages. Or, the multiple types of first information correspond to different first request messages.

Optionally, the terminal device further includes an execution module 920. The execution module 920 is configured to perform one or more of the following according to the first information: determining whether it is possible to camp on the first cell, determining whether it is possible to select or reselect the first cell, performing a final check, determining whether to perform an RACH procedure in the first cell, receiving a PDCCH in the first cell, performing transmission with the first cell, and receiving a paging message of the first cell.

Optionally, the first information includes SIB1 of the first cell, and the acquisition module can be further configured to acquire second information according to the first information. The second information includes one or more of: other SIBs except SIB1 of the first cell, updated SI of the first cell, RACH configuration of the first cell, and paging configuration of the first cell.

Optionally, the terminal device further includes a monitoring module configured to monitor the paging message from the first cell. Monitoring configuration of the paging message is determined based on the first information.

Optionally, a transmission occasion of the paging message appears periodically. Or the transmission occasion of the paging message appears in a discontinuous manner.

Optionally, the transmission occasion of the paging message is used for the terminal device to monitor the paging message.

Optionally, the second cell is one of: an anchor cell of the first cell; a PCell of the terminal device; a PSCell of the terminal device; a cell providing information of the first cell; a cell that the terminal device is currently accessing, camping on, or selecting; and a cell associated with the first cell.

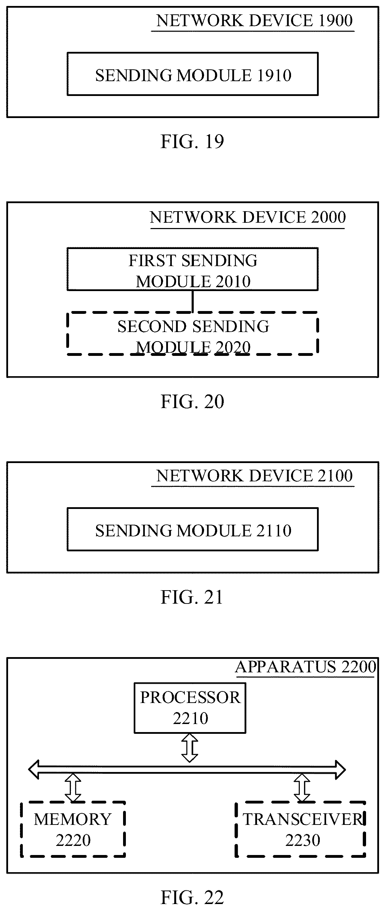

Optionally, the acquisition module 910 may be a transceiver 2230. A terminal device 900 may further include a processor 2210 and a memory 2220, as illustrated in FIG. 22.

FIG. 10 is a schematic structural diagram of a terminal device provided in another embodiment of the disclosure. A terminal device 1000 illustrated in FIG. 10 may include a sending module 1010.

The sending module 1010 can be configured to send a first message to a first cell. The first message is used to indicate one or more of: requesting the first cell to perform state transition; requesting the first cell to send at least one of an SSB, an MIB, an SIB, and a paging message; requesting the first cell to send part or all common signals; the terminal device has a requirement for data transmission; the terminal device has a requirement for network access; requesting the first cell to activate cell DTX/DRX; requesting the first cell to deactivate cell DTX/DRX; requesting the first cell to modify cell DTX/DRX; requesting the first cell to use a recommended cell DTX/DRX parameter; and recommending a cell DTX/DRX parameter to the first cell.

Optionally, the first cell is one or more of: an energy-saving cell; a cell in an energy-saving state; a cell in an off state; a cell using an energy-saving technology; a cell with an energy-saving capability; a cell where an energy-saving terminal device camps on, selects, or accesses; and a cell serving the energy-saving terminal device.

Optionally, the first cell does not send the SSB; or, the first cell does not send the MIB; or, the first cell does not send part or all of SIBs; or, the first cell does not send the SSB and the SIB; or, the first cell does not send part or all of information contained in the SIB; or, the first cell does not send part or all of common signals/common channels; or, the first cell does not send SI other than the MIB; or, the first cell does not send part or all SI; or, the first cell does not send part or all of information contained in the SI; or, the first cell does not send a paging message; or, the first cell does not send an SI update indication; or, the first cell does not send part or all of the common signals or the common channels.

Optionally, the first message is transmitted repeatedly.

Optionally, the number of repetitions of the first message is configured by a network device, or pre-configured, or determined by the terminal device.

Optionally, the terminal device further includes a determining module 1020. The determining module 1020 is configured to determine that the first cell is unavailable, or the first cell is barred from access, or the first cell is barred from access for a period of time, when a first condition being met within a first duration after sending the first message. The first condition includes one or more of: the terminal device does not receive a response message to the first message; the first cell does not perform state transition; the first cell does not send at least one of the SSB, the MIB, the SIB, and the paging message; the terminal device fails to acquire part or all of the common signals of the first cell; the first cell does not activate cell DTX/DRX; the first cell does not deactivate cell DTX/DRX; the first cell does not modify cell DTX/DRX; and the first cell does not use the recommended cell DTX/DRX parameter.

Optionally, within the first duration, the first message is transmitted repeatedly for N times.

Optionally, the sending module is configured to resend the first message when the first duration expires, in response to that the terminal device determines that the first cell is unavailable, or the first cell is barred from access, or the first cell is barred from access for a period of time.

Optionally, the terminal device further includes an activation module. The activation module is configured to start a timer when the terminal device sends the first message. The timer includes a first timer, and a duration of the first timer is equal to the first duration. Or, the timer includes a second timer, and a duration of the second timer is equal to the first duration or a second duration.

Optionally, the first duration and/or the second duration is used to determine one or more of: whether the first cell can be used for camping on/cell selection/cell reselection of the terminal device; whether the first message is sent successfully; whether a network state of the first cell is transitioned; whether the first cell activates cell DTX/DRX; whether the first cell deactivates cell DTX/DRX; whether the first cell modifies cell DTX/DRX; whether the first cell uses the recommended cell DTX/DRX; whether the terminal device can receive at least one of the SSB, the MIB, the SIB, and the paging message of the first cell; whether the terminal device can receive part or all of the common signals of the first cell; whether the terminal device can perform network access from the first cell; whether the terminal device can perform an RACH in the first cell; whether the terminal device can receive SI other than the MIB of the first cell; whether the terminal device can receive part or all of the SI of the first cell; whether the terminal device can receive part or all of information contained in the SI of the first cell; whether the terminal device can receive the paging message of the first cell; and whether the terminal device can receive the SI update indication of the first cell.

Optionally, the sending module 1010 may be a transceiver 2230. The terminal device 1000 may further include a processor 2210 and a memory 2220, as illustrated in FIG. 22.

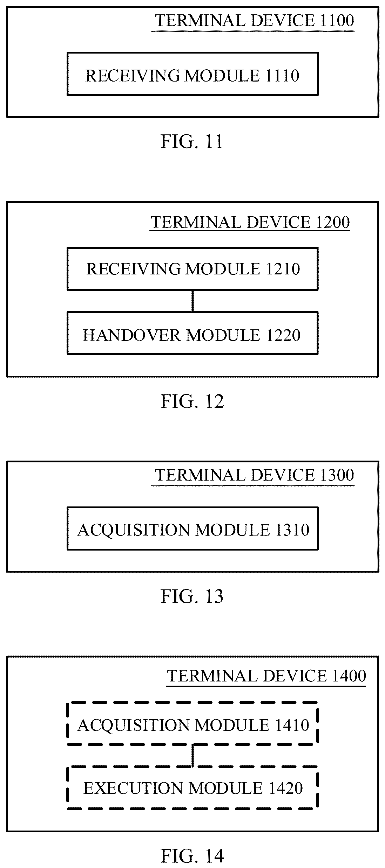

FIG. 11 is a schematic structural diagram of a terminal device provided in yet another embodiment of the disclosure. A terminal device 1100 illustrated in FIG. 11 may include a receiving module 1110.

The receiving module 1110 is configured to cause a terminal device to not receive a PRS of a first cell or to receive the PRS of the first cell according to first configuration information when the first cell is in a first state. The first configuration information is used to indicate PRS configuration of one or more cells. The first state includes one or more of: an energy-saving state, an off state, a state of being in a cell DTX/DRX non-active time period, and a state of being in a time period of using an energy-saving technology.

Optionally, the first configuration information is determined based on second configuration information. The second configuration information is used to indicate DTX/DRX configuration of the first cell.

Optionally, the second configuration information is sent to a positioning server by the terminal device, the first cell, or a network device to which the first cell belongs. The first configuration information is sent by the positioning server to the terminal device.

Optionally, the first configuration information is used to configure or adjust the second configuration information. The second configuration information is used to indicate the DTX/DRX configuration of the first cell.

Optionally, the first configuration information is sent to the first cell, a base station of the first cell, or the terminal device by a positioning server. Or, the first configuration information is sent to the terminal device by the positioning server and then sent to the first cell or the base station of the first cell by the terminal device.

Optionally, the receiving module 1110 may be a transceiver 2230. The terminal device 1100 may further include a processor 2210 and a memory 2220, as illustrated in FIG. 22.

FIG. 12 is a schematic structural diagram of a terminal device provided in yet another embodiment of the disclosure. A terminal device 1200 illustrated in FIG. 12 may include a receiving module 1210 and a handover module 1220.

The receiving module 1210 can be configured to receive first handover configuration sent by a first cell. The first handover configuration includes one or more handover conditions.

The handover module 1220 can be configured to execute cell handover according to the first handover configuration.

Optionally, the first cell is one or more of: an energy-saving cell; a cell in an energy-saving state; a cell in an off state; a cell using an energy-saving technology; a cell with an energy-saving capability; a cell where an energy-saving terminal device camps on, selects, or accesses; a cell serving the energy-saving terminal device; and a cell using cell DTX/DRX.

Optionally, the first cell does not send an SSB; or, the first cell does not send an MIB; or, the first cell does not send part or all of SIBs; or, the first cell does not send the SSB and the SIB; or, the first cell does not send part or all of information contained in the SIB; or the first cell does not send part or all of common signals/common channels; or, the first cell does not send SI other than the MIB; or, the first cell does not send part or all SI; or, the first cell does not send part or all of information contained in the SI; or, the first cell does not send a paging message; or the first cell does not send an SI update indication; or, the first cell does not send part or all of the common signals or the common channels.

Optionally, the one or more handover conditions include at least one of: a handover condition related to a channel quality; a time-based handover condition; a handover condition related to an energy-saving state, state transition, or state indication of a source cell; and a handover condition related to energy-saving state, state transition, or state indication of a target cell.

Optionally, the time-based handover condition includes a handover condition related to a time when the first cell enters the energy-saving state, activates the energy-saving technology, or is turned off.

Optionally, the handover condition related to energy-saving state, state transition, or state indication of the source cell includes: a handover condition related to the first sell entering the energy-saving state, activating the energy-saving technology, being in a cell off state, or performing state transition; or, a handover condition which is indication information indicating to the first cell to enter the energy-saving state, activate the energy-saving technology, or turn off. The handover condition related to energy-saving state, state transition, or state indication of the target cell includes: the handover condition related to the first cell entering the energy-saving state, activating the energy-saving technology, being in a cell off state, or performing state transition; or, the handover condition which is indication information indicating to the first cell to enter the energy-saving state, activate the energy-saving technology, or turn off.

Optionally, the terminal device further includes an execution module. The execution module is configured to perform one or more of the following when a second condition is met: executing cell handover, determining that a handover event is met, and determining a target candidate cell meeting the handover condition as a triggered cell. The second condition includes: when the handover condition includes one condition, the one handover condition is met; or, when the handover condition includes multiple conditions, all the multiple handover conditions are met.

Optionally, each of the one or more handover conditions is configured or executed alone, or at least two of the multiple handover conditions are configured or executed together.

Optionally, the first handover configuration only configures one of: the handover condition related to channel quality; the time-based handover condition; the handover condition related to energy-saving state, state transition, or state indication of the source cell; and the handover condition related to energy-saving state, state transition, or state indication of the target cell.

Optionally, one of the following handover conditions is required to be configured or executed simultaneously with other handover conditions: the time-based handover condition; the handover condition related to energy-saving state, state transition, or state indication of the source cell; and the handover condition related to energy-saving state, state transition, or state indication of the target cell.

Optionally, the one or more handover conditions include the handover condition related to channel quality and the time-based handover condition. If the handover condition related to channel quality and the time-based handover condition are contained in the same handover configuration, the terminal device executes cell handover when both the handover condition related to channel quality and the time-based handover condition are met. And/or, if the handover condition related to channel quality and the time-based handover condition are contained in different handover configurations, the terminal device executes cell handover when the handover condition related to channel quality is met. And/or, if the handover condition related to channel quality and the time-based handover condition are contained in different handover configurations, the terminal device executes cell handover when the time-based handover condition is met.

Optionally, the one or more handover conditions include the handover condition related to channel quality and at least one of: the handover condition related to energy-saving state, state transition, or state indication of the source cell, and the handover condition related to energy-saving state, state transition, or state indication of the target cell. If the handover condition related to channel quality and the handover condition related to energy-saving state, state transition, or state indication of the source cell are contained in the same handover configuration, the terminal device executes cell handover when both the handover condition related to channel quality and the handover condition related to energy-saving state, state transition, or state indication of the source cell are met. And/or, if the handover condition related to channel quality and the handover condition related to energy-saving state, state transition, or state indication of the target cell are contained in the same handover configuration, the terminal device executes cell handover when both the handover condition related to channel quality and the handover condition related to energy-saving state, state transition, or state indication of the target cell are met. And/or, if the handover condition related to channel quality and the handover condition related to energy-saving state, state transition, or state indication of the source cell are contained in different handover configurations, the terminal device executes cell handover when the handover condition related to channel quality is met. And/or, if the handover condition related to channel quality and the handover condition related to energy-saving state, state transition, or state indication of the target cell are contained in different handover configurations, the terminal device executes cell handover when the handover condition related to channel quality is met. And/or, if the handover condition related to channel quality and the handover condition related to energy-saving state, state transition, or state indication of the source cell are contained in different handover configurations, the terminal device executes cell handover when the handover condition related to energy-saving state, state transition, or state indication of the source cell is met. And/or, if the handover condition related to channel quality and the handover condition related to energy-saving state, state transition, or state indication of the target cell are contained in different handover configurations, the terminal device executes cell handover when the handover condition related to energy-saving state, state transition, or state indication of the target cell is met.

Optionally, the one or more handover conditions include the handover condition related to channel quality. The terminal device executes cell handover when the handover condition related to channel quality is met.

Optionally, the one or more handover conditions include the time-based handover condition. The terminal device executes cell handover when the time-based handover condition is met.

Optionally, the one or more handover conditions include the handover condition related to energy-saving state, state transition, or state indication of the source cell. The terminal device executes cell handover when the handover condition related to energy-saving state, state transition, or state indication of the source cell is met. Or, the one or more handover conditions include the handover condition related to energy-saving state, state transition, or state indication of the target cell. The terminal device executes cell handover when the handover condition related to energy-saving state, state transition, or state indication of the target cell is met.

Optionally, the receiving module 1210 may be a transceiver 2230, and the handover module may be a processor 2210. The terminal device 1200 may further include a memory 2220, as specifically illustrated in FIG. 22.

FIG. 13 is a schematic structural diagram of a terminal device provided in yet another embodiment of the disclosure. A terminal device 1300 illustrated in FIG. 13 may be any of the aforementioned first terminal devices. The terminal device 1300 may include an acquisition module 1310.

The acquisition module is configured to acquire third information of a first cell. The third information is used to determine one or more of: whether the first terminal device can access/select/reselect the first cell, whether a second terminal device can access/select/reselect the first cell, whether the first cell is barred, whether the first cell is a candidate cell, and whether the first cell is a reserved cell.

Optionally, the third information is carried in an SIB1 or an MIB. And/or, the third information is cell-reserved information or cell-barred information. And/or, the third information is information for determining whether a cell is the reserved cell or barring information for determining whether the cell is a barred cell.

Optionally, the first cell includes fourth information. The fourth information is used for the second terminal device to determine one or more of: whether the second terminal device can access/select/reselect the first cell, whether the first cell is barred, whether the first cell is the candidate cell, whether the first cell is a suitable cell or an acceptable cell, and whether the first cell is the reserved cell. The fourth information is acquired by the second terminal device in one or more of the following situations: acquiring the third information, determining that the third information indicates reservation or barring, and ignoring the third information.

Optionally, the fourth information is carried in SIB1 or MIB.

Optionally, the fourth information is indication information dedicated for some terminal devices. Or, the fourth information is indication information for the second terminal device. Or, the fourth information is indication information dedicated for at least one of the following types of terminal devices: a terminal device with an energy-saving capability, a terminal device using an energy-saving technology, a terminal device of a specific version, a terminal device capable of using one or more energy-saving technologies, and a terminal device allowed to access, access with priority, select, or reselect the first cell.

Optionally, the first terminal device is different from the second terminal device. And/or, the first terminal device include at least one of: a terminal device without the energy-saving capability, a terminal device not using the energy-saving technology, a terminal device of a non-specific version, a terminal device unable to use one or more energy-saving technologies, a terminal device barred from accessing the first cell, a terminal device with low priority in accessing the first cell, a terminal device barred from selecting the first cell, a terminal device with low priority in selecting the first cell, a terminal device barred from reselecting the first cell, and a terminal device with low priority in reselecting the first cell. And/or, the second terminal device include at least one of: a terminal device with the energy-saving capability, a terminal device using the energy-saving technology, a terminal device of the specific version, a terminal device capable of using one or more energy-saving technologies, a terminal device allowed to access the first cell, a terminal device with priority in accessing the first cell, a terminal device allowed to select the first cell, a terminal device with priority in selecting the first cell, a terminal device allowed to reselect the first cell, and a terminal device with priority in reselecting the first cell. And/or, the first cell includes at least one of: a cell that gives priority to the second terminal device to access, select, or reselect, a cell that allows the second terminal device to access, select, or reselect, a cell that gives low priority to the first terminal device to access, select, or reselect, a cell that does not allow the first terminal device to access, select, or reselect, a cell in an energy-saving state, a cell in an off state, a cell using the energy-saving technology, a cell with the energy-saving capability, a cell where an energy-saving terminal device camps on, selects, or accesses, a cell serving the energy-saving terminal device, and a cell using a cell DTX/DRX technology.

Optionally, the acquisition module 1310 may be a transceiver 2230. The terminal device 1300 may further include a processor 2210 and a memory 2220, as illustrated in FIG. 22.

FIG. 14 is a schematic structural diagram of a terminal device provided in yet another embodiment of the disclosure. A terminal device 1400 illustrated in FIG. 14 may be any of the aforementioned second terminal devices. The terminal device 1400 may include an acquisition module 1410 and/or an execution module 1420.

The acquisition module 1410 can be configured to acquire fourth information of a first cell.

The execution module 1420 can be configured to perform one or more of: acquiring third information of the first cell, determining that the third information indicates reservation or barring, and ignoring the third information. The fourth information is used to determine one or more of: whether the second terminal device can access/select/reselect the first cell, whether the first cell is barred, whether the first cell is a candidate cell, whether the first cell is a suitable cell or an acceptable cell, and whether the first cell is a reserved cell.

Optionally, the fourth information is carried in an SIB1 or an MIB.

Optionally, the fourth information is indication information dedicated for some terminal devices. Or, the fourth information is indication information for the second terminal device. Or, the fourth information is indication information dedicated for at least one of the following types of terminal devices: a terminal device with an energy-saving capability, a terminal device using an energy-saving technology, a terminal device of a specific version, a terminal device capable of using one or more energy-saving technologies, and a terminal device allowed to access, access with priority, select, or reselect the first cell.

Optionally, the third information is used to determine one or more of: whether the first terminal device can access/select/reselect the first cell, whether the second terminal device can access/select/reselect the first cell, whether the first cell is barred, whether the first cell is the candidate cell, and whether the first cell is the reserved cell.

Optionally, the first terminal device is different from the second terminal device. And/or, the first terminal device includes at least one of: a terminal device without the energy-saving capability, a terminal device not using the energy-saving technology, a terminal device of a non-specific version, a terminal device unable to use one or more energy-saving technologies, a terminal device barred from accessing the first cell, a terminal device with low priority in accessing the first cell, a terminal device barred from selecting the first cell, a terminal device with low priority in selecting the first cell, a terminal device barred from reselecting the first cell, and a terminal device with low priority in reselecting the first cell. And/or, the second terminal device include at least one of: a terminal device with the energy-saving capability, a terminal device using the energy-saving technology, a terminal device of the specific version, a terminal device capable of using one or more energy-saving technologies, a terminal device allowed to access the first cell, a terminal device with priority in accessing the first cell, a terminal device allowed to select the first cell, a terminal device with priority in selecting the first cell, a terminal device allowed to reselect the first cell, and a terminal device with priority in reselecting the first cell. And/or, the first cell includes at least one of: a cell that gives priority to the second terminal device to access, select, or reselect, a cell that allows the second terminal device to access, select, or reselect, a cell that gives low priority to the first terminal device to access, select, or reselect, a cell that does not allow the first terminal device to access, select, or reselect, a cell in an energy-saving state, a cell in an off state, a cell using the energy-saving technology, a cell with the energy-saving capability, a cell where an energy-saving terminal device camps on, selects, or accesses, a cell serving the energy-saving terminal device, and a cell using cell DTX/DRX technology.

Optionally, the acquisition module 1410 can be a transceiver 2230, and the execution module 1420 can be a processor 2210. The terminal device 1400 can also include a memory 2220, as illustrated in FIG. 22.

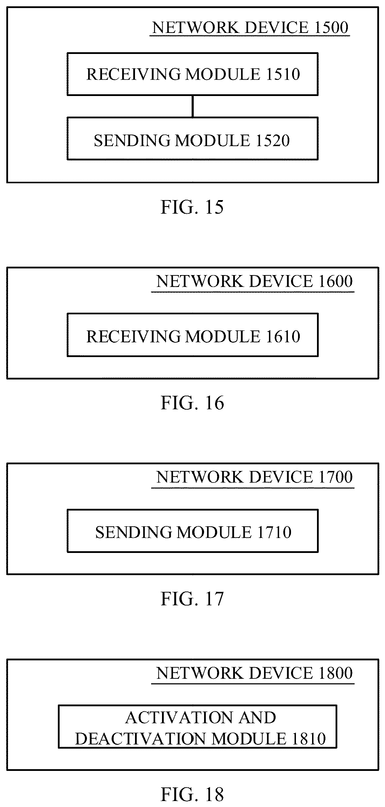

FIG. 15 is a schematic structural diagram of a network device provided in an embodiment of the disclosure. A network device 1500 illustrated in FIG. 15 may be a network device corresponding to any of the aforementioned first cells. The network device 1500 may include a receiving module 1510 and a sending module 1520.

The receiving module 1510 can be configured to receive a first request message sent by a terminal device. The first request message is used to acquire first information of the first cell. The first information is associated with SI and/or an SSB of the first cell.

The sending module 1520 can be configured to send the first information to the terminal device.

Optionally, the first information is used to indicate one or more of the following information: part or all SI of the first cell; information related to accessing, camping on, selecting, or reselecting the first cell; information related to paging of the first cell; and information for performing paging in the first cell.

Optionally, the first information includes one or more of the following information: an SIB, SIB1, part or all of other SIBs except SIB1 in the SIB, part or all of information contained in the SIB, and part or all SI.

Optionally, the first information includes one or more of the following information: slice information supported by the first cell; frequency information of the first cell; frequency priority information of the first cell; parameter information for selecting the first cell; parameter information for reselecting the first cell; information on whether the first cell is barred from access; configuration information of a common channel or a common signal; time-frequency resource information of the common channel or the common signal; configuration information for accessing, selecting, or reselecting the first cell; time-frequency resource information for accessing, selecting, or reselecting the first cell; configuration information for paging in the first cell; and time-frequency resource information for paging in the first cell.

Optionally, a broadcast status of the first information is not broadcasting. Or, the first information is broadcasted/indicated per request.

Optionally, the first cell does not send the SSB; or, the first cell does not send part or all of SIBs; or, the first cell does not send the SSB and the SIB; or, the first cell does not send part or all of information contained in the SIB; or, the first cell does not send SI other than an MIB; or, the first cell does not send part or all SI; or, the first cell does not send part or all of information contained in the SI; or, the first cell does not send a paging message; or, the first cell does not send an SI update indication; or, the first cell does not send part or all of common signals or common channels.

Optionally, the first request message is sent on a first resource. The first resource is a pre-configured resource or a pre-defined resource. Or, the first resource is a resource used for random access.

Optionally, the resource used for random access includes a resource used for sending a preamble, and/or a PRACH resource.

Optionally, the resource used for random access corresponds to one or more of the following resources: a resource of the first cell, a dedicated resource for the first information, and a dedicated resource for requesting the first information.

Optionally, the resource used for random access is sent by a second cell to the terminal device.

Optionally, the resource used for random access is carried in the SIB or an RRC dedicated message of the second cell.

Optionally, the second cell is one of: an anchor cell of the first cell; a PCell of the terminal device; a PSCell of the terminal device; a cell providing information of the first cell; a cell that the terminal device is currently accessing, camping on, or selecting; and a cell associated with the first cell.

Optionally, the first request message includes one or more of: a value of the first information, an index of the first information, a bitmap of the first information, a value of the first information required, an index of the first information required, and a bitmap of the first information required.

Optionally, the first request message is sent when a first condition is met, and the first condition includes at least one of: the terminal device detects the SSB of the first cell, a channel quality of the first cell is greater than or equal to a first threshold, the first cell meets a R criterion or a S criterion, the first cell is a cell selected or reselected by the terminal device, the terminal device selects or reselects the first cell, the terminal device has data to-be-transmitted, an amount of data to-be-transmitted by the terminal device is greater than a second threshold, a slice required by the terminal device matches a slice supported by the first cell, a final check is required in the first cell, accessing to the first cell is required, camping on the first cell is required, transmitting data in the first cell is required, and selecting or reselecting the first cell is required.

Optionally, the first request message is a message used for random access. Or the first request message is an RRC dedicated message or UCI dedicated information.

Optionally, different first information corresponds to the same first request message. Or, multiple types of first information correspond to the same first request message. Or, different first information corresponds to different first request messages. Or, the multiple types of first information correspond to different first request messages.

Optionally, the first information includes an SIB1 of the first cell. The first information is used to acquire second information, and the second information includes one or more of: other SIBs except SIB1 of the first cell, updated SI of the first cell, RACH configuration of the first cell, and paging configuration of the first cell.

Optionally, the sending module can be further configured to send a paging message. Configuration of the paging message is determined based on the first information.

Optionally, a transmission occasion of the paging message appears periodically. Or, the transmission occasion of the paging message appears in a discontinuous manner.

Optionally, the transmission occasion of the paging message is used for the terminal device to monitor the paging message.

Optionally, the receiving module 1510 and the sending module 1520 may be a transceiver 2230. The network device 1500 may also include a processor 2210 and a memory 2220, as illustrated in FIG. 22.

FIG. 16 is a schematic structural diagram of a network device provided in another embodiment of the disclosure. A network device 1600 illustrated in FIG. 16 may be a network device corresponding to any of the aforementioned first cells. The network device 1600 may include a receiving module 1610.

The receiving module 1610 can be configured to receive a first message sent by a terminal device. The first message is used to indicate one or more of: requesting the first cell to perform state transition; requesting the first cell to send at least one of an SSB, an MIB, an SIB, and a paging message; requesting the first cell to send part or all common signals; the terminal device has a requirement for data transmission; the terminal device has a requirement for network access; requesting the first cell to activate cell DTX/DRX; requesting the first cell to deactivate cell DTX/DRX; requesting the first cell to modify cell DTX/DRX; requesting the first cell to use a recommended cell DTX/DRX parameter; and recommending a cell DTX/DRX parameter to the first cell.

Optionally, the first cell is one or more of: an energy-saving cell; a cell in an energy-saving state; a cell in an off state; a cell using an energy-saving technology; a cell with an energy-saving capability; a cell where an energy-saving terminal device camps on, selects, or accesses; and a cell serving the energy-saving terminal device.

Optionally, the first cell does not send the SSB. Or, the first cell does not send the MIB. Or, the first cell does not send part or all of SIBs. Or, the first cell does not send the SSB and the SIB. Or, the first cell does not send part or all of information contained in the SIB. Or, the first cell does not send part or all of common signals/common channels. Or, the first cell does not send SI other than the MIB. Or, the first cell does not send part or all SI. Or, the first cell does not send part or all of information contained in the SI. Or, the first cell does not send a paging message. Or, the first cell does not send an SI update indication. Or, the first cell does not send part or all of the common signals or the common channels.

Optionally, the first message is transmitted repeatedly.

Optionally, the number of repetitions of the first message is configured by a network device, or pre-configured, or determined by the terminal device.

Optionally, the receiving module can further be configured to re-receive the first message. The first message is sent by the terminal device, in response to that a first duration expires after last sending of the first message and the terminal device determines that the first cell is unavailable, or the first cell is barred from access, or the first cell is barred from access for a period of time.

Optionally, the first duration is used to determine one or more of: whether the first cell can be used for camping on/cell selection/cell reselection of the terminal device; whether the first message is sent successfully; whether a network state of the first cell is transitioned; whether the first cell activates cell DTX/DRX; whether the first cell deactivates cell DTX/DRX; whether the first cell modifies cell DTX/DRX; whether the first cell uses the recommended cell DTX/DRX; whether the terminal device can receive at least one of the SSB, the MIB, the SIB, and a paging message of the first cell; whether the terminal device can receive part or all of the common signals of the first cell; whether the terminal device can perform network access from the first cell; whether the terminal device can perform an RACH in the first cell; whether the terminal device can receive SI other than the MIB of the first cell; whether the terminal device can receive part or all of the SI of the first cell; whether the terminal device can receive part or all of information contained in the SI of the first cell; whether the terminal device can receive the paging message of the first cell; and whether the terminal device can receive the SI update indication from the first cell.

Optionally, the receiving module 1610 may be a transceiver 2230. The network device 1600 may further include a processor 2210 and a memory 2220, as illustrated in FIG. 22.

FIG. 17 is a schematic structural diagram of a network device provided in yet another embodiment of the disclosure. A network device 1700 illustrated in FIG. 17 may be a network device corresponding to any of the aforementioned first cells. The network device 1700 may include a sending module 1710.

The sending module 1710 can be configured to not send a PRS or sends the PRS according to first configuration information when the first cell is in a first state. The first configuration information is used to indicate PRS configuration of one or more cells. The first state includes one or more of: an energy-saving state; an off state; a state of being in a cell DTX/DRX non-active time period; and a state of being in a time period of using an energy-saving technology.

Optionally, the first configuration information is determined based on second configuration information. The second configuration information is used to indicate DTX/DRX configuration of the first cell.

Optionally, the second configuration information is sent to a positioning server by the first cell, the network device to which the first cell belongs, or the terminal device. The first configuration information is sent to the first cell by the positioning server or the terminal device.

Optionally, the first configuration information is used to configure or adjust second configuration information. The second configuration information is used to indicate the DTX/DRX configuration of the first cell.

Optionally, the first configuration information is sent to the first cell, a base station of the first cell, or the terminal device by a positioning server. Or, the first configuration information is sent to the terminal device by the positioning server and then sent to the first cell or the base station of the first cell by the terminal device.

Optionally, the sending module 1710 may be a transceiver 2230. The network device 1700 may further include a processor 2210 and a memory 2220, as illustrated in FIG. 22.

FIG. 18 is a schematic structural diagram of a network device provided in yet another embodiment of the disclosure. A network device 1800 illustrated in FIG. 18 may be a network device corresponding to any of the aforementioned first cells. The network device 1800 may include an activation or deactivation module 1810.

The activation or deactivation module 1810 can be configured to activate or deactivate DTX/DRX configuration of the first cell by using a first signaling.

Optionally, the first signaling is an MAC CE.

Optionally, the first signaling is associated with an LCID. The first signaling is used to activate or deactivate one LCID. Or the first signaling is used to activate or deactivate multiple LCIDs.

Optionally, a payload of the first signaling is one of: a fixed value, a variable value, and a default value.

Optionally, the first signaling includes one or more of: an activation or deactivation indication, an index of cell DTX, and an index of cell DRX.

Optionally, the activation or deactivation module 1810 may be a processor 2210. The network device 1800 may further include a memory 2220 and a transceiver 2230, as specifically illustrated in FIG. 22.

FIG. 19 is a schematic structural diagram of a network device provided in yet another embodiment of the disclosure. A network device 1900 illustrated in FIG. 19 may be a network device corresponding to any of the aforementioned first cells. The network device 1900 may include a sending module 1910.

The sending module 1910 can be configured to send first handover configuration to a terminal device. The first handover configuration includes one or more handover conditions. The first handover configuration is used for cell handover by the terminal device.

Optionally, the first cell is one or more of: an energy-saving cell; a cell in an energy-saving state; a cell in an off state; a cell using an energy-saving technology; a cell with an energy-saving capability; a cell where an energy-saving terminal device camps on, selects, or accesses; a cell serving the energy-saving terminal device; and a cell using cell DTX/DRX.

Optionally, the first cell does not send an SSB. Or, the first cell does not send an MIB. Or, the first cell does not send part or all of SIBs. Or, the first cell does not send the SSB and the SIB. Or, the first cell does not send part or all of information contained in the SIB. Or, the first cell does not send part or all of common signals/common channels. Or, the first cell does not send SI other than the MIB. Or, the first cell does not send part or all SI. Or, the first cell does not send part or all of information contained in the SI. Or, the first cell does not send a paging message. Or, the first cell does not send an SI update indication. Or, the first cell does not send part or all of the common signals or the common channels.

Optionally, the one or more handover conditions include at least one of: a handover condition related to a channel quality; a time-based handover condition; a handover condition related to an energy-saving state, state transition, or state indication of a source cell; and a handover condition related to energy-saving state, state transition, or state indication of a target cell.

Optionally, the time-based handover condition includes a handover condition related to a time when the first cell enters the energy-saving state, activates the energy-saving technology, or is turned off.

Optionally, the handover condition related to energy-saving state, state transition, or state indication of the source cell includes: a handover condition related to the first sell entering the energy-saving state, activating the energy-saving technology, being in a cell off state, or performing state transition; or, a handover condition which is indication information indicating to the first cell to enter the energy-saving state, activate the energy-saving technology, or turn off. Or, the handover condition related to energy-saving state, state transition, or state indication of the target cell includes: the handover condition related to the first cell entering the energy-saving state, activating the energy-saving technology, being in a cell off state, or performing state transition; or, the handover condition which is indication information indicating to the first cell to enter the energy-saving state, activate the energy-saving technology, or turn off.

Optionally, when a second condition is met, the handover condition is used for one or more of: executing cell handover, determining a handover event is met, and determining a target candidate cell meeting the handover condition as a triggered cell. The second condition includes: when the handover condition includes one condition, the one handover condition is met; or, when the handover condition includes multiple conditions, all of the multiple handover conditions are met.

Optionally, each of the one or more handover conditions is configured or executed alone, or at least two of the multiple handover conditions are configured or executed together.

Optionally, the first handover configuration only configures one of: the handover condition related to channel quality; the time-based handover condition; the handover condition related to energy-saving state, state transition, or state indication of the source cell; and the handover condition related to energy-saving state, state transition, or state indication of the target cell.

Optionally, one of the following handover conditions is required to be configured or executed simultaneously with other handover conditions: the time-based handover condition; the handover condition related to energy-saving state, state transition, or state indication of the source cell; and the handover condition related to energy-saving state, state transition, or state indication of the target cell.

Optionally, the one or more handover conditions include the handover condition related to channel quality and the time-based handover condition. If the handover condition related to channel quality and the time-based handover condition are contained in the same handover configuration, the terminal device executes cell handover when both the handover condition related to channel quality and the time-based handover condition are met. And/or, if the handover condition related to channel quality and the time-based handover condition are contained in different handover configurations, the terminal device executes cell handover when the handover condition related to channel quality is met. And/or, if the handover condition related to channel quality and the time-based handover condition are contained in different handover configurations, the terminal device executes cell handover when the time-based handover condition is met.

Optionally, the one or more handover conditions include the handover condition related to channel quality and at least one of: the handover condition related to energy-saving state, state transition, or state indication of the source cell, and the handover condition related to energy-saving state, state transition, or state indication of the target cell. If the handover condition related to channel quality and the handover condition related to energy-saving state, state transition, or state indication of the source cell are contained in the same handover configuration, the terminal device executes cell handover when both the handover condition related to channel quality and the handover condition related to energy-saving state, state transition, or state indication of the source cell are met. And/or, if the handover condition related to channel quality and the handover condition related to energy-saving state, state transition, or state indication of the target cell are contained in the same handover configuration, the terminal device executes cell handover when both the handover condition related to channel quality and the handover condition related to energy-saving state, state transition, or state indication of the target cell are met. And/or, if the handover condition related to channel quality and the handover condition related to energy-saving state, state transition, or state indication of the source cell are contained in different handover configurations, the terminal device executes cell handover when the handover condition related to channel quality is met. And/or, if the handover condition related to channel quality and the handover condition related to energy-saving state, state transition, or state indication of the target cell are contained in different handover configurations, the terminal device executes cell handover when the handover condition related to channel quality is met. And/or, if the handover condition related to channel quality and the handover condition related to energy-saving state, state transition, or state indication of the source cell are contained in different handover configurations, the terminal device executes cell handover when the handover condition related to energy-saving state, state transition, or state indication of the source cell is met. And/or, if the handover condition related to channel quality and the handover condition related to energy-saving state, state transition, or state indication of the target cell are contained in different handover configurations, the terminal device executes cell handover when the handover condition related to energy-saving state, state transition, or state indication of the target cell is met.

Optionally, the one or more handover conditions include the handover condition related to channel quality. The cell handover is executed when the handover condition related to channel quality is met.

Optionally, the one or more handover conditions include the time-based handover condition. The cell handover is executed when the time-based handover condition is met.

Optionally, the one or more handover conditions include the handover condition related to energy-saving state, state transition, or state indication of the source cell, and the terminal device executes cell handover when the handover condition related to energy-saving state, state transition, or state indication of the source cell is met. Or, the one or more handover conditions include the handover condition related to energy-saving state, state transition, or state indication of the target cell, and the terminal device executes cell handover when the handover condition related to energy-saving state, state transition, or state indication of the target cell is met.

Optionally, the sending module 1910 can be a transceiver 2230. The network device 1900 may also include a processor 2210 and a memory 2220, as illustrated in FIG. 22.

FIG. 20 is a schematic structural diagram of a network device provided in yet another embodiment of the disclosure. A network device 2000 illustrated in FIG. 20 may be a network device corresponding to any of the aforementioned first cells. The network device 2000 may include a first sending module 2010.

The first sending module 2010 can be configured to send third information of the first cell to a first terminal device. The third information is used to determine one or more of: whether the first terminal device can access/select/reselect the first cell, whether a second terminal device can access/select/reselect the first cell, whether the first cell is barred, whether the first cell is a candidate cell, and whether the first cell is a reserved cell.

Optionally, the third information is carried in an SIB1 or an MIB. And/or, the third information is cell-reserved information or cell-barred information. And/or, the third information is information for determining whether a cell is the reserved cell or barring information for determining whether the cell is a barred cell.

Optionally, the network device further includes a second sending module 2020. The second sending module 2020 is configured to send fourth information to the second terminal device. The fourth information is used for the second terminal device to determine one or more of: whether the second terminal device can access/select/reselect the first cell, whether the first cell is barred, whether the first cell is the candidate cell, whether the first cell is a suitable cell or an acceptable cell, and whether the first cell is the reserved cell. The fourth information is acquired by the second terminal device in one or more of the following situations: acquiring the third information, determining that the third information indicates reservation or barring, and ignoring the third information.

Optionally, the fourth information is carried in SIB1 or MIB.

Optionally, the fourth information is indication information dedicated for some terminal devices. Or, the fourth information is indication information for the second terminal device. Or, the fourth information is indication information dedicated for at least one of the following types of terminal devices: a terminal device with an energy-saving capability, a terminal device using an energy-saving technology, a terminal device of a specific version, a terminal device capable of using one or more energy-saving technologies, and a terminal device allowed to access, access with priority, select, or reselect the first cell.

Optionally, the first terminal device is different from the second terminal device. And/or, the first terminal device includes at least one of: a terminal device without the energy-saving capability, a terminal device not using the energy-saving technology, a terminal device of a non-specific version, a terminal device unable to use one or more energy-saving technologies, a terminal device barred from accessing the first cell, a terminal device with low priority in accessing the first cell, a terminal device barred from selecting the first cell, a terminal device with low priority in selecting the first cell, a terminal device barred from reselecting the first cell, and a terminal device with low priority in reselecting the first cell. And/or, the second terminal device includes at least one of: a terminal device with the energy-saving capability, a terminal device using the energy-saving technology, a terminal device of the specific version, a terminal device capable of using one or more energy-saving technologies, a terminal device allowed to access the first cell, a terminal device with priority in accessing the first cell, a terminal device allowed to select the first cell, a terminal device with priority in selecting the first cell, a terminal device allowed to reselect the first cell, and a terminal device with priority in reselecting the first cell. And/or, the first cell includes at least one of: a cell that gives priority to the second terminal device to access, select, or reselect, a cell that allows the second terminal device to access, select, or reselect, a cell that gives low priority to the first terminal device to access, select, or reselect, a cell that does not allow the first terminal device to access, select, or reselect, a cell in an energy-saving state, a cell in an off state, a cell using the energy-saving technology, a cell with the energy-saving capability, a cell where an energy-saving terminal device camps on, selects, or accesses, a cell serving the energy-saving terminal device, and a cell using cell DTX/DRX technology.

Optionally, the first sending module 2010 may be a transceiver 2230. The network device 2000 may further include a processor 2210 and a memory 2220, as illustrated in FIG. 22.

FIG. 21 is a schematic structural diagram of a network device provided in yet another embodiment of the disclosure. A network device 2100 illustrated in FIG. 21 may be a network device corresponding to any of the aforementioned second cells. The network device 2100 may include a sending module 2110.

The sending module 2110 can be configured to send first information of a first cell to a terminal device. The first information is associated with SI and/or an SSB of the first cell.

Optionally, the first information is used to indicate one or more of the following information: part or all SI of the first cell; information related to accessing, camping on, selecting, or reselecting the first cell; and information related to paging of the first cell or information for performing paging in the first cell.

Optionally, the first information includes one or more of the following information: an SIB, an SIB1, part or all of other SIBs except SIB1 in the SIB, part or all of information contained in the SIB, and part or all SI.

Optionally, the first information includes one or more of the following information: slice information supported by the first cell; frequency information of the first cell; frequency priority information of the first cell; parameter information for selecting the first cell; parameter information for reselecting to the first cell; information on whether the first cell is barred from access; configuration information of a common channel or a common signal; time-frequency resource information of the common channel or the common signal; configuration information for accessing, selecting, or reselecting the first cell; time-frequency resource information for accessing, selecting, or reselecting the first cell; configuration information for paging in the first cell; and time-frequency resource information for paging in the first cell.

Optionally, a broadcast status of the first information is not broadcasting. Or, the first information is broadcasted/indicated per request.

Optionally, the first cell does not send the SSB. Or, the first cell does not send part or all of SIBs. Or, the first cell does not send the SSB and the SIB. Or, the first cell does not send part or all of information contained in the SIB. Or, the first cell does not send SI other than an MIB. Or, the first cell does not send part or all SI. Or, the first cell does not send part or all of information contained in the SI. Or, the first cell does not send a paging message. Or, the first cell does not send an SI update indication. Or, the first cell does not send part or all of the common signals or the common channels.

Optionally, the first information is carried in SI of the second cell.

Optionally, the first information is sent based on a first request message sent by the terminal device.

Optionally, the first request message is sent on a first resource. The first resource is a pre-configured resource or a pre-defined resource. The first resource is a resource used for random access.

Optionally, the resource used for random access includes a resource used for sending a preamble, and/or a PRACH resource.

Optionally, the resource used for random access corresponds to one or more of the following resources: a resource of the first cell, a dedicated resource for the first information, and a dedicated resource for requesting the first information.

Optionally, the resource used for random access is sent by the second cell to the terminal device.

Optionally, the resource used for random access is carried in the SIB or a dedicated RRC message of the second cell.

Optionally, the first request message includes one or more of: a value of the first information, an index of the first information, a bitmap of the first information, a value of the first information required, an index of the first information required, and a bitmap of the first information required.

Optionally, the first request message is sent when a first condition is met, and the first condition includes at least one of: the terminal device detects the SSB of the first cell; a channel quality of the first cell is greater than or equal to a first threshold; the first cell meets a R criterion or a S criterion; the first cell is a cell selected or reselected by the terminal device; the terminal device selects or reselects the first cell; the terminal device has data to-be-transmitted; an amount of data to-be-transmitted by the terminal device is greater than a second threshold; a slice required by the terminal device matches a slice supported by the first cell; a final check is required in the first cell; accessing to the first cell is required; camping on the first cell is required; transmitting data in the first cell is required; and selecting or reselecting the first cell is required.

Optionally, the first request message is a message used for random access, or the first request message is an RRC dedicated message or UCI dedicated information.

Optionally, different first information corresponds to the same first request message. Or, multiple types of first information correspond to the same first request message. Or, different first information corresponds to different first request messages. Or, the multiple types of first information correspond to different first request messages.

Optionally, the first information includes an SIB1 of the first cell. The first information is used to acquire second information. The second information includes one or more of: other SIBs except SIB1 of the first cell, updated SI of the first cell, RACH configuration of the first cell, and paging configuration of the first cell.

Optionally, the second cell is one of: an anchor cell of the first cell, a PCell of the terminal device, a PSCell of the terminal device, a cell providing information of the first cell, a cell that the terminal device is currently accessing, camping on, or selecting, and a cell associated with the first cell.

Optionally, the sending module 2110 may be a transceiver 2230. The network device 2100 may further include a processor 2210 and a memory 2220, as illustrated in FIG. 22.

FIG. 22 is a schematic structural diagram of a communication apparatus provided in an embodiment of the disclosure. A dashed line illustrated in FIG. 22 represents that a unit or a module is optional. An apparatus 2200 can be used to perform the methods described in the aforementioned method embodiments. The device 2200 may be a chip, a terminal device, or a network device.

The apparatus 2200 may include one or more processors 2210. The processor 2210 can support the apparatus 2200 to perform the methods described in the aforementioned method embodiments. The processor 2210 may be a general-purpose processor or a dedicated processor. For example, the processor may be a central processing unit (CPU). Or, the processor may be other general-purpose processors, a digital signal processor (DSP), an application specific integrated circuit (ASIC), a field programmable gate array (FPGA), or other programmable logic devices, discrete gate or transistor logic devices, discrete hardware components, etc. A general-purpose processor may be a microprocessor, or the processor may be any conventional processor, etc.

The apparatus 2200 may further include one or more memories 2220. A computer program is stored in the memory 2220. The program can be executed by the processor 2210, to cause the processor 2210 to perform the methods described in the aforementioned method embodiments. The memory 2220 may be independent of the processor 2210, or may be integrated into the processor 2210.

The apparatus 2200 may further include a transceiver 2230. The processor 2210 can communicate with other devices or chips through the transceiver 2230. For example, the processor 2210 can send and receive data with other devices or chips via the transceiver 2230.

A computer-readable storage medium is further provided in embodiments of the disclosure. The computer-readable storage medium is configured to store computer programs. The computer-readable storage medium can be applied to a terminal device or a network device provided in embodiments of the disclosure. The computer programs are operable with a computer to perform the methods implemented by the terminal device or the network device in each embodiment of the disclosure.

A computer program product is further provided in embodiments of the disclosure. The computer program product includes computer programs. The computer program product can be applied to the terminal device or the network device provided in embodiments of the disclosure. The computer programs are operable with the computer to perform the methods implemented by the terminal device or the network device in each embodiment of the disclosure.

A computer program is further provided in embodiments of the disclosure. The computer program can be applied to the terminal device or the network device provided in embodiments of the disclosure. The computer program is operable with the computer to perform the methods implemented by the terminal device or the network device in each embodiment of the disclosure.

It can be understood that, the terms "system" and "network" herein can be used interchangeably throughout the disclosure. In addition, terms used in the disclosure are merely intended for explaining embodiments of the disclosure rather than limiting the disclosure. The terms "first", "second", "third", "fourth", and the like used in the specification, the claims, and the accompany drawings of the disclosure are used for distinguishing different objects rather than describing a particular order. In addition, the terms "include", "comprise", and "have" as well as variations thereof are intended to cover non-exclusive inclusion.

In embodiments of the disclosure, the referred "indication" may be a direct indication, may be an indirect indication, or may mean that there is an association relationship. For example, *A* indicates *B* may mean that *A* directly indicates *B,* for instance, *B* can be obtained according to *A;* or may mean that *A* indirectly indicates *B,* for instance, *A* indicates C, and *B* can be obtained according to C; or may mean that that there is an association relationship between *A* and *B.*

In embodiments of the disclosure, *"B* corresponding to *A"* indicates that *B* is associated with *A,* and *B* may be determined according to *A.* However, it can be further understood that, "determine *B* according to *A"* does not mean that *B* is determined according to *A* only, and *B* may also be determined according to *A* and/or other information.

In embodiments of the disclosure, the term "correspondence" may mean that there is a direct or indirect correspondence between the two, or may mean that there is an association between the two, or may mean a relationship of indicating and indicated or configuring and configured, etc.

In embodiments of the disclosure, the term "includes" may refer to either direct inclusion or indirect inclusion. Optionally, the term "includes" mentioned in embodiments of the disclosure can be replaced with "indicating" or "for determining". For example, *"A* includes *B"* can be replaced with *"A* indicates *B"* or *"A* is for determining *B".*

In embodiments of the disclosure, the "pre-defined" or "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

The term "and/or" herein merely describes an association relationship between associated objects, which means that there can be three relationships. For example, A and/or B can mean *A* alone, both *A* and *B* exist, and *B* alone. In addition, the character "/" herein generally indicates that the associated objects are in an "or" relationship.

In various embodiments of the disclosure, the magnitude of a sequence number of each of the aforementioned processes does not imply an execution order, and the execution order between the processes should be determined according to function and internal logic thereof, which shall not constitute any limitation to the implementation of embodiments of the disclosure.

It can be understood that, the systems, devices and methods disclosed in several embodiments provided in the disclosure may be implemented in various other manners. For example, the above apparatus implementations are merely illustrative, e.g., the division of units is only a division of logical functions, and other manners of division may be available in practice, e.g., multiple modules may be combined or may be integrated into another system, or some features may be ignored or skipped. In other respects, the coupling or direct coupling or communication connection as illustrated or discussed may be an indirect coupling or communication connection through some interface or module, and may be electrical, mechanical, or otherwise.

Units illustrated as separated components may or may not be physically separated. Components displayed as units may or may not be physical units, and may reside at one location or may be distributed to multiple networked units. Some or all of the units may be selectively adopted according to practical needs to achieve desired objectives of the solutions of embodiments.

In addition, various functional units described in various embodiments of the disclosure may be integrated into one processing unit or may be present as a number of physically separated units, and two or more units may be integrated into one.

All or some of the aforementioned embodiments can be implemented through software, hardware, firmware, or any other combination thereof. When implemented by software, all or some of the aforementioned embodiments can be implemented in the form of a computer program product. The computer program product includes one or more computer instructions. When the computer instructions are applied and executed on a computer, all or some of the operations or functions of the embodiments of the disclosure are performed. The computer can be a general-purpose computer, a dedicated computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The aforementioned are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A wireless communication method, comprising:
acquiring, by a terminal device, first information of a first cell, wherein the first information is associated with system information (SI) and/or a synchronization signal block (SSB) of the first cell;
wherein the first information is acquired based on a first request message from the terminal device; or, the first information is broadcasted/indicated by a second cell.

2. The method of claim 1, wherein the first information is used to indicate one or more of the following information:
part or all SI of the first cell;
information related to accessing, camping on, selecting, or reselecting the first cell;
information related to paging of the first cell; and
information for performing paging in the first cell.

3. The method of claim 1 or 2, wherein the first information comprises one or more of the following information:
a system information block (SIB);
an SIB1;
part or all other SIBs except the SIB1 in the SIB;
part or all information contained in the SIB; and
part or all SI.

4. The method of any one of claims 1 to 3, wherein the first information comprises one or more of the following information:
slice information supported by the first cell;
frequency information of the first cell;
frequency priority information of the first cell;
parameter information for selecting the first cell;
parameter information for reselecting the first cell;
information on whether the first cell is barred from access;
configuration information of a common channel or a common signal;
time-frequency resource information of the common channel or the common signal;
configuration information for accessing, selecting, or reselecting the first cell;
time-frequency resource information for accessing, selecting, or reselecting the first cell;
configuration information for paging in the first cell; and
time-frequency resource information for paging in the first cell.

5. The method of any one of claims 1 to 4, wherein a broadcast status of the first information is not broadcasting; or, the first information is broadcasted/indicated upon request.

6. The method of any one of claims 1 to 5, wherein:
the first cell does not send the SSB; or,
the first cell does not send part or all SIBs; or,
the first cell does not send the SSB and the SIB; or,
the first cell does not send part or all information contained in the SIB; or,
the first cell does not send SI other than a master information block (MIB); or,
the first cell does not send part or all SI; or,
the first cell does not send part or all information contained in the SI; or,
the first cell does not send a paging message; or,
the first cell does not send an SI update indication; or,
the first cell does not send part or all common signals or common channels.

7. The method of any one of claims 1 to 6, wherein the first information is acquired by the terminal device from the first cell, or, the first request message is sent to the first cell.

8. The method of any one of claims 1 to 6, wherein the first information is acquired by the terminal device from the second cell, or, the first request message is sent to the second cell.

9. The method of claim 8, wherein the first information is carried in SI of the second cell.

10. The method of any one of claims 1 to 9, wherein the first request message is sent on a first resource, and the first resource is a pre-configured resource or a pre-defined resource, or the first resource is a resource used for random access.

11. The method of claim 10, wherein the resource used for random access comprises: a resource used for sending a preamble, and/or a physical random access channel (PRACH) resource.

12. The method of claim 10 or 11, wherein the resource used for random access corresponds to one or more of the following resources:
a resource of the first cell;
a dedicated resource for the first information; and
a dedicated resource for requesting the first information.

13. The method of any one of claims 10 to 12, wherein the resource used for random access is sent by the second cell to the terminal device.

14. The method of claim 13, wherein the resource used for random access is carried in an SIB or a dedicated radio resource control (RRC) message of the second cell.

15. The method of any one of claims 1 to 14, wherein the first request message comprises one or more of: a value of the first information, an index of the first information, a bitmap of the first information, a value of the first information required, an index of the first information required, and a bitmap of the first information required.

16. The method of any one of claims 1 to 15, wherein the first request message is sent when a first condition is met, and the first condition comprises at least one of:
the terminal device detects the SSB of the first cell;
a channel quality of the first cell is greater than or equal to a first threshold;
the first cell meets a R criterion or a S criterion;
the first cell is a cell selected or reselected by the terminal device;
the terminal device selects or reselects the first cell;
the terminal device has data to-be-transmitted;
an amount of the data to-be-transmitted by the terminal device is greater than a second threshold;
a slice required by the terminal device matches a slice supported by the first cell;
a final check is required in the first cell;
accessing to the first cell is required;
camping on the first cell is required;
transmitting data in the first cell is required; and
selecting or reselecting the first cell is required.

17. The method of any one of claims 1 to 16, wherein the first request message is a message used for random access, or the first request message is an RRC dedicated message or uplink control information (UCI) dedicated information.

18. The method of any one of claims 1 to 17, wherein:
different first information corresponds to a same first request message; or,
a plurality types of first information correspond to a same first request message; or,
different first information corresponds to different first request messages; or,
the plurality types of first information correspond to different first request messages.

19. The method of any one of claims 1 to 18, further comprising:
performing, by the terminal device, one or more of the following according to the first information:
determining whether it is possible to camp on the first cell;
determining whether it is possible to select or reselect the first cell;
performing a final check;
determining whether to perform a random access channel (RACH) procedure in the first cell;
receiving a physical downlink control channel (PDCCH) in the first cell;
performing transmission with the first cell; and
receiving a paging message of the first cell.

20. The method of any one of claims 1 to 19, wherein the first information comprises an SIB 1 of the first cell, and the method further comprises:
acquiring, by the terminal device, second information according to the first information, wherein the second information comprises one or more of:
other SIBs except the SIB1 of the first cell;
updated SI of the first cell;
RACH configuration of the first cell; and
paging configuration of the first cell.

21. The method of any one of claims 1 to 20, further comprising:
monitoring, by the terminal device, a paging message of the first cell, wherein monitoring configuration of the paging message is determined based on the first information.

22. The method of claim 21, wherein a transmission occasion of the paging message appears periodically, or the transmission occasion of the paging message appears in a discontinuous manner.

23. The method of claim 22, wherein the transmission occasion of the paging message is used for the terminal device to monitor the paging message.

24. The method of any one of claims 1 to 23, wherein the second cell is one of:
an anchor cell of the first cell;
a primary cell (PCell) of the terminal device;
a primary secondary cell (PSCell) of the terminal device;
a cell providing information of the first cell;
a cell that the terminal device is currently accessing, camping on, or selecting; and
a cell associated with the first cell.

25. A wireless communication method, comprising:
sending, by a terminal device, a first message to a first cell, wherein the first message is used to indicate one or more of:
requesting the first cell to perform state transition;
requesting the first cell to send at least one of a synchronization signal block (SSB), a master information block (MIB), a system information block (SIB), and a paging message;
requesting the first cell to send part or all common signals;
the terminal device has a requirement for data transmission;
the terminal device has a requirement for network access;
requesting the first cell to activate cell discontinuous transmission (DTX)/discontinuous reception (DRX);
requesting the first cell to deactivate the cell DTX/DRX;
requesting the first cell to modify the cell DTX/DRX;
requesting the first cell to use a recommended cell DTX/DRX parameter; and
recommending a cell DTX/DRX parameter to the first cell.

26. The method of claim 25, wherein the first cell is one or more of:
an energy-saving cell;
a cell in an energy-saving state;
a cell in an off state;
a cell using an energy-saving technology;
a cell with an energy-saving capability;
a cell where an energy-saving terminal device camps on, selects, or accesses; and
a cell serving the energy-saving terminal device.

27. The method of claim 25 or 26, wherein:
the first cell does not send the SSB; or,
the first cell does not send the MIB; or,
the first cell does not send part or all of SIBs; or,
the first cell does not send the SSB and the SIB; or,
the first cell does not send part or all of information contained in the SIB; or,
the first cell does not send part or all of common signals/common channels; or,
the first cell does not send system information (SI) other than the MIB; or,
the first cell does not send part or all of SI; or,
the first cell does not send part or all of information contained in the SI; or,
the first cell does not send a paging message; or,
the first cell does not send an SI update indication; or,
the first cell does not send part or all of the common signals or the common channels.

28. The method of any one of claims 25 to 27, wherein the first message is transmitted repeatedly.

29. The method of claim 28, wherein a number of repetitions of the first message is configured by a network device, or pre-configured, or determined by the terminal device.

30. The method of any one of claims 25 to 29, further comprising:
determining, by the terminal device, that the first cell is unavailable, or the first cell is barred from access, or the first cell is barred from access for a period of time, in response to a first condition being met within a first duration after sending the first message;
wherein the first condition comprises one or more of:
the terminal device does not receive a response message to the first message;
the first cell does not perform state transition;
the first cell does not send at least one of the SSB, the MIB, the SIB, and the paging message;
the terminal device does not acquire part or all of the common signals of the first cell;
the first cell does not activate the cell DTX/DRX;
the first cell does not deactivate the cell DTX/DRX;
the first cell does not modify the cell DTX/DRX; and
the first cell does not use the recommended cell DTX/DRX parameter.

31. The method of claim 30, wherein within the first duration, the first message is transmitted repeatedly for N times.

32. The method of claim 30 or 31, further comprising:
resending, by the terminal device, the first message when the first duration expires, in response to that the terminal device determines that the first cell is unavailable, or the first cell is barred from access, or the first cell is barred from access for a period of time.

33. The method of any one of claims 30 to 32, further comprising:
starting, by the terminal device, a timer when the terminal device sends the first message;
wherein the timer comprises a first timer, and a duration of the first timer is equal to the first duration; or, the timer comprises a second timer, and a duration of the second timer is equal to the first duration or a second duration.

34. The method of claim 33, wherein the first duration and/or the second duration is used to determine one or more of:
whether the first cell can be used for camping on /cell selection/cell reselection of the terminal device;
whether the first message is sent successfully;
whether a network state of the first cell is transitioned;
whether the first cell activates the cell discontinuous transmission (DTX)/discontinuous reception (DRX);
whether the first cell deactivates the cell DTX/DRX;
whether the first cell modifies the cell DTX/DRX;
whether the first cell uses the recommended cell DTX/DRX;
whether the terminal device can receive at least one of the SSB, the MIB, the SIB, and the paging message of the first cell;
whether the terminal device can receive part or all of the common signals of the first cell;
whether the terminal device can perform network access from the first cell;
whether the terminal device can perform a random access channel (RACH) in the first cell;
whether the terminal device can receive SI other than the MIB of the first cell;
whether the terminal device can receive part or all of SI of the first cell;
whether the terminal device can receive part or all of information contained in the SI of the first cell;
whether the terminal device can receive the paging message of the first cell; and
whether the terminal device can receive an SI update indication of the first cell.

35. A wireless communication method, comprising:
a terminal device does not receive a positioning reference signal (PRS) of a first cell or receives the PRS of the first cell according to first configuration information when the first cell is in a first state, and the first configuration information is used to indicate PRS configuration of one or more cells;
wherein the first state comprises one or more of:
an energy-saving state;
an off state;
a state of being in a cell discontinuous transmission (DTX)/discontinuous reception (DRX) non-active time period; and
a state of being in a time period of using an energy-saving technology.

36. The method of claim 35, wherein the first configuration information is determined based on second configuration information, and the second configuration information is used to indicate DTX/DRX configuration of the first cell.

37. The method of claim 36, wherein the second configuration information is sent to a positioning server by the terminal device, the first cell, or a network device to which the first cell belongs, and the first configuration information is sent by the positioning server to the terminal device.

38. The method of any one of claims 35 to 37, wherein the first configuration information is used to configure or adjust second configuration information, and the second configuration information is used to indicate DTX/DRX configuration of the first cell.

39. The method of any one of claims 35 to 38, wherein the first configuration information is sent to the first cell, a base station of the first cell, or the terminal device by a positioning server; or, the first configuration information is sent to the terminal device by the positioning server and then sent to the first cell or the base station of the first cell by the terminal device.

40. A wireless communication method, comprising:
receiving, by a terminal device, first handover (HO) configuration sent by a first cell, wherein the first handover configuration comprises one or more handover conditions; and
executing, by the terminal device, cell handover according to the first handover configuration.

41. The method of claim 40, wherein the first cell is one or more of:
an energy-saving cell;
a cell in an energy-saving state;
a cell in an off state;
a cell using an energy-saving technology;
a cell with an energy-saving capability;
a cell where an energy-saving terminal device camps on, selects, or accesses;
a cell serving the energy-saving terminal device; and
a cell using cell discontinuous transmission (DTX)/discontinuous reception (DRX).

42. The method of claim 40 or 41, wherein:
the first cell does not send a synchronization signal block (SSB); or,
the first cell does not send a master information block (MIB); or,
the first cell does not send part or all of system information blocks (SIBs); or,
the first cell does not send the SSB and the SIB; or,
the first cell does not send part or all of information contained in the SIB; or
the first cell does not send part or all of common signals/common channels; or,
the first cell does not send system information (SI) other than the MIB; or,
the first cell does not send part or all of SI; or,
the first cell does not send part or all of information contained in the SI; or,
the first cell does not send a paging message; or,
the first cell does not send an SI update indication; or,
the first cell does not send part or all of the common signals or the common channels.

43. The method of any one of claims 40 to 42, wherein the one or more handover conditions comprise at least one of:
a handover condition related to a channel quality;
a time-based handover condition;
a handover condition related to an energy-saving state, state transition, or state indication of a source cell; and
a handover condition related to an energy-saving state, state transition, or state indication of a target cell.

44. The method of claim 43, wherein the time-based handover condition comprises: a handover condition related to a time when the first cell enters the energy-saving state, activates the energy-saving technology, or is turned off.

45. The method of claim 43 or 44, wherein:
the handover condition related to the energy-saving state, state transition, or state indication of the source cell comprises: a handover condition related to the first sell entering the energy-saving state, activating the energy-saving technology, being in a cell off state, or performing state transition; or, a handover condition which is indication information indicating to the first cell to enter the energy-saving state, activate the energy-saving technology, or turn off; and
the handover condition related to the energy-saving state, state transition, or state indication of the target cell comprises: the handover condition related to the first cell entering the energy-saving state, activating the energy-saving technology, being in a cell off state, or performing state transition; or, the handover condition which is indication information indicating to the first cell to enter the energy-saving state, activate the energy-saving technology, or turn off.

46. The method of any one of claims 43 to 45, further comprising:
performing, by the terminal device, one or more of the following when a second condition is met: executing cell handover, determining that a handover event is met, and determining a target candidate cell meeting the handover condition as a triggered cell;
wherein the second condition comprises: when the handover condition comprises one condition, the one handover condition is met; or, when the handover condition comprises a plurality of conditions, all of the plurality of handover conditions are met.

47. The method of any one of claims 40 to 46, wherein each of the one or more handover conditions is configured or executed alone, or at least two of a plurality of handover conditions are configured or executed together.

48. The method of any one of claims 43 to 47, wherein the first handover configuration only configures one of:
the handover condition related to channel quality;
the time-based handover condition;
the handover condition related to the energy-saving state, state transition, or state indication of the source cell; and
the handover condition related to the energy-saving state, state transition, or state indication of the target cell.

49. The method of any one of claims 43 to 47, wherein one of the following handover conditions is required to be configured or executed simultaneously with other handover conditions:
the time-based handover condition;
the handover condition related to the energy-saving state, state transition, or state indication of the source cell; and
the handover condition related to the energy-saving state, state transition, or state indication of the target cell.

50. The method of any one of claims 40 to 49, wherein the one or more handover conditions comprise a handover condition related to channel quality and a time-based handover condition;
if the handover condition related to channel quality and the time-based handover condition are contained in a same handover configuration, the terminal device executes the cell handover when both the handover condition related to channel quality and the time-based handover condition are met; and/or
if the handover condition related to channel quality and the time-based handover condition are contained in different handover configurations, the terminal device executes the cell handover when the handover condition related to channel quality is met; and/or
if the handover condition related to channel quality and the time-based handover condition are contained in different handover configurations, the terminal device executes the cell handover when the time-based handover condition is met.

51. The method of any one of claims 40 to 49, wherein the one or more handover conditions comprise a handover condition related to channel quality and at least one of: a handover condition related to the energy-saving state, state transition, or state indication of the source cell, and a handover condition related to the energy-saving state, state transition, or state indication of the target cell;
if the handover condition related to channel quality and the handover condition related to the energy-saving state, state transition, or state indication of the source cell are contained in a same handover configuration, the terminal device executes the cell handover when both the handover condition related to channel quality and the handover condition related to the energy-saving state, state transition, or state indication of the source cell are met; and/or
if the handover condition related to channel quality and the handover condition related to the energy-saving state, state transition, or state indication of the target cell are contained in a same handover configuration, the terminal device executes the cell handover when both the handover condition related to channel quality and the handover condition related to the energy-saving state, state transition, or state indication of the target cell are met; and/or
if the handover condition related to channel quality and the handover condition related to the energy-saving state, state transition, or state indication of the source cell are contained in different handover configurations, the terminal device executes the cell handover when the handover condition related to channel quality is met; and/or
if the handover condition related to channel quality and the handover condition related to the energy-saving state, state transition, or state indication of the target cell are contained in different handover configurations, the terminal device executes the cell handover when the handover condition related to channel quality is met; and/or
if the handover condition related to channel quality and the handover condition related to the energy-saving state, state transition, or state indication of the source cell are contained in different handover configurations, the terminal device executes the cell handover when the handover condition related to the energy-saving state, state transition, or state indication of the source cell is met; and/or
if the handover condition related to channel quality and the handover condition related to the energy-saving state, state transition, or state indication of the target cell are contained in different handover configurations, the terminal device executes the cell handover when the handover condition related to the energy-saving state, state transition, or state indication of the target cell is met.

52. The method of any one of claims 40 to 49, wherein the one or more handover conditions comprise a handover condition related to channel quality, and the terminal device executes the cell handover when the handover condition related to channel quality is met.

53. The method of any one of claims 40 to 49, wherein the one or more handover conditions comprise a time-based handover condition, and the terminal device executes the cell handover when the time-based handover condition is met.

54. The method of any one of claims 40 to 49, wherein:
the one or more handover conditions comprise a handover condition related to the energy-saving state, state transition, or state indication of the source cell, and the terminal device executes the cell handover when the handover condition related to the energy-saving state, state transition, or state indication of the source cell is met; or
the one or more handover conditions comprise a handover condition related to the energy-saving state, state transition, or state indication of the target cell, and the terminal device executes the cell handover when the handover condition related to the energy-saving state, state transition, or state indication of the target cell is met.

55. A wireless communication method, comprising:
acquiring, by a first terminal device, third information of a first cell, wherein the third information is used to determine one or more of:
whether the first terminal device can access/select/reselect the first cell;
whether a second terminal device can access/select/reselect the first cell;
whether the first cell is barred;
whether the first cell is a candidate cell; and
whether the first cell is a reserved cell.

56. The method of claim 55, wherein the third information is carried in a system information block 1 (SIB1) or a master information block (MIB), and/or, the third information is cell-reservation information or cell-barred information, and/or, the third information is information for determining whether a cell is the reserved cell or barring information for determining whether the cell is a barred cell.

57. The method of claim 55 or 56, wherein the first cell comprises fourth information, and the fourth information is used for the second terminal device to determine one or more of:
whether the second terminal device can access/select/reselect the first cell;
whether the first cell is barred;
whether the first cell is the candidate cell;
whether the first cell is a suitable cell or an acceptable cell; and
whether the first cell is the reserved cell;
wherein, the fourth information is acquired by the second terminal device in one or more of the following situations: acquiring the third information, determining that the third information indicates reservation or barring, and ignoring the third information.

58. The method of claim 57, wherein the fourth information is carried in an SIB1 or an MIB.

59. The method of claim 57 or 58, wherein the fourth information is indication information dedicated for some terminal devices; or
the fourth information is indication information for the second terminal device; or
the fourth information is indication information dedicated for at least one of the following types of terminal devices: a terminal device with an energy-saving capability, a terminal device using an energy-saving technology, a terminal device of a specific version, a terminal device capable of using one or more energy-saving technologies, and a terminal device allowed to access, access with priority, select, or reselect the first cell.

60. The method of any one of claims 55 to 59, wherein:
the first terminal device is different from the second terminal device; and/or
the first terminal device comprises at least one of: a terminal device without the energy-saving capability, a terminal device not using the energy-saving technology, a terminal device of a non-specific version, a terminal device unable to use one or more energy-saving technologies, a terminal device barred from accessing the first cell, a terminal device with low priority in accessing the first cell, a terminal device barred from selecting the first cell, a terminal device with low priority in selecting the first cell, a terminal device barred from reselecting the first cell, and a terminal device with low priority in reselecting the first cell; and/or
the second terminal device comprise at least one of: a terminal device with the energy-saving capability, a terminal device using the energy-saving technology, a terminal device of the specific version, a terminal device capable of using one or more energy-saving technologies, a terminal device allowed to access the first cell, a terminal device with priority in accessing the first cell, a terminal device allowed to select the first cell, a terminal device with priority in selecting the first cell, a terminal device allowed to reselect the first cell, and a terminal device with priority in reselecting the first cell; and/or
the first cell comprises at least one of: a cell that gives priority to the second terminal device to access, select, or reselect, a cell that allows the second terminal device to access, select, or reselect, a cell that gives low priority to the first terminal device to access, select, or reselect, a cell that does not allow the first terminal device to access, select, or reselect, a cell in an energy-saving state, a cell in an off state, a cell using the energy-saving technology, a cell with the energy-saving capability, a cell where an energy-saving terminal device camps on, selects, or accesses, a cell serving the energy-saving terminal device, and a cell using a cell discontinuous transmission (DTX)/discontinuous reception (DRX) technology.

61. A wireless communication method, comprising:
acquiring, by a second terminal device, fourth information of a first cell; and/or
performing, by the second terminal device, one or more of: acquiring third information of the first cell, determining that the third information indicates reservation or barring, and ignoring the third information;
wherein the fourth information is used to determine one or more of:
whether the second terminal device can access/select/reselect the first cell;
whether the first cell is barred;
whether the first cell is a candidate cell;
whether the first cell is a suitable cell or an acceptable cell; and
whether the first cell is a reserved cell.

62. The method of claim 61, wherein the fourth information is carried in a system information block 1 (SIB1) or a master information block (MIB).

63. The method of claim 61 or 62, wherein the fourth information is indication information dedicated for some terminal devices; or
the fourth information is indication information for the second terminal device; or
the fourth information is indication information dedicated for at least one of the following types of terminal devices: a terminal device with an energy-saving capability, a terminal device using an energy-saving technology, a terminal device of a specific version, a terminal device capable of using one or more energy-saving technologies, and a terminal device allowed to access, access with priority, select, or reselect the first cell.

64. The method of claims 61 to 63, wherein the third information is used to determine one or more of:
whether the first terminal device can access/select/reselect the first cell;
whether the second terminal device can access/select/reselect the first cell;
whether the first cell is barred;
whether the first cell is the candidate cell; and
whether the first cell is the reserved cell.

65. The method of any one of claim 64, wherein:
the first terminal device is different from the second terminal device; and/or
the first terminal device comprises at least one of: a terminal device without the energy-saving capability, a terminal device not using the energy-saving technology, a terminal device of a non-specific version, a terminal device unable to use one or more energy-saving technologies, a terminal device barred from accessing the first cell, a terminal device with low priority in accessing the first cell, a terminal device barred from selecting the first cell, a terminal device with low priority in selecting the first cell, a terminal device barred from reselecting the first cell, and a terminal device with low priority in reselecting the first cell; and/or
the second terminal device comprise at least one of: a terminal device with the energy-saving capability, a terminal device using the energy-saving technology, a terminal device of the specific version, a terminal device capable of using one or more energy-saving technologies, a terminal device allowed to access the first cell, a terminal device with priority in accessing the first cell, a terminal device allowed to select the first cell, a terminal device with priority in selecting the first cell, a terminal device allowed to reselect the first cell, and a terminal device with priority in reselecting the first cell; and/or
the first cell comprises at least one of: a cell that gives priority to the second terminal device to access, select, or reselect, a cell that allows the second terminal device to access, select, or reselect, a cell that gives low priority to the first terminal device to access, select, or reselect, a cell that does not allow the first terminal device to access, select, or reselect, a cell in an energy-saving state, a cell in an off state, a cell using the energy-saving technology, a cell with the energy-saving capability, a cell where an energy-saving terminal device camps on, selects, or accesses, a cell serving the energy-saving terminal device, and a cell using cell discontinuous transmission (DTX)/discontinuous reception (DRX) technology.

66. The method of claims 61 to 65, wherein the third information is carried in an SIB1 or an MIB, and/or, the third information is cell-reserved information or cell-barred information, and/or, the third information is information for determining whether a cell is the reserved cell, and/or, the third information is barring information for determining whether the cell is a barred cell.

67. A wireless communication method, comprising:
receiving, by a network device to which a first cell belongs, a first request message sent by a terminal device, wherein the first request message is used to acquire first information of the first cell, and the first information is associated with system information (SI) and/or a synchronization signal block (SSB) of the first cell; and
sending, by the network device, the first information to the terminal device.

68. The method of claim 67, wherein the first information is used to indicate one or more of the following information:
part or all of SI of the first cell;
information related to accessing, camping on, selecting, or reselecting the first cell;
information related to paging of the first cell; and
information for performing paging in the first cell.

69. The method of claim 67 or 68, wherein the first information comprises one or more of the following information:
a system information block (SIB);
an SIB1;
part or all of other SIBs except the SIB1 in the SIB;
part or all of information contained in the SIB; and
part or all of SI.

70. The method of any one of claims 67 to 69, wherein the first information comprises one or more of the following information:
slice information supported by the first cell;
frequency information of the first cell;
frequency priority information of the first cell;
parameter information for selecting the first cell;
parameter information for reselecting the first cell;
information on whether the first cell is barred from access;
configuration information of a common channel or a common signal;
time-frequency resource information of the common channel or the common signal;
configuration information for accessing, selecting, or reselecting the first cell;
time-frequency resource information for accessing, selecting, or reselecting the first cell;
configuration information for paging in the first cell; and
time-frequency resource information for paging in the first cell.

71. The method of any one of claims 67 to 70, wherein a broadcast status of the first information is not broadcasting; or, the first information is broadcasted/indicated based on a request.

72. The method of any one of claims 67 to 71, wherein:
the first cell does not send the SSB; or,
the first cell does not send part or all of SIBs; or,
the first cell does not send the SSB and the SIB; or,
the first cell does not send part or all of information contained in the SIB; or,
the first cell does not send SI other than a master information block (MIB); or,
the first cell does not send part or all of SI; or,
the first cell does not send part or all of information contained in the SI; or,
the first cell does not send a paging message; or,
the first cell does not send an SI update indication; or,
the first cell does not send part or all of common signals or common channels.

73. The method of any one of claims 67 to 72, wherein the first request message is sent on a first resource, and the first resource is a pre-configured resource or a pre-defined resource, or the first resource is a resource used for random access.

74. The method of claim 73, wherein the resource used for random access comprises: a resource used for sending a preamble, and/or a physical random access channel (PRACH) resource.

75. The method of claim 73 or 74, wherein the resource used for random access corresponds to one or more of the following resources:
a resource of the first cell;
a dedicated resource for the first information; and
a dedicated resource for requesting the first information.

76. The method of any one of claims 73 to 75, wherein the resource used for random access is sent by a second cell to the terminal device.

77. The method of claim 76, wherein the resource used for random access is carried in an SIB or a radio resource control (RRC) dedicated message of the second cell.

78. The method of any one of claim 76 or 77, wherein the second cell is one of:
an anchor cell of the first cell;
a primary cell (PCell) of the terminal device;
a primary secondary cell (PSCell) of the terminal device;
a cell providing information of the first cell;
a cell that the terminal device is currently accessing, camping on, or selecting; and
a cell associated with the first cell.

79. The method of any one of claims 67 to 78, wherein the first request message comprises one or more of: a value of the first information, an index of the first information, a bitmap of the first information, a value of the first information required, an index of the first information required, and a bitmap of the first information required.

80. The method of any one of claims 67 to 79, wherein the first request message is sent when a first condition is met, and the first condition comprises at least one of:
the terminal device detects the SSB of the first cell;
a channel quality of the first cell is greater than or equal to a first threshold;
the first cell meets a R criterion or a S criterion;
the first cell is a cell selected or reselected by the terminal device;
the terminal device selects or reselects the first cell;
the terminal device has data to-be-transmitted;
an amount of the data to-be-transmitted by the terminal device is greater than a second threshold;
a slice required by the terminal device matches a slice supported by the first cell;
a final check is required in the first cell;
accessing to the first cell is required;
camping on the first cell is required;
transmitting data in the first cell is required; and
selecting or reselecting the first cell is required.

81. The method of any one of claims 67 to 80, wherein the first request message is a message used for random access, or the first request message is an RRC dedicated message or uplink control information (UCI) dedicated information.

82. The method of any one of claims 67 to 81, wherein:
different first information corresponds to a same first request message; or,
a plurality types of first information correspond to a same first request message; or,
different first information corresponds to different first request messages; or,
the plurality types of first information correspond to different first request messages.

83. The method of any one of claims 67 to 82, wherein the first information comprises an SIB1 of the first cell, the first information is used to acquire second information, and the second information comprises one or more of:
other SIBs except the SIB1 of the first cell;
updated SI of the first cell;
RACH configuration of the first cell; and
paging configuration of the first cell.

84. The method of any one of claims 67 to 83, further comprising:
sending, by the network device, a paging message, wherein configuration of the paging message is determined based on the first information.

85. The method of claim 84, wherein a transmission occasion of the paging message appears periodically, or the transmission occasion of the paging message appears in a discontinuous manner.

86. The method of claim 85, wherein the transmission occasion of the paging message is used for the terminal device to monitor the paging message.

87. A wireless communication method, comprising:
receiving, by a network device to which a first cell belongs, a first message sent by a terminal device, wherein the first message is used to indicate one or more of:
requesting the first cell to perform state transition;
requesting the first cell to send at least one of a synchronization signal block (SSB), a master information block (MIB), a system information block (SIB), and a paging message;
requesting the first cell to send part or all of common signals;
the terminal device has a requirement for data transmission;
the terminal device has a requirement for network access;
requesting the first cell to activate cell discontinuous transmission (DTX)/discontinuous reception (DRX);
requesting the first cell to deactivate the cell DTX/DRX;
requesting the first cell to modify the cell DTX/DRX;
requesting the first cell to use a recommended cell DTX/DRX parameter; and
recommending a cell DTX/DRX parameter to the first cell.

88. The method of claim 87, wherein the first cell is one or more of:
an energy-saving cell;
a cell in an energy-saving state;
a cell in an off state;
a cell using an energy-saving technology;
a cell with an energy-saving capability;
a cell where an energy-saving terminal device camps on, selects, or accesses; and
a cell serving the energy-saving terminal device.

89. The method of claim 87 or 88, wherein:
the first cell does not send the SSB; or,
the first cell does not send the MIB; or,
the first cell does not send part or all of SIBs; or,
the first cell does not send the SSB and the SIB; or,
the first cell does not send part or all of information contained in the SIB; or,
the first cell does not send part or all of common signals/common channels; or,
the first cell does not send system information (SI) other than the MIB; or,
the first cell does not send part or all of SI; or,
the first cell does not send part or all of information contained in the SI; or,
the first cell does not send a paging message; or,
the first cell does not send an SI update indication; or,
the first cell does not send part or all of common signals or common channels.

90. The method of any one of claims 87 to 89, wherein the first message is transmitted repeatedly.

91. The method of claim 90, wherein a number of repetitions of the first message is configured by a network device, or pre-configured, or determined by the terminal device.

92. The method of any one of claims 87 to 91, further comprising:
re-receiving, by the network device, the first message, wherein the first message is sent by the terminal device, in response to that a first duration expires after last sending of the first message and the terminal device determines that the first cell is unavailable, or the first cell is barred from access, or the first cell is barred from access for a period of time.

93. The method of claim 92, wherein the first duration is used to determine one or more of:
whether the first cell can be used for camping on/cell selection/cell reselection of the terminal device;
whether the first message is sent successfully;
whether a network state of the first cell is transitioned;
whether the first cell activates the cell discontinuous transmission (DTX)/discontinuous reception (DRX);
whether the first cell deactivates the cell DTX/DRX;
whether the first cell modifies the cell DTX/DRX;
whether the first cell uses the recommended cell DTX/DRX;
whether the terminal device can receive at least one of the SSB, the MIB, the SIB, and a paging message of the first cell;
whether the terminal device can receive part or all of the common signals of the first cell;
whether the terminal device can perform network access from the first cell;
whether the terminal device can perform a random access channel (RACH) in the first cell;
whether the terminal device can receive SI other than the MIB of the first cell;
whether the terminal device can receive part or all of the SI of the first cell;
whether the terminal device can receive part or all of information contained in the SI of the first cell;
whether the terminal device can receive the paging message of the first cell; and
whether the terminal device can receive an SI update indication of the first cell.

94. A wireless communication method, comprising:
a network device to which a first cell belongs does not send a positioning reference signal (PRS) or sends the PRS according to first configuration information when the first cell is in a first state, wherein the first configuration information is used to indicate PRS configuration of one or more cells;
wherein the first state comprises one or more of:
an energy-saving state;
an off state;
a state of being in a cell discontinuous transmission (DTX)/discontinuous reception (DRX) non-active time period; and
a state of being in a time period of using an energy-saving technology.

95. The method of claim 94, wherein the first configuration information is determined based on second configuration information, and the second configuration information is used to indicate DTX/DRX configuration of the first cell.

96. The method of claim 95, wherein the second configuration information is sent to a positioning server by the first cell, the network device to which the first cell belongs, or the terminal device, and the first configuration information is sent to the first cell by the positioning server or the terminal device.

97. The method of any one of claims 94 to 96, wherein the first configuration information is used to configure or adjust second configuration information, and the second configuration information is used to indicate DTX/DRX configuration of the first cell.

98. The method of any one of claims 94 to 97, wherein the first configuration information is sent to the first cell, a base station of the first cell, or the terminal device by a positioning server; or, the first configuration information is sent to the terminal device by the positioning server and then sent to the first cell or the base station of the first cell by the terminal device.

99. A wireless communication method, comprising:
activating or deactivating, by a network device to which a first cell belongs, discontinuous transmission (DTX)/discontinuous reception (DRX) configuration of the first cell by using a first signaling.

100. The method of claim 99, wherein the first signaling is a media access control control-element (MAC CE).

101. The method of claim 99 or 100, wherein the first signaling is associated with a logical channel identifier (LCID), and the first signaling is used to activate or deactivate one LCID, or the first signaling is used to activate or deactivate a plurality of LCIDs.

102. The method of any one of claims 99 to 101, wherein a payload of the first signaling is one of: a fixed value, a variable value, and a default value.

103. The method of any one of claims 99 to 102, wherein the first signaling comprises one or more of: an activation or deactivation indication, an index of cell DTX, and an index of cell DRX.

104. A wireless communication method, comprising:
sending, by a network device to which a first cell belongs, first handover (HO) configuration to a terminal device, wherein the first handover configuration comprises one or more handover conditions, and the first handover configuration is used for cell handover by the terminal device.

105. The method of claim 104, wherein the first cell is one or more of:
an energy-saving cell;
a cell in an energy-saving state;
a cell in an off state;
a cell using an energy-saving technology;
a cell with an energy-saving capability;
a cell where an energy-saving terminal device camps on, selects, or accesses;
a cell serving the energy-saving terminal device; and
a cell using cell discontinuous transmission (DTX)/discontinuous reception (DRX).

106. The method of claim 104 or 105, wherein:
the first cell does not send a synchronization signal block (SSB); or,
the first cell does not send a master information block (MIB); or,
the first cell does not send part or all of system information blocks (SIBs); or,
the first cell does not send the SSB and the SIB; or,
the first cell does not send part or all of information contained in the SIB; or,
the first cell does not send part or all of common signals/common channels; or,
the first cell does not send system information (SI) other than the MIB; or,
the first cell does not send part or all of SI; or,
the first cell does not send part or all of information contained in the SI; or,
the first cell does not send a paging message; or,
the first cell does not send an SI update indication; or,
the first cell does not send part or all of the common signals or the common channels.

107. The method of any one of claims 104 to 106, wherein the one or more handover conditions comprise at least one of:
a handover condition related to a channel quality;
a time-based handover condition;
a handover condition related to an energy-saving state, state transition, or state indication of a source cell; and
a handover condition related to an energy-saving state, state transition, or state indication of a target cell.

108. The method of claim 107, wherein the time-based handover condition comprises: a handover condition related to a time when the first cell enters the energy-saving state, activates the energy-saving technology, or is turned off.

109. The method of claim 107 or 108, wherein:
the handover condition related to the energy-saving state, state transition, or state indication of the source cell comprises: a handover condition related to the first sell entering the energy-saving state, activating the energy-saving technology, being in a cell off state, or performing state transition; or, a handover condition which is indication information indicating to the first cell to enter the energy-saving state, activate the energy-saving technology, or turn off; or
the handover condition related to the energy-saving state, state transition, or state indication of the target cell comprises: the handover condition related to the first cell entering the energy-saving state, activating the energy-saving technology, being in a cell off state, or performing state transition; or, the handover condition which is indication information indicating to the first cell to enter the energy-saving state, activate the energy-saving technology, or turn off.

110. The method of any one of claims 107 to 109, further comprising:
in response to that a second condition is met, the handover condition is used for one or more of: executing cell handover, determining that a handover event is met, and determining a target candidate cell meeting the handover condition as a triggered cell;
wherein the second condition comprises: when the handover condition comprises one condition, the one handover condition is met; or, when the handover condition comprises a plurality conditions, all of the plurality of handover conditions are met.

111. The method of any one of claims 104 to 110, wherein each of the one or more handover conditions is configured or executed alone, or at least two of a plurality of handover conditions are configured or executed together.

112. The method of any one of claims 107 to 111, wherein the first handover configuration only configures one of:
the handover condition related to channel quality;
the time-based handover condition;
the handover condition related to the energy-saving state, state transition, or state indication of the source cell; and
the handover condition related to the energy-saving state, state transition, or state indication of the target cell.

113. The method of any one of claims 107 to 111, wherein one of the following handover conditions is required to be configured or executed simultaneously with other handover conditions:
the time-based handover condition;
the handover condition related to the energy-saving state, state transition, or state indication of the source cell; and
the handover condition related to the energy-saving state, state transition, or state indication of the target cell.

114. The method of any one of claims 104 to 113, wherein the one or more handover conditions comprise a handover condition related to channel quality and a time-based handover condition;
if the handover condition related to channel quality and the time-based handover condition are contained in a same handover configuration, the terminal device executes the cell handover when both the handover condition related to channel quality and the time-based handover condition are met; and/or
if the handover condition related to channel quality and the time-based handover condition are contained in different handover configurations, the terminal device executes the cell handover when the handover condition related to channel quality is met; and/or
if the handover condition related to channel quality and the time-based handover condition are contained in different handover configurations, the terminal device executes the cell handover when the time-based handover condition is met.

115. The method of any one of claims 104 to 113, wherein the one or more handover conditions comprise a handover condition related to channel quality and at least one of: a handover condition related to the energy-saving state, state transition, or state indication of the source cell, and a handover condition related to the energy-saving state, state transition, or state indication of the target cell;
if the handover condition related to channel quality and the handover condition related to the energy-saving state, state transition, or state indication of the source cell are contained in a same handover configuration, the terminal device executes the cell handover when both the handover condition related to channel quality and the handover condition related to the energy-saving state, state transition, or state indication of the source cell are met; and/or
if the handover condition related to channel quality and the handover condition related to the energy-saving state, state transition, or state indication of the target cell are contained in a same handover configuration, the terminal device executes the cell handover when both the handover condition related to channel quality and the handover condition related to the energy-saving state, state transition, or state indication of the target cell are met; and/or
if the handover condition related to channel quality and the handover condition related to the energy-saving state, state transition, or state indication of the source cell are contained in different handover configurations, the terminal device executes the cell handover when the handover condition related to channel quality is met; and/or
if the handover condition related to channel quality and the handover condition related to the energy-saving state, state transition, or state indication of the target cell are contained in different handover configurations, the terminal device executes the cell handover when the handover condition related to channel quality is met; and/or
if the handover condition related to channel quality and the handover condition related to the energy-saving state, state transition, or state indication of the source cell are contained in different handover configurations, the terminal device executes the cell handover when the handover condition related to the energy-saving state, state transition, or state indication of the source cell is met; and/or
if the handover condition related to channel quality and the handover condition related to the energy-saving state, state transition, or state indication of the target cell are contained in different handover configurations, the terminal device executes the cell handover when the handover condition related to the energy-saving state, state transition, or state indication of the target cell is met.

116. The method of any one of claims 104 to 113, wherein the one or more handover conditions comprise a handover condition related to channel quality, and the cell handover is executed when the handover condition related to channel quality is met.

117. The method of any one of claims 104 to 113, wherein the one or more handover conditions comprise a time-based handover condition, and the cell handover is executed when the time-based handover condition is met.

118. The method of any one of claims 104 to 113, wherein:
the one or more handover conditions comprise a handover condition related to the energy-saving state, state transition, or state indication of the source cell, and the terminal device executes the cell handover when the handover condition related to the energy-saving state, state transition, or state indication of the source cell is met; or
the one or more handover conditions comprise a handover condition related to the energy-saving state, state transition, or state indication of the target cell, and the terminal device executes the cell handover when the handover condition related to the energy-saving state, state transition, or state indication of the target cell is met.

119. A wireless communication method, comprising:
sending, by a network device to which a first cell belongs, third information of the first cell to a first terminal device, wherein the third information is used to determine one or more of:
whether the first terminal device can access/select/reselect the first cell;
whether a second terminal device can access/select/reselect the first cell;
whether the first cell is barred;
whether the first cell is a candidate cell; and
whether the first cell is a reserved cell.

120. The method of claim 119, wherein the third information is carried in a system information block 1 (SIB1) or a master information block (MIB), and/or, the third information is cell-reserved information or cell-barred information, and/or, the third information is information for determining whether a cell is the reserved cell or barring information for determining whether the cell is a barred cell.

121. The method of claim 119 or 120, further comprising:
sending, by the first cell, fourth information to the second terminal device, wherein the fourth information is used for the second terminal device to determine one or more of:
whether the second terminal device can access/select/reselect the first cell;
whether the first cell is barred;
whether the first cell is the candidate cell;
whether the first cell is a suitable cell or an acceptable cell; and
whether the first cell is the reserved cell;
wherein, the fourth information is acquired by the second terminal device in one or more of the following situations: acquiring the third information, determining that the third information indicates reservation or barring, and ignoring the third information.

122. The method of claim 121, wherein the fourth information is carried in an SIB1 or an MIB.

123. The method of claim 121 or 122, wherein the fourth information is indication information dedicated for some terminal devices; or
the fourth information is indication information for the second terminal device; or
the fourth information is indication information dedicated for at least one of the following types of terminal devices: a terminal device with an energy-saving capability, a terminal device using an energy-saving technology, a terminal device of a specific version, a terminal device capable of using one or more energy-saving technologies, and a terminal device allowed to access, access with priority, select, or reselect the first cell.

124. The method of any one of claims 119 to 123, wherein:
the first terminal device is different from the second terminal device; and/or
the first terminal device comprises at least one of: a terminal device without the energy-saving capability, a terminal device not using the energy-saving technology, a terminal device of a non-specific version, a terminal device unable to use one or more energy-saving technologies, a terminal device barred from accessing the first cell, a terminal device with low priority in accessing the first cell, a terminal device barred from selecting the first cell, a terminal device with low priority in selecting the first cell, a terminal device barred from reselecting the first cell, and a terminal device with low priority in reselecting the first cell; and/or
the second terminal device comprise at least one of: a terminal device with the energy-saving capability, a terminal device using the energy-saving technology, a terminal device of the specific version, a terminal device capable of using one or more energy-saving technologies, a terminal device allowed to access the first cell, a terminal device with priority in accessing the first cell, a terminal device allowed to select the first cell, a terminal device with priority in selecting the first cell, a terminal device allowed to reselect the first cell, and a terminal device with priority in reselecting the first cell; and/or
the first cell comprises at least one of: a cell that gives priority to the second terminal device to access, select, or reselect, a cell that allows the second terminal device to access, select, or reselect, a cell that gives low priority to the first terminal device to access, select, or reselect, a cell that does not allow the first terminal device to access, select, or reselect, a cell in an energy-saving state, a cell in an off state, a cell using the energy-saving technology, a cell with the energy-saving capability, a cell where an energy-saving terminal device camps on, selects, or accesses, a cell serving the energy-saving terminal device, and a cell using cell discontinuous transmission (DTX)/discontinuous reception (DRX) technology.

125. A wireless communication method, comprising:
sending, by a network device to which a second cell belongs, first information of a first cell to a terminal device, wherein the first information is associated with system information (SI) and/or a synchronization signal block (SSB) of the first cell.

126. The method of claim 125, wherein the first information is used to indicate one or more of the following information:
part or all of SI of the first cell;
information related to accessing, camping on, selecting, or reselecting the first cell; and
information related to paging of the first cell or information for performing paging in the first cell.

127. The method of claim 125 or 126, wherein the first information comprises one or more of the following information:
a system information block (SIB);
an SIB1;
part or all of other SIBs except the SIB1 in the SIB;
part or all of information contained in the SIB; and
part or all of SI.

128. The method of any one of claims 125 to 127, wherein the first information comprises one or more of the following information:
slice information supported by the first cell;
frequency information of the first cell;
frequency priority information of the first cell;
parameter information for selecting the first cell;
parameter information for reselecting to the first cell;
information on whether the first cell is barred from access;
configuration information of a common channel or a common signal;
time-frequency resource information of the common channel or the common signal;
configuration information for accessing, selecting, or reselecting the first cell;
time-frequency resource information for accessing, selecting, or reselecting the first cell;
configuration information for paging in the first cell; and
time-frequency resource information for paging in the first cell.

129. The method of any one of claims 125 to 128, wherein a broadcast status of the first information is not broadcasting; or, the first information is broadcasted/indicated based on a request.

130. The method of any one of claims 125 to 129, wherein:
the first cell does not send the SSB; or,
the first cell does not send part or all of SIBs; or,
the first cell does not send the SSB and the SIB; or,
the first cell does not send part or all of information contained in the SIB; or,
the first cell does not send SI other than a master information block (MIB); or,
the first cell does not send part or all of SI; or,
the first cell does not send part or all of information contained in the SI; or,
the first cell does not send a paging message; or,
the first cell does not send an SI update indication; or,
the first cell does not send part or all of common signals or common channels.

131. The method of any one of claims 125 to 130, wherein the first information is carried in SI of the second cell.

132. The method of any one of claims 125 to 131, wherein the first information is sent based on a first request message sent by the terminal device.

133. The method of any one of claim 132, wherein the first request message is sent on a first resource, and the first resource is a pre-configured resource or a pre-defined resource, or the first resource is a resource used for random access.

134. The method of claim 133, wherein the resource used for random access comprises: a resource used for sending a preamble, and/or a physical random access channel (PRACH) resource.

135. The method of claim 133 or 134, wherein the resource used for random access corresponds to one or more of the following resources:
a resource of the first cell;
a dedicated resource for the first information; and
a dedicated resource for requesting the first information.

136. The method of any one of claims 133 to 135, wherein the resource used for random access is sent by the second cell to the terminal device.

137. The method of claim 136, wherein the resource used for random access is carried in an SIB or a dedicated radio resource control (RRC) message of the second cell.

138. The method of any one of claims 132 to 137, wherein the first request message comprises one or more of: a value of the first information, an index of the first information, a bitmap of the first information, a value of the first information required, an index of the first information required, and a bitmap of the first information required.

139. The method of any one of claims 132 to 138, wherein the first request message is sent when a first condition is met, and the first condition comprises at least one of:
the terminal device detects the SSB of the first cell;
a channel quality of the first cell is greater than or equal to a first threshold;
the first cell meets a R criterion or a S criterion;
the first cell is a cell selected or reselected by the terminal device;
the terminal device selects or reselects the first cell;
the terminal device has data to-be-transmitted;
an amount of the data to-be-transmitted by the terminal device is greater than a second threshold;
a slice required by the terminal device matches a slice supported by the first cell;
a final check is required in the first cell;
accessing to the first cell is required;
camping on the first cell is required;
transmitting data in the first cell is required; and
selecting or reselecting the first cell is required.

140. The method of any one of claims 132 to 139, wherein the first request message is a message used for random access, or the first request message is an RRC dedicated message or uplink control information (UCI) dedicated information.

141. The method of any one of claims 132 to 140, wherein:
different first information corresponds to a same first request message; or,
a plurality types of first information correspond to a same first request message; or,
different first information corresponds to different first request messages; or,
the plurality types of first information correspond to different first request messages.

142. The method of any one of claims 125 to 141, wherein the first information comprises an SIB1 of the first cell, the first information is used to acquire second information, and the second information comprises one or more of:
other SIBs except the SIB1 of the first cell;
updated SI of the first cell;
RACH configuration of the first cell; and
paging configuration of the first cell.

143. The method of any one of claims 125 to 142, wherein the second cell is one of:
an anchor cell of the first cell;
a primary cell (PCell) of the terminal device;
a primary secondary cell (PSCell) of the terminal device;
a cell providing information of the first cell;
a cell that the terminal device is currently accessing, camping on, or selecting; and
a cell associated with the first cell.

144. A terminal device, comprising:
an acquisition module configured to acquire first information of a first cell, wherein the first information is associated with system information (SI) and/or a synchronization signal block (SSB) of the first cell;
wherein the first information is acquired based on a first request message from the terminal device; or, the first information is broadcasted/indicated by a second cell.

145. A terminal device, comprising:
a sending module configured to send a first message to a first cell, wherein the first message is used to indicate one or more of:
requesting the first cell to perform state transition;
requesting the first cell to send at least one of a synchronization signal block (SSB), a master information block (MIB), a system information block (SIB), and a paging message;
requesting the first cell to send part or all of common signals;
the terminal device has a requirement for data transmission;
the terminal device has a requirement for network access;
requesting the first cell to activate cell discontinuous transmission (DTX)/discontinuous reception (DRX);
requesting the first cell to deactivate the cell DTX/DRX;
requesting the first cell to modify the cell DTX/DRX;
requesting the first cell to use a recommended cell DTX/DRX parameter; and
recommending a cell DTX/DRX parameter to the first cell.

146. A terminal device, comprising:
a receiving module configured to cause a terminal device to not receive a positioning reference signal (PRS) of a first cell or to receive the PRS of the first cell according to first configuration information when the first cell is in a first state, and the first configuration information is used to indicate PRS configuration of one or more cells;
wherein the first state comprises one or more of:
an energy-saving state;
an off state;
a state of being in a cell discontinuous transmission (DTX)/discontinuous reception (DRX)non-active time period; and
a state of being in a time period of using an energy-saving technology.

147. A terminal device, comprising:
a receiving module configured to receive first handover (HO) configuration sent by a first cell, wherein the first handover configuration comprises one or more handover conditions; and
a handover module configured to execute cell handover according to the first handover configuration.

148. A terminal device, wherein the terminal device is a first terminal device, and the terminal device comprises:
an acquisition module configured to acquire third information of a first cell, wherein the third information is used to determine one or more of:
whether the first terminal device can access/select/reselect the first cell;
whether a second terminal device can access/select/reselect the first cell;
whether the first cell is barred;
whether the first cell is a candidate cell; and
whether the first cell is a reserved cell.

149. A terminal device, wherein the terminal device is a second terminal device, and the terminal device comprises:
an acquisition module configured to acquire fourth information of a first cell; and/or
an execution module configured to perform one or more of: acquiring third information of the first cell, determining that the third information indicates reservation or barring, and ignoring the third information;
wherein the fourth information is used to determine one or more of:
whether the second terminal device can access/select/reselect the first cell;
whether the first cell is barred;
whether the first cell is a candidate cell;
whether the first cell is a suitable or an acceptable cell; and
whether the first cell is a reserved cell.

150. A network device, wherein the network device is a network device to which a first cell belongs, and the network device comprises:
a receiving module configured to receive a first request message sent by a terminal device, wherein the first request message is used to acquire first information of the first cell, and the first information is associated with system information (SI) and/or a synchronization signal block (SSB) of the first cell; and
a sending module configured to send the first information to the terminal device.

151. A network device, wherein the network device is a network device to which a first cell belongs, and the network device comprises:
a receiving module configured to receive a first message sent by a terminal device,
wherein the first message is used to indicate one or more of:
requesting the first cell to perform state transition;
requesting the first cell to send at least one of a synchronization signal block (SSB), a master information block (MIB), a system information block (SIB), and a paging message;
requesting the first cell to send part or all of common signals;
the terminal device has a requirement for data transmission;
the terminal device has a requirement for network access;
requesting the first cell to activate cell discontinuous transmission (DTX)/discontinuous reception (DRX);
requesting the first cell to deactivate the cell DTX/DRX;
requesting the first cell to modify the cell DTX/DRX;
requesting the first cell to use a recommended cell DTX/DRX parameter; and
recommending a cell DTX/DRX parameter to the first cell.

152. A network device, wherein the network device is a network device corresponding to a first cell, and the network device comprises:
a sending module configured to not to send a positioning reference signal (PRS) or send the PRS according to a first configuration information when the first cell is in a first state, and the first configuration information is used to indicate a PRS configuration of one or more cells;
wherein the first state comprises one or more of:
an energy-saving state;
an off state;
a state of being in a cell discontinuous transmission (DTX)/discontinuous reception (DRX) non-active time period; and
a state of being in a time period of using an energy-saving technology.

153. A network device, wherein the network device a network device to which a first cell belongs, and the network device comprises:
an activation or deactivation module configured to activate or deactivate discontinuous transmission (DTX)/discontinuous reception (DRX) configuration of the first cell by using a first signaling.

154. A network device, wherein the network device is a network device to which a first cell belongs, and the network device comprises:
a sending module configured to send first handover (HO) configuration to a terminal device, wherein the first handover configuration comprises one or more handover conditions, and the first handover configuration is used for cell handover by the terminal device.

155. A network device, wherein the network device is a network device to which a first cell belongs, and the network device comprises:
a sending module configured to send third information of the first cell to a first terminal device, wherein the third information is used to determine one or more of:
whether the first terminal device can access/select/reselect the first cell;
whether a second terminal device can access/select/reselect the first cell;
whether the first cell is barred;
whether the first cell is a candidate cell; and
whether the first cell is a reserved cell.

156. A network device, wherein the network device is a network device to which a second cell belongs, and the network device comprises:
a sending module configured to send first information of a first cell to a terminal device, wherein the first information is associated with system information (SI) and/or a synchronization signal block (SSB) of the first cell.

157. A terminal device, comprising a memory and a processor, wherein the memory is configured to store computer programs, the processor is configured to invoke the computer programs stored in the memory, to cause the terminal device to perform the method of any one of claims 1 to 66.

158. A network device, comprising a memory and a processor, wherein the memory is configured to store computer programs, the processor is configured to invoke the computer programs stored in the memory, to cause the terminal device to perform the method of any one of claims 67 to 143.

159. An apparatus, comprising a processor, wherein the processor is configured to invoke computer programs stored in a memory, to cause the apparatus to perform the method of any one of claims 1 to 143.

160. A chip, comprising a processor, wherein the processor is configured to invoke computer programs stored in a memory, to cause a device equipped with the chip to perform the method of any one of claims 1 to 143.

161. A computer-readable storage medium, wherein the computer-readable storage medium is configured to store computer programs, wherein the computer programs are operable with a computer to perform the method of any one of claims 1 to 143.

162. A computer program product, comprising computer programs, wherein the computer programs are operable with a computer to perform the method of any one of claims 1 to 143.

163. A computer program which is operable with a computer to perform the method of any one of claims 1 to 143.
